# EUROPÄISCHE PATENTSCHRIFT

(11) **EP 4 309 268 B1**
(45) Veröffentlichungstag und Bekanntmachung des Hinweises auf die Patenterteilung: **11.06.2025**
(21) Anmeldenummer: 23724871.1
(22) Anmeldetag: 12.05.2023
(51) Int. Cl.: H02K 3/14, H02K 5/04, H02K 15/0421, H02K 15/35, H02K 15/24

(54) **LEITUNGSSEGMENT FÜR EINE WICKLUNG EINER ELEKTRISCHEN MASCHINE SOWIE EIN HERSTELLUNGSVERFAHREN FÜR EIN LEITUNGSSEGMENT**
CONDUCTOR SEGMENT FOR A WINDING OF AN ELECTRIC MACHINE, AND MANUFACTURING METHOD FOR A CONDUCTOR SEGMENT
SEGMENT CONDUCTEUR POUR UN ENROULEMENT D'UNE MACHINE ÉLECTRIQUE, ET PROCÉDÉ DE FABRICATION D'UN SEGMENT CONDUCTEUR

(30) Priorität: 13.05.2022 DE 102022112126; 13.05.2022 DE 102022112129; 13.05.2022 DE 102022112127
(43) Veröffentlichungstag der Anmeldung: 24.01.2024
(73) Patentinhaber: hofer powertrain innovation GmbH, 72622 Nürtingen (DE)
(72) Erfinder: HAAS, Raphael, 6800 Feldkirch (AT)
(74) Vertreter: Cremer & Cremer
(86) Internationale Anmeldenummer: PCT/EP2023/062801
(87) Internationale Veröffentlichungsnummer: WO 2023/218053

(56) Entgegenhaltungen:
- EP-B1- 3 051 669
- DE-A1- 102017 125 887
- DE-A1- 102018 131 960
- US-A- 5 787 567
- US-A1- 2018 233 998
- US-B1- 6 452 101
- US-B2- 10 128 728

## Beschreibung

Die vorliegende Erfindung behandelt ein Leitungssegment für eine Wicklung einer elektrischen Maschine, wobei das Leitungssegment aus wenigstens zwei metallisch leitenden Abschnitten aufgebaut ist, einer Formlitze und einem Flachdraht. Des Weiteren behandelt die vorliegende Erfindung ein Verfahren zur Herstellung eines Leitungssegments für eine Wicklung einer elektrischen Maschine, wobei eine Formlitze mit einem Flachdraht zusammengeführt wird. Die vorliegende Erfindung behandelt auch ein Kraftfahrzeug mit einem Antriebsstrang.

Mit anderen Worten, die vorliegende Erfindung behandelt ein Leitungssegment nach dem Oberbegriff von Anspruch 1, ein Verfahren zur Herstellung eines Leitungssegments nach dem Oberbegriff von Anspruch 17 sowie ein Kraftfahrzeug nach dem Oberbegriff von Anspruch 24.

### Technisches Gebiet

Eine elektrische Maschine zur Erzeugung eines Drehmoments für einen Fahrzeugantrieb ist zumeist als eine Anordnung eines Rotors und eines äußeren Stators aufgebaut, zwischen denen sich ein Luftspalt befindet. Zur Vereinfachung der Herstellung werden "Wicklungen" nicht durch Aufwickeln von Einzeldrähten zu Spulen hergestellt, sondern die Spulen werden aus mehreren Drahtelementen gebildet, die aus sog. Feldspulensegmenten zusammengesetzt werden. Mit den Spulen werden, wie beispielsweise in der DE 10 2012 212 870 B4 (Inhaberin: GM Global Technology Operations LLC; Veröffentlichungstag der Patenterteilung: 14.10.2021) beschrieben ist, die Felder für den Antrieb des Rotors generiert. Der Stator ist demnach eine kreisrunde Vorrichtung, die eine Vielzahl radial ausgerichteter Nuten mit darin befindlichen Spulenwicklungen aufweist und die konzentrisch zu einer Rotationsachse des Rotors angeordnet ist. Als Spulenanordnung kann z. B. ein Stator mit drei Phasen und drei Polen neun Paare einander gegenüberliegender Feldspulen aufweisen, die jeweils mit Drahtelementen unterschiedlicher Größe realisiert sein können. Der Stator dient zur Erzeugung eines dynamischen Magnetfelds für den Betrieb einer elektrischen Maschine. Für die Rotoren werden sowohl Anordnungen, die Feldspulensegmente aufweisen, als auch Anordnungen, die mit umfänglich verteilten Permanentmagneten ausgestattet sind, anwendungsspezifisch in Betracht gezogen.

Die Ausbildung von Statorwicklungen durch Leiterdrähte mit einer bedeckenden Isolationsschicht, die in die Statornute eigesetzt werden, geht z. B. aus der DE 102011 000 172 A1 (Anmelderin: Denso Corp.; Offenlegungstag: 22.09.2011) hervor. Die Wicklungen werden mithilfe von U-förmigen Leiterdraht-Segmenten, die einen rechteckigen Querschnitt haben sollen, gebildet. Zwei Abschnitte dieser Segmente werden in Nuten angeordnet. An den einander überlappenden Endabschnitten der Segmente, die radial nach außen gebogen sind, sollen die Leiterdrähte miteinander verschweißt werden.

Die elektrischen Maschinen können in verschiedenen Motor-Getriebe-Anordnungen von Kraftfahrzeugen zum Einsatz kommen. Einige Beispiele solcher Anordnungen sind in der Patentanmeldung DE 10 2021 123 019 A1 (Anmelderin: hofer powertrain innovation GmbH; Offenlegungstag: 10.03.2022) beschrieben. Demnach kann ein Antriebsstrang auch zwei Elektromaschinen, zwei Inverter und zwei Getriebe umfassen, die jeweils in Teilgehäusen untergebracht werden können. Eine solche Anordnung in einem Gesamtgehäuse wird auch als Antriebsblock bezeichnet.

### Stand der Technik

Gemäß der DE 10 2016 123 067 A1 (Anmelderin: Porsche AG; Offenlegungstag: 30.05.2018) soll ein Stator mit Wicklungen aus Stabsegmenten gebildet sein, wobei in jeder Nut vier Stabsegmente angeordnet sind. Eine erste Gruppe von in Reihe geschalteten Stabsegmenten soll einen kleineren Querschnitt haben als eine zweite Gruppe von in Reihe geschalteten Stabsegmenten.

Für das Verschalten von Spulen können gemäß der DE 10 2007 021 321 A1 (Anmelderin: Siemens AG; Offenlegungstag: 13.11.2008) sog. Stromschienen eingesetzt werden. Bei einem Stator mit mehreren Spulen sollen demnach die Spulen auf einer Seite des Stators miteinander verschaltet sein. Die Enden der Spulen sollen mit Enden von Stromschienen vercrimpt oder verschweißt werden. Damit möchten die Autoren der DE 10 2007 021 321 A1 die automatisierte Fertigung verbessern. Die Stromschienen sollen vorzugsweise aus einem Blech gestanzt sein. In ihrem mittleren Bereich sollen die Stromschienen eine Isolierung haben, die als gespritzte Umhüllung ausgebildet sein kann. Als Stromschienen können auch Litzenleitungen oder ein massiver Kupferdraht zum Einsatz kommen. Stromschienen können bogenförmig ausgebildet sein und in einer Radialrichtung nebeneinander liegen.

Die DE 11 2019 006 919 T5 (Anmelderin: Mitsubishi Electronic Corporation; Veröffentlichungstag der deutschen Übersetzung: 11.11.2021) und die US 9 419 491 B2 (Inhaberin: Hitachi Metals Ltd.; Veröffentlichungstag: 16.08.2016) beschäftigen sich unter anderem mit Anschlüssen für den Stator.

Gemäß der DE 10 2014 214 066 A1 (Anmelderin: Volkswagen Aktiengesellschaft; Offenlegungstag: 21.01.2016) sollen die Verbindungsleiter eines Kopfendes des Stators nach dem Abschluss des Kontaktierens mit einem Isolierstoff, wie einem Gießharz, in einem Vergussrahmen so vergossen werden, dass nur noch äußere Anschlüsse der Verbindungsleiter herausführen.

Aus der EP 3 512 075 B1 (Inhaberin: Toyota Jidosha Kabushiki Kaisha; Veröffentlichungstag des Patents: 13.10.2021) geht ein Statoraufbau hervor, bei dem die Spulenwindungen aus U-förmigen oder Chevron-förmigen Segmenten zusammengesetzt und mit einem im Wesentlichen rechteckigen Querschnitt ausgebildet sein sollen. Zwei Segmente sollen mit einem Verbinder aneinander gekoppelt werden. Es wird vorgeschlagen, die Verbindung durch Einstecken in Passungen und Quetschen herzustellen. Damit soll ein Verschweißen überflüssig werden. Der Verbinder kann mit einem isolierenden Film auf seinen äußeren Flächen überzogen sein. Außerdem kann nach einer Ausführungsform der Körper des Verbinders röhrenförmig sein, wobei sich im Inneren ein elastischer oder fluider Leiter befindet. Damit soll eine Flexibilität in einer Axialrichtung ermöglicht werden. Als Spulenmaterial werden flexible Drähte in Betracht gezogen, die als "flexible round wire" bezeichnet werden.

Die US 6,353,198 B1 (Inhaberin: General Electric Company; Veröffentlichungstag: 05.03.2002) beschäftigt sich damit, Bündel von Flachdrähten für eine Statorwicklung mithilfe von einer U-förmigen Brücke, in die die Enden der Bündel eingesteckt werden, zu verschweißen.

Weitere Stableiteranordnungen für Statoren sind z. B. in der WO 2020/092 570 A1 (Anmelderin: North Carolina State University; Veröffentlichungstag: 07.05.2020) sowie in der DE 10 2020 130 647 A1 (Anmelderin: Grob GmbH; Offenlegungstag: 07. Januar 2021) beschrieben. Gemäß der DE 10 2020 130 647 A1 sollen Stableiter aus einzelnen Drahtsegmenten gebildet sein, weil sich Litzen als nachteilig bei der Herstellung des Stators herausgestellt hätten.

Dennoch erachten manche Entwickler jene vermeintlichen Nachteile nicht als Ausschlusskriterium für die Verwendung von Litzen beim Aufbau eines Stators.

In der US 2012/0 212 088 A1 (Anmelderin: Innovative Energy, Inc.; Veröffentlichungstag: 23.08.2012) sind Stableiter in Form von Litzen beschrieben, die sich linear in Längsrichtung der Rotationsachse des Stators erstrecken sollen. An beiden Enden der Litzen sollen Verbinder angeschweißt sein. Die Verbinder sollen sich als Bögen über etwas mehr als 90 ° der Rundung des Stators erstrecken und in verschiedenen Ebenen angeordnet sein.

Ein Wicklungskabel für einen Stator, das aus einem Bündel von neun Einzeldrähten besteht, ist in der DE 10 2004 050 824 A1 (Anmelderin: Kabushiki Kaisha Toyota Jidoshokki; Offenlegungstag: 25.05.2005) beschrieben. Entsprechend einer Form der Nut des Stators können die Drähte quadratisch oder trapezartig angeordnet sein. Durch eine isolierende Beschichtung des Kabels soll das Einlegen eines Isolationspapiers in jede Nut überflüssig werden. Das Kabel soll in vorbestimmten Abständen gebogen werden, um so eine Wellenform zu bilden. Eine Verbindung von unterschiedlichen Kabeln in einem Spulenkopf zwischen zwei unterschiedlichen Nuten soll durch Löten erfolgen. Es wird außerdem vorgeschlagen, Gruppen der Leitungsdrähte jeweils zu einer Spule zusammenzufassen. Allerdings ist fraglich, ob mehrere nebeneinander geführte Einzeldrähte bereits zutreffend als eine Litze bezeichnet werden können.

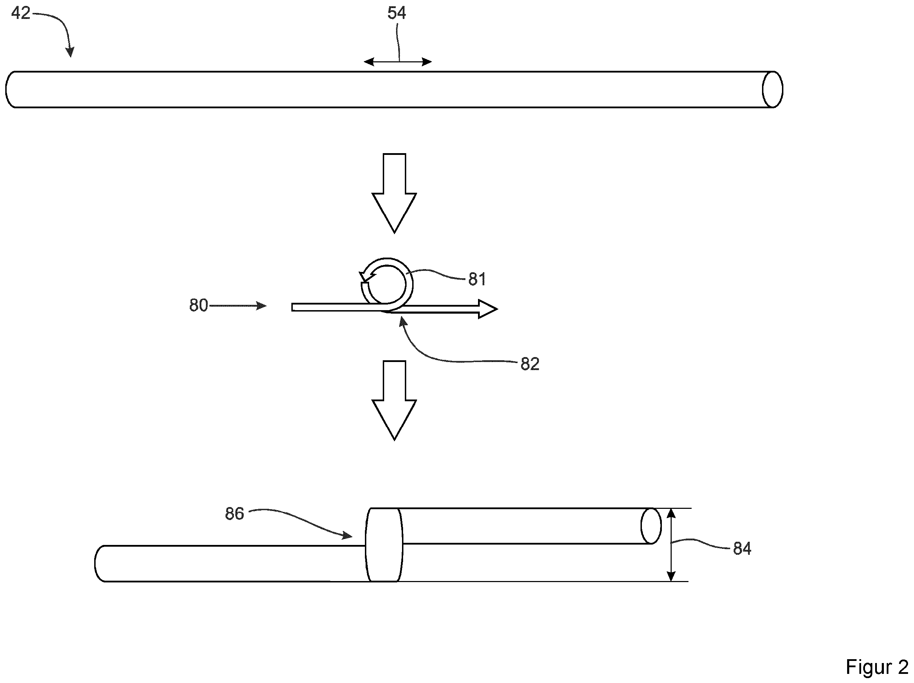

Litzen können, wie aus der WO 2015/162 586 A2 (Anmelderin: Brusa Elektronik AG; Veröffentlichungstag: 29.10.2015) hervorgeht, eine gegen ein Aufdrillen beim Biegen stabile Form dadurch erlangen, dass die Einzeldrähte entlang ihrer Längserstreckung mechanisch miteinander verbunden sind. Außerdem können die Enden der Litze durch Hülsen umschlossen werden. Die Querschnitte einer geraden Formlitze in Längsrichtung sollen über deren gesamte Länge deckungsgleich sein. Nach einem Ausführungsbeispiel, das in Figur 2 gezeigt wird, soll eine Querschnittsform einer Formlitze einer Trapezform einer Statornut entsprechen. In einer Walzanlage soll eine Litze mit rundem Querschnitt in die gewünschte Rechteck- oder Trapezform gebracht werden können. Um das Einführen eines Endes der Formlitze in die Statornut zu erleichtern, wird in der WO 2015/162 586 A2 vorgeschlagen, zugespitzte Enden an den Formlitzen auszubilden. Nach dem Einführen kann ein Biegevorgang an der Formlitze durchgeführt werden. Die Enden der Formlitzen können auch laut der EP 3 051 669 B1 (Inhaberin: Brusa Elektronik AG; Veröffentlichungstag: 22.08.2018) mit Hülsen abgedeckt werden.

Ein Verfahren, um die Spulenwicklungen ausgehend von einem runden Litzenquerschnitt in eine trapezartige Form zu verbringen, geht aus der EP 2 991 199 A1 (Anmelderin: Mitsubishi Electric Corporation; Veröffentlichungstag: 02.03.2016) hervor. Hierbei sollen mehrere übereinander angeordnete Litzen, die einen runden Querschnitt haben, mit einem Stempel in eine konisch zusammenlaufende Pressform gepresst werden. Anschließend werden die Leiter wieder aus der Pressform herausgenommen.

Ein Stator gemäß der DE 102018 131 965 A1 (Anmelderin: ThyssenKrupp AG; Offenlegungstag: 18.06.2020) weist eine Vielzahl von Stableitern und eine Vielzahl von Verschaltungsstegen auf. Die Stableiter können als sog. "Hairpins" (bzw. Haarnadeln) oder auch I-förmig (als sog. "I-Pins") ausgebildet sein. Als Stableiter kommen auch formverpresste und verdrillte Drahtlitzen in Betracht. Die Stableiter sind in Stableitergruppen angeordnet und die Verbindung der Stableiter soll über Verschaltungssteg-Gruppen erfolgen, die in Verschaltungsebenen auf beiden Seiten des Stators angeordnet sein sollen. In der DE 10 2018 131 965 A1 wird außerdem vorgeschlagen, dass sich Höhe und Breite der Verschaltungsstege um einen Faktor der Größenordnung 1,5 unterscheiden sollen. In weiteren Offenlegungsschriften der gleichen Anmelderin, z. B. in der DE 10 2017 125 887 A1 (Offenlegungstag: 09.05.2019), in der DE 10 2018 208 407 A1 (Offenlegungstag: 28.11.2019) sowie in der DE 10 2018 131 960 A1 (Offenlegungstag: 18.06.2020), werden Verfahren und Vorrichtungen zum Herstellen von Litzen und von elektrischen Maschinen bzw. ihrer Statoren beschrieben. An den Kopfenden der Formlitzen sollen besondere Abschnitte zudem - laut der DE 10 2018 218 732 A1 (Offenlegungstag: 30.04.2020) die Aufgabe von Wärmeaustauscherabschnitten übernehmen können. Hierbei rät die DE 10 2017 125 887 A1, Formlitzen aus mittels Lack isolierten Einzeldrähten herzustellen, wobei entlang einer Teillänge, die für ein weiteres Kontaktieren benötigt wird, die Isolierschichten auf den Einzeldrähten individuell wieder entfernt werden sollen, z. B. durch ein Laserverdampfen. Anschließend soll eine Hülse über die abisolierten Enden einer Formlitze geschoben werden, wodurch ein Kontaktieren der Einzeldräht ermöglicht wird. So hergestellte Formlitzen sollen Möglichkeiten der Bauraumverkürzung im Bereich des Kopfendes einer Statorwicklung eröffnen.

In der WO 2021/250 259 A1 (Anmelderin: Jaguar Land Rover Ltd.; Veröffentlichungstag: 16.12.2021) wird ein Permanentmagnet-Synchronmotor beschrieben, dessen Rotor acht Rotorpole aufweisen soll. Ein zylindrischer Stator, der sich in Radialrichtung erstreckende Nuten besitzt, dient der Aufnahme von Wicklungen, wobei die Leiter der Wicklungen, z. B. in einer Rechteckform verpresst, in den Nuten radial nebeneinander angeordnet sein sollen. Eine Kombination aus Litzendrähten und Drähten mit einem einzelnen Kern sowie eine Kombination aus axialem und radialem Einsetzen in eine solche Nute werden als vorteilhafte Statoraufbauten in Betracht gezogen. Der Spulendraht soll aus einer geformten Litze gebildet sein, die eine U-Form, auch als "Hairpin" bezeichnet, haben kann. Die Herstellung einer Verbindung der Segmente untereinander kann durch Verschweißen oder Crimpen erfolgen. In jeder Nut sollen mehrere Haupt- und mehrere Nebenleiter angeordnet sein, die sich aufgrund ihrer Abmessungen in der Radialrichtung unterscheiden und die zu unterschiedlichen Spulen, auch als "dual winding configuration" bezeichnet, verbunden sind. Diese Spulen können für den Motorbetrieb in verschiedenen Konfigurationen mit einem oder mit zwei Invertern verbunden sein.

Außerdem finden sich in der Schutzrechtsliteratur noch weitere Druckschriften, die sich mit Statorwicklungen beschäftigen.

Die US 2021/0 006 115 A1 (Anmelderin: GM Global Technology Operations LLC; Veröffentlichungstag: 07.01.2021) möchte so genannte "hairpin"-artige Leiter derart gestalten, dass der Leitungsanteil, der aufgrund des bei Wechselströmen auftretenden "Skin-Effekts" mit ca. 63 % des zu leitenden Wechselstroms durchströmt wird, eine größere Tiefe besitzt als die Dicke der einzelnen Litzen des Leiters. Die Litzen seien also aus dünneren Drähten herzustellen im Vergleich zu dem Abschnitt des Leiters, dem der meiste Leitungsstrom aufgrund des "Skin-Effekts" zugeordnet wird. Mehrere Ausführungsformen eines Leiters mit dickeren und dünneren Litzen werden in Schnittansichten am Ende der Figurendarstellung gezeigt. Die Formlitze wird trotzdem nur in Teilen mit Strom beaufschlagt, denn der "Skin-Effekt" lässt den Strom weiterhin vorrangig im Äußeren der Formlitze fließen.

Die DE 10 2005 025 217 A1 (Anmelderin: Denso Corp.; Offenlegungstag: 22.12.2005) beschäftigt sich mit dem Thema "ohmscher Widerstand einer Statorwicklung" und möchte den Widerstand dadurch verringern, dass unterschiedlich gestaltete U-Leitersegmente in einem Stator angeordnet werden, die zusammen zu Teilen der Wicklungen des Stators werden. Die U-Leitersegmente sind bügelartig ausgeführt. Auf diese Weise seien die Längen der Überbrückungsabschnitte von ersten Leitersegmenten zu zweiten Leitersegmenten verkürzbar. Mit anderen Worten, ein solcher Motor benötigt eine ganze Reihe von unterschiedlichen U-Leitersegmenten, sodass Produktionsvorteile, die sich aus einer hohen Gleichteilanzahl ergeben, nicht zu realisieren sein dürften.

Die DE 603 06 850 T2 (Inhaberin: Denso Corp.; Veröffentlichungstag: 06.09.2007) behandelt eine Statorwicklung, deren Windungen aus Segmenten zusammengesetzt sind. Hierdurch soll die Isolation im Bereich der Wicklungsenden verbessert werden.

Die DE 10 2018 101 231 A1 (Anmelderin: Brusa Elektronik AG; Offenlegungstag: 25.07.2019) beschreibt eine Motorwicklung in einem Stator, bei der in den Längsnuten des Stators Formlitzen angeordnet sind, aber die elektrisch leitenden Verbindungselemente von einem Ende einer Formlitze zu einem anderen Ende einer anderen Formlitze an die Formlitzen zu fügen sind. Die tatsächliche Umsetzung der in der DE 10 2018 101 231 A1 angesprochenen Fertigungstechnik dürfte schwierig sein, zumindest jedoch große Wickelköpfe bedingen, denn die Formlitzen müssen aus den Nuten entsprechend weit herausstehen, um die Fügetechnik wie Schweißen oder Löten zu ermöglichen.

Die beiden US-Patente US 5 787 567 A (Patentinhaberin: Toyota Jidosha Kabushiki Kaisha; Erteilungstag: 04.08.1998) und US 10 128 728 B2 (Patentinhaberin: Toyota Jidosha Kabushiki Kaisha; Erteilungstag: 13.11.2018) beschäftigen sich mit Wicklungen und Wicklungsmaterialien. Das Dokument US 5 787 567 A ist ein guter Nachweis, dass am Ende der 1990er-Jahre üblicherweise beim Elektromotorenbau für Kraftfahrzeuge noch nicht in die Richtung von Formlitzen gedacht wurde, sondern lediglich Litzendrähte für Wicklungen genutzt wurden. Auch noch die US 10 128 728 B2 rät davon ab, die "parallelen Abschnitte" (im Englischen: "parallel portions") in einer segmentierten Wicklung eines Motors zu stark zu pressen. Es sei laut US 10 128 728 B2 wichtig, die Dicken eines rechten Wicklungsabschnittes und eines linken Wicklungsabschnittes möglichst so auszuformen, wie der dazwischen angeordnete parallele Abschnitt gestaltet ist.

Weil aber die Leistungsklasse, in die ein Kfz-Antriebsmotor gehört, ein Mindestmaß an Kupfer für die Motorströme der entsprechenden Leistungsklasse bedingt, führen die zuvor vorgestellten Wicklungen zu Wicklungsköpfen gewisser Größe.

### Aufgabenstellung

Für die Elektromobilität werden regelmäßig jedoch möglichst kompakte und leistungsstarke Elektromaschinen benötigt. Ausgehend von dem besonderen Augenmerk auf einen guten Füllfaktor für das Leitermaterial der Statorwicklungen sowie ausgehend von dem Augenmerk auf möglichst gute elektrische Verbindungen und gute elektrische Leitung der Statorwicklung ist es wünschenswert, eine hohe Reproduzierbarkeit in der Herstellung qualitativ hochwertiger Komponenten der Elektromaschinen für eine Großserien-Fertigung aufgrund des Elektromaschinenentwurfs sicherzustellen.

### Erfindungsbeschreibung

Die erfindungsgemäße Aufgabe wird durch ein Leitungssegment nach Anspruch 1 gelöst, ein geeignetes Verfahren zur Herstellung eines Leitungssegments für eine Wicklung einer elektrischen Maschine lässt sich Anspruch 17 entnehmen. Ein Kraftfahrzeug mit einem solchen Leitungselement geht aus Anspruch 24 hervor. Vorteilhafte Weiterbildungen lassen sich den abhängigen Ansprüchen entnehmen.

Ein Leitungssegment dient vorzugsweise der Herstellung einer Wicklung einer elektrischen Maschine. Es weist mehrere Abschnitte auf. Das Leitungssegment ist aus metallisch leitenden Segmenten aufgebaut, von denen mehrere Segmente als Abschnitte des Leitungssegments zu unterscheiden sind. Es kann auch von Untersegmenten des Leitungssegments gesprochen werden. Ein erster Abschnitt bzw. Untersegment ist eine Formlitze. Der erste Abschnitt ist eine Formlitze. Als weitere Abschnitte kommen zwei Flachdrähte hinzu. Ein zweiter und dritter Abschnitt sind je ein Flachdraht. Die Flachdrähte und die Formlitze sind elektrisch leitend miteinander verbunden, z. B. durch einen Diffusionsschweißvorgang. Anders ausgedrückt, es liegt ein einzelner durchgängiger elektrischer Leiter vor, der in der bevorzugten Ausbildung aus zumindest drei Abschnitten besteht.

Eine Fügeverbindung bindet Formlitze und Flachdrähte aneinander. Hierzu wird jedes Ende, auch Endbereich genannt, der Formlitze mit einem Ende, wiederum auch Endbereich genannt, des jeweiligen Flachdrahts gefügt.

Bevorzugt überlappen sich die Endbereiche der Formlitze und die jeweiligen mit ihnen gefügten Endbereiche der Flachdrähte über eine gewisse Strecke hinweg, um eine gute Fügeverbindung zu ermöglichen. Die Endbereiche liegen in dem Überlappbereich übereinander. Dieser Überlappbereich wird in der besonders bevorzugten Ausführung miteinander verpresst.

Weitere bevorzugte Ausführungen sehen vor, dass zwischen den Endbereichen von Formlitze und Flachdrähten, die übereinanderliegen, Hartlot eingebracht, z. B. eingelegt oder eingefügt, wird. Das Hartlot wird beim Fügevorgang oder, sofern vorgesehen, beim Verpressvorgang zum Schmelzen gebracht und sorgt für eine besonders gute mechanische Verbindung. Zudem zeigte sich, dass das eingebrachte Hartlot, je nach gewählter Zusammensetzung, auch die elektrische Leitfähigkeit verbessert.

Noch eine weitere bevorzugte Ausführung sieht eine Ummantelung mit einer leitfähigen Folie oder Band, besonders bevorzugt Kupferfolie oder Kupferband, jener Abschnitte des erfindungsgemäßen Leitungssegmentes vor, in denen sich Formlitze und der zugehörige Flachdraht überlappen. Hierdurch werden sowohl die mechanische Festigkeit als auch die elektrische Leitfähigkeit des Leitungssegmentes weiter verbessert.

Die Formlitze ist aus mehreren miteinander verdrillten Einzeldrähten gebildet. Der Flachdraht kann ein Banddraht sein. Die Formlitze hat bevorzugt einen ersten formgepressten Endbereich. In jenem formgepressten Endbereich wurde die Formlitze einer Kompaktierung unterzogen. Einzeldrähte der Formlitze sind in dem Endbereich vorzugsweise besonders dicht angeordnet. Es kann auch von einem Kompaktierungssegment bzw. Kompaktierungsuntersegment der Formlitze gesprochen werden. Das Kompaktierungssegment ist von einem Flachdrahtendbereich überlappt. Es kann auch gesagt werden, dass das Kompaktierungssegment durch laterale Aufpressung des Flachdrahtendbereichs auf die Formlitze bzw. auf einen Formlitzenendbereich gebildet ist.

Die Formlitze und der Flachdraht liegen in einer bevorzugten Ausgestaltung mit einem Leitungssegmentwinkel zueinander angeordnet vor. Ein Übergang zwischen Formlitze und Flachdraht erfolgt mit einem Winkel, der aus einem Winkelbereich von 180° bis 100°, bevorzugt 180° bis 150°, noch bevorzugter ca. 180°, festgelegt ist. Mit anderen Worten, Formlitze und die beiden Flachdrähte sind gerade zueinander ausgerichtet und bilden gemeinsam mehr oder weniger eine Gerade.

Formlitze und Flachdraht sind fest miteinander verbunden. Der Verbund weist elektrische Leitfähigkeit auf. Anders gesagt, kann Strom nahezu widerstandsfrei von der Formlitze in den Flachdraht oder von dem Flachdraht in die Formlitze (z. B. bei zugeführtem Wechselstrom) gelangen.

Die Herstellung eines Leitungssegments geht von einer Zusammenführung von einer Formlitze mit mindestens einem Flachdraht aus. Ein erster Endbereich der Formlitze wird auf einem ersten Flachdrahtendbereich angeordnet, wobei zwischen beiden Endbereichen eine Zwischenschicht aus Hartlot eingefügt sein kann. Es kann dann auch von der Bildung eines Dreischichtsystems gesprochen werden. Formlitze und Flachdraht sind mit einem Leitungssegmentwinkel zueinander ausgerichtet bzw. arrangiert. Auf den ersten Endbereich der Formlitze und den ersten Flachdrahtendbereich sowie das Hartlot, also auf das Dreischichtsystem, wird zur Kompaktierung gleichzeitig ein Pressdruck angewendet und eine Hartlotschmelzwärme zugeführt. Beim Fügen kann die Hartlotschmelzwärme z. B. durch Diffusionsschweißen eingebracht werden. Das Hartlot schmilzt bei ausreichender Wärme auf und verteilt sich, wobei ggf. vorliegende Lücken, z. B. zwischen Einzeldrähten, ausgefüllt werden. Eine vorgegebene Übergangsverbindung zwischen der Formlitze und dem Flachdraht entsteht mit dem gewählten Übergangswinkel.

Durch Aufschmelzen des Hartlots wird sowohl der Flachdraht in dem gesamten Flachdrahtendbereich mit Hartlot benetzt, als auch die Formlitze in dem Endbereich der Formlitze mit Hartlot getränkt. Besonders vorteilhaft ist es, wenn eine Flächengröße des Hartlots gleich einer Flächengröße eines Formlitzenkontaktbereichs und einer Flächengröße eines Flachdrahtendkontaktbereichs ausgebildet ist.

Mithilfe des vorteilhaften Leitungssegments bzw. einer Vielzahl vorteilhafter Leitungssegmente ist eine Wicklung einer elektrischen Maschine ausbildbar, die z. B. aufgrund ihrer Kompaktheit einen raumeffizienten Aufbau eines Antriebsstrangs ermöglicht, welcher eingebaut in ein Kraftfahrzeug eine Freigabe von Bauraum für andere Komponenten ermöglicht oder auch eine Fertigung des Kraftfahrzeugs durch erleichterte Komponentenmontage vereinfachen kann.

Nachfolgend werden weitere vorteilhafte Ausgestaltungen und Weiterbildungen dargelegt, die für sich gesehen, sowohl einzeln als auch in Kombination, ebenfalls erfinderische Aspekte offenbaren können.

Besonders vorteilhaft für eine Leitfähigkeit der Formlitze ist es, wenn alle Litzendrähte der Formlitze sich von einem ersten Ende des Leitungssegments bis in den Flachdrahtendbereich erstrecken. Jeder Litzendraht kann einzeln von einer isolierenden Drahtlackschicht überzogen sein. Damit ist jeder Einzelleiter für sich betrachtet ein separater Stromleiter. Die Isolationsschicht außenliegender Einzelleiter schützt außerdem vor Kurzschlüssen. Sehr vorteilhaft ist eine doppelte Lackschicht auf jedem Einzeldraht bzw. Litzendraht. Bei einer Doppelschicht kann eine Drahtlackschicht mit einer äußeren Schicht aus einem Backlack überzogen sein. Die Doppelschicht macht vorzugsweise weniger als 10 % eines Litzendrahtdurchmessers aus. Ein Gesamtdurchmesser des Litzendrahts hat vorzugsweise einen Wert, der in einem Bereich von 0,3 mm bis 1,2 mm liegt.

Die zu der Formlitze miteinander verdrillten Litzendrähte haben eine Schlaglänge. Die Schlaglänge gibt eine Strecke an, nach der die gewundenen Litzendrähte wieder ihre Ausgangsposition überstreichen. Anders ausgedrückt, unter der Schlaglänge einer Litze versteht man die Ganghöhe der helixförmig geschlagenen Drähte. Vorzugsweise gleicht diese Strecke einer Gesamtlänge der Formlitze des Leitungssegments. Diese Strecke der Wiederkehr kann auch gleich der Hälfte oder gleich einem Drittel der Gesamtlänge der Formlitze sein. Vorteilhaft für die Reduktion von AC-Effekten, insbesondere solchen, die bei höheren Frequenzen des Wechselstroms auftreten, bei der Durchleitung des elektrischen Stroms durch die Wicklung ist, wenn die Schlaglänge gleich oder ein vielfacher Teiler einer aktiven Länge der E-Maschine ist.

Der Flachdraht kann mit einem Drahtlack isoliert sein. Die Verwendung eines isolierten Flachdrahts, insbesondere verbunden mit isolierten Litzendrähten, erleichtert eine Vor-Ort-Isolation der Litzensegmente im verbauten Zustand. Insbesondere werden Flächen geschützt, die im verbauten Zustand gegen eine Lackbesprühung abgeschattet sein können. Für eine Kontaktierung der Flachdrähte bzw. die Verbindung von einem Flachdraht mit einer Formlitze ist es vorteilhaft, wenn die beiden Enden des Flachdrahts nicht mit einem Drahtlack beschichtet sind bzw. der Drahtlack nach einem Ablängen von Flachdrahtstücken von den Endbereichen entfernt, z. B. mechanisch abgetragen (z. B. durch Fräsen oder Schleifen) oder mit Laserabisolieren abgelöst wird. Die Endbereiche des Flachdrahts sollten zumindest an den Kontaktflächen, also den Flächen, auf die z. B. eine Formlitze oder ein anderer Flachdraht aufgebracht werden sollen, drahtlackfrei sein.

Für die Erstellung einer Verbindung zwischen der Formlitze und dem Flachdraht hat es sich als besonders vorteilhaft herausgestellt, wenn der Flachdrahtendbereich mit mindestens einer Kompaktierungsschräge ausgebildet ist. Die Kompaktierungsschräge ist günstig für eine gleichmäßigere Kraftverteilung, wenn Flachdrahtendbereich und Formlitzenendbereich zusammengepresst werden. Ein großer Vorteil der Kompaktierungsschräge ist, dass die Einzeldrähte in der Litze nicht durch eine harte Kante beim Schweißen durchtrennt werden. Eine erste Kompaktierungsschräge befindet sich am äußersten Ende des Flachdrahts. Diese Schräge verhindert eine mögliche Abscherung von Einzeldrähten bei der Kompaktierung. Eine zweite Kompaktierungsschräge befindet sich in dem Bereich des Flachdrahts, der einem äußersten Ende der Formlitze zugeordnet ist. Diese Kompaktierungsschräge ist u. a. vorteilhaft, um ein mögliches Aufspreizen der Formlitze weitgehend zu verhindern. Zwischen der ersten Kompaktierungsschräge und der zweiten Kompaktierungsschräge ist der Flachdraht auf eine Kontaktfläche abgestuft. Die Kontaktfläche kann sich, bezogen auf eine Maximalhöhe des Flachdrahts, etwa in einer Mitte des Flachdrahts erstrecken. Vorzugweise ist die Kontaktfläche parallel zu einer Flachdrahtoberfläche. Es kann auch gesagt werden, dass Flachdraht in seinem Endbereich ausreichend dünner gestaltet ist (z. B. abgeschliffen), dass darauf der Kompaktierte Formlitzenendbereich Platz findet, ohne eine vorgegebene Maximalhöhe des Flachdrahts in dem Kompaktierungssegment insgesamt zu überschreiten. Der Flachdrahtendbereich ist vorzugsweise im Bereich einer Segmentkontaktfläche zu seinem Ende hin verjüngt. Eine Kompaktierungsschräge ist besonders vorteilhaft, wenn deren Schrägungswinkel in einem Winkelbereich von 10° bis 70°, z. B. mit 45°, ausgebildet ist.

Das Formlitzensegment kann, u. a. zur Ausbildung eines Stableiters, in eine geometrische Querschnittsform gepresst sein. Ein erstes Formlitzensegment der Formlitze kann zur Ausbildung eines ersten Stableiters dienen. Das erste Formlitzensegment ist vorzugsweise in eine erste Trapezform als Querschnittsfläche gepresst. Ein zweites Formlitzensegment der gleichen Formlitze kann zur Ausbildung eines zweiten Stableiters dienen. Das zweite Formlitzensegment kann in eine zweite Trapezform als Querschnittsfläche gepresst sein. Besonders vorteilhaft ist es, wenn beide Trapezformen einen gleichen Trapezwinkel haben. Es ist auch vorteilhaft, wenn beide Trapezformen stufenlos aneinandersetzbar sind.

Zwei Trapezformen passen besonders gut zueinander, wenn eine kleinste Breite der ersten Trapezform und eine größte Breite der zweiten Trapezform etwa übereinstimmen. Wenn die Trapezformen mit jenen Breiten zusammengesetzt werden, ergibt sich ein größeres Trapez. Die Trapezformen sind vorzugsweise so gewählt, dass damit eine Trapez-Nut nahezu vollständig ausfüllbar ist. Die zweite Trapezform kann eine größere Höhe aufweist als die erste Trapezform, wenn beide Trapeze einen gleichen Flächeninhalt haben. Der Flächeninhalt ist von einer Querschnittsflächengröße der Formlitze bestimmt. Durch die Pressung ist die Formlitze in zumindest einer der Trapezformen mit einem Verdichtungsfaktor von einem Wert zwischen 0,6 und 0,96 bezogen auf eine Litzenquerschnittsflächengröße der verdrillten Litzendrähte in eine raumsparendere Packung der Einzeldrähte verbringbar.

Ein zweites formgepresstes Ende der Formlitze ist zusätzlich kompaktierbar. Bei einer Kompaktierung kann eine größere Presskraft auf die Formlitze ausgeübt werden als bei einer Formpressung. Eine Obergrenze für die Kraft ist durch eine Vermeidung eines Ausfließens des Leitermaterials, z. B. Kupfer, aus einer Kompaktierungsform festgelegt. Der zweite Endbereich der Formlitze kann mit einem zweiten Flachdrahtendbereich eines zweiten Flachdrahts verbunden sein. Es handelt sich um eine metallisch leitende Verbindung. Die Anordnung aus zweitem Flachdraht und Formlitze schließt einen zweiten Leitungssegmentwinkel ein. Der erste Leitungssegmentwinkel kann gleich dem zweiten Leitungssegmentwinkel sein. Insbesondere kann der zweite Leitungssegmentwinkel einen Wert in einem Bereich von 180° bis 160°, vorzugsweise exakt 180°, haben. Damit kann das Leitungssegment gut in eine Nut (axial) oder eine Bohrung eingefädelt oder seitlich (lateral) in einen Spalt oder einen Schlitz eingedrückt werden.

Der formgepresste Endbereich der Formlitze erstreckt sich vorzugsweise über eine Kompaktierungslänge. Im Bereich der Kompaktierungslänge kann die Formlitze im Verbund mit einem Flachdraht von einer Kupferfolie umhüllt sein. Die Kupferfolie hat vorzugsweise eine Folienstärke, die in einem Bereich von 0,1 mm bis 0,5 mm liegt. Damit ist die Kupferfolie besonders gut deckend an Flachdraht und Formlitze anlegbar. Eine Kompaktierungslänge kann einen Wert aus einem Bereich von 2 mm bis 25 mm haben. Vorzugsweise beträgt die Kompaktierungslänge 4 mm bis 12 mm, beispielsweise 6 mm. Eine kürzere Kompaktierungslänge erlaubt eine geringere Höhe des (zweiten) Wickelkopfs. Eine größere Kompaktierungslänge kann eine bessere mechanische Festigkeit bieten. Vorzugsweise wird der Kompaktierungsbereich zusammen mit der Kupferfolie bzw. einem entsprechend angeordneten Kupferbad verpresst. Damit entsteht ein besonders guter Kontakt. Das Kupferband bzw. die Kupferfolie ist eine Leitungsbrücke, die Formlitze und Flachdraht verbindet.

Ein Leitwert des Kompaktierungsbereichs wird besonders hoch, wenn für einen noch besseren Verbund aus Formlitze und Flachdraht ein Hartlot verwendet wird. Zwischen dem formgepressten Endbereich der Formlitze und dem Flachdrahtendbereich ist vorzugsweise zumindest auf einer Kontaktfläche ein Hartlot vorhanden. Das Hartlot ist als ein Hartlotplättchen, das z. B. eine Kompaktierungslänge und einer Breite des Flachdrahtendbereichs aufweisen kann, also ein rechteckiges Plättchen ist, auf die Kontaktfläche des Flachdrahtendbereichs auflegbar, bevor darauf der Formlitzenendbereich positioniert ist. Eine Hartlotschicht kann z. B. durch Erhitzen aus dem Hartlotplättchen entstehen. Auf der Kontaktfläche sorgt eine Hartlotschicht für eine bessere elektrische Verbindung. Das Hartlot kann zunächst zwischen zwei ggf. vorhandene Kompaktierungsschrägen begrenzt eingebracht sein. Durch Anwendung eines Kompaktierungsdrucks kann sich das Hartlot auch über eine oder beide Kontaktierungsschrägen an der Kontaktfläche verteilen. Damit ist ein lückenloser Kompaktierungsbereich ausbildbar.

Der Flachdraht hat vorzugsweise eine gleiche Breite wie die Formlitze oder eine kleinere Breite wie die Formlitze. Damit lässt sich der Verbund aus Flachdraht und Formlitze ohne ein Verhaken mit dem Flachdraht voran in bzw. durch eine Öffnung schieben.

Bei der Herstellung der Formlitze bzw. der Herstellung des Leitungssegments kann in einem Mittenbereich der Formlitze mindestens eine Krümmung in der Erstreckung der Litze erzeugt werden. Vorteilhaft für eine Anordnung der Formlitze in einem Stator ist eine U-förmige Krümmung. Die Formlitze kann in einem oder in zwei Erstreckungsbereichen, die von der Krümmung bzw. der Litzenkrümmung beabstandet sind, in eine linear sich erstreckende Stabform gepresst werden, die auch als Stableiterform bezeichnet werden kann. Damit wird die Bildung einer Windung, z. B. in einem Blechpaket, erleichtert.

Das Leitungssegment kann mit einer Isolierung überzogen werden. Eine vorteilhafte Möglichkeit einer Isolierung ist eine Umwicklung des Leitungssegments oder zumindest von Bereichen der Formlitze mit einem isolierenden Band. Oftmals ist es ausreichend, wenn die Umwicklung Spur an Spur sich vorzugsweise seitlich überdeckend an einem ersten Flachdrahtendbereich beginnend, bis vor einen zweiten Flachdrahtendbereich erstreckt. Damit bleiben die Endbereiche zur Kontaktbildung frei. Vorzugsweise werden nur jene Bereiche umwickelt, in denen Drahtlack an Kanten oder Auflageflächen abgerieben und Leitermaterial blank gerieben werden könnte. Hierzu zählt ein Bereich eines Wickelkopfs, der insbesondere ausschließlich von Formlitzen gebildet sein kann, sowie Eintrittsöffnungen oder Austrittsöffnungen in Nuten. Damit werden mögliche Kurzschlüsse auch bei einem Betrieb unter starken Erschütterungen verhindert.

Die zuvor dargestellten Kombinationen und Ausführungsbeispiele lassen sich auch in zahlreichen weiteren Verbindungen und Kombinationen betrachten.

Ein Stator umfasst einen Kern, der auch als Wicklungskern bezeichnet werden kann. Der Wicklungskern trägt die Spulen des Stators. Besonders vorteilhaft für die Führung bzw. Ausbildung eines Magnetfelds ist ein Kern, der als ein Blechpaket aufgebaut ist. Zu dem Kern gehören zahlreiche Stableiter. Der Kern hat vorzugsweise eine Zylinderform. Genauer gesagt ist der Kern hohlzylinderartig ausgebildet, wobei sich durch ein Zentrum des Kerns eine Rotorachse erstreckt. Die Rotorachse ist eine Symmetrieachse, die durch einen Hohlraum des Stators geht. Die Stableiter sind um die Rotorachse herum in dem Kern angeordnet. Eine radiale Verteilung der Stableiter ergibt sich dadurch, dass mindestens eine zweite Gruppe von Stableitern einen größeren Abstand zur Rotorachse aufweist als eine erste Gruppe von Stableitern. Wird die Anordnung der Stableiter umfänglich betrachtet, können jeweils zwei Stableiter gleichmäßige Abstände voneinander haben. Wenn der Kern als ein Blechpaket ausgebildet ist, sind die Stableiter, vorzugsweise alle Stableiter, in einem Inneren des Blechpakets angeordnet. Ein Aufnahmebereich für Stableiter in dem Blechpaket kann sich, als Nut ausgebildet, von der Rotorachse wegführend in das Blechpaket hinein erstrecken. Die Stableiter sind insbesondere elektrisch isoliert von dem Blechpaket angeordnet. Alle Stableiter erstrecken sich in Längsrichtung bzw. entlang der Rotorachse des Stators. Das Stableiterdesign ist an ein Haarnadeldesign (engl.: "hairpin") angelehnt. In der Gestalt einer Haarnadel erstrecken sich die Stableiter als kompakte Stäbe, vorzugsweise gerade, durch den Kern hindurch bzw. von einer Stirnseite des Kerns zu einer gegenüberliegenden Stirnseite des Kerns. Die Stableiter sind als Formlitze ausgebildet. Eine Formlitze gehört zu einem Leitungssegment für elektrischen Strom. Das Leitungssegment kann auch als Leitersegment bezeichnet werden. Die Formlitze ist so lang gewählt, dass darauf mindestens zwei Stableiter Platz haben. Ein erster Stableiter ist über einen Bereich der Formlitze mit einem zweiten Stableiter verbunden. Der erste Stableiter ist an dem einen Arm der Formlitze und der zweite Stableiter ist an dem anderen Arm der Formlitze ausgebildet. Jeder Arm einer Formlitze weist einen Endbereich auf. Die Stableiter des Stators sind in einer Weise in dem Kern angeordnet, dass beide an der Formlitze vorhandenen Endbereiche der Arme auf einer gleichen Seite, insbesondere an der gleichen Stirnseite, des Kerns ausmünden.

Zu dem Stator gehört auch eine Anzahl von Verschaltungsstegen, wobei vorzugsweise die Anzahl der Verschaltungsstege auf die Anzahl minus eins von Stableitern abgestimmt ist. Ein Verschaltungssteg verbindet zwei Stableiter miteinander. Anders gesagt ist ein Verschaltungssteg ein elektrischer Leiter zur Ausbildung einer elektrischen Verbindung zwischen einer ersten Formlitze und einer zweiten Formlitze. Der Verschaltungssteg erstreckt sich unmittelbar, d. h., ohne zwischengeschalteten Verlustwiderstand, von einem Endbereich einer ersten Formlitze zu einem Endbereich einer zweiten Formlitze. Die Endbereiche gehen jeweils in einen Stableiter über. Besonders vorteilhaft für eine Ausbildung einer Stegverschaltung ist es, wenn Verschaltungsstege zweiteilig aufgebaut sind. Beide Teile eines Verschaltungsstegs können jeweils durch einen Flachdraht realisiert sein. Vorzugsweise bestehen die Flachdrähte aus einem gleichen Metall. Unter einem Flachdraht wird ein elektrischer Leiter verstanden, dessen Höhe bzw. Dicke kleiner ist als seine Breite. Ein Flachdraht kann einen rechteckigen Querschnitt aufweisen. Es ist möglich, Flachdrähte als Bandmaterial oder als gestanzte Blechstreifen bereitzustellen. Jeder Flachdraht weist vorzugsweise eine Drahtlackisolierung auf. Damit ist eine Ausbildung von Kurzschlüssen zwischen zwei Verschaltungsstegen nahezu ausgeschlossen. Die Verschaltungsstege sind außerhalb des Kerns angeordnet. Verschaltungsstege können auch als Verschaltungsbrücken bezeichnet werden.

Weil eine Wicklung in einem Stator eine Abfolge von Formlitzen und Verschaltungsstegen im Wechsel aufweist, kann von einem hybriden Wicklungsdesign eines erfindungsgemäßen Stators gesprochen werden.

Durch den hybriden Aufbau der Wicklung kann der Stator vergleichsweise einfach gefertigt werden. Elektrisch leitende Verbindungen zwischen Formlitzen im Stator und den Verschaltungsstegen lassen sich in großserientauglichen Fertigungsverfahren, z. B. durch synchron ausgeführte Kontaktierung, zeiteffizient und zuverlässig ausbilden. Mit den Formlitzen kann der Stator ein einen sehr guten Leiter-Füllfaktor für die Stromleitung durch die Wicklungen aufweisen.

Die Wicklung bzw. die Wicklungen einer elektrischen Maschine, insbesondere von deren Stator, umfassen mehrere Leitungssegmente. Für die Herstellung eines Leitungssegments kommt eine Litze zum Einsatz. Die Litze besteht aus mehreren Litzendrähten, die auch als Einzeldrähte bezeichnet werden können. Jeder Einzeldraht ist einzeln für sich durch eine Beschichtung isoliert. Eine Beschichtung mit einem dünn aufgetragenen Drahtlack kann ausreichen, um einen möglichen Stromfluss von einem Einzeldraht zu einem parallel sich erstreckenden Einzeldraht zu verhindern. Die Litzendrähte sind vorzugsweise gebündelt nebeneinander angeordnet, wobei eine Verdrillung der einzelnen Litzendrähte miteinander vorliegt. Verdrillte Litzendrähte erstrecken sich im Bündel kurvenförmig nebeneinander. Die verdrillten Litzendrähte erstrecken sich über einen Bereich der Leitungssegment-Längserstreckung hinweg, der als mittlerer Bereich bezeichnet werden kann. Die verdrillten Litzendrähte weisen als Bündel eine Querschnittsform auf, die als eine Rundform bzw. als eine Kreisform bezeichnet werden kann. Die verdrillte Litze ist zumeist gerade über eine gesamte Längserstreckung hinweg, wobei die Litze insbesondere die Länge beibehält, wenn aus ihr eine Formlitze wird. Somit sind Längserstreckung der Litze und die Formlitzenlängserstreckung identisch, zumindest nahezu identisch. Für die Herstellung des Leitungssegments wird vorteilhaft mindestens eine Biegung der Litze vorgenommen, durch die die Litze in eine gekrümmte Form verbracht wird. Vorzugsweise erstrecken sich die Arme der Litze abseits von der Krümmung linear in eine erste Richtung und in eine zweite entgegengesetzte Richtung. Die Litzenkrümmung in dem ersten, mittleren Bereich des Leitungssegments wird somit von einem zweiten ungekrümmten Bereich und einem dritten ungekrümmten Bereich entlang der Formlitzenlängserstreckung flankiert. In dem zweiten Bereich und in dem dritten Bereich wird die Litze in eine Stableiterform gepresst. Damit wird die Litze zum einen verdichtet. Zum anderen wird die Litze in eine Querschnittsform verbracht, die für eine Einbringung der Litze in eine elektrische Maschine gewünscht ist. Die Stableiterform ist vorzugsweise eine in dem jeweiligen Litzenbereich ausgebildete Linearform des Leitungssegments. Die Formlitzenlängserstreckung geht an beiden Enden in sogenannte Endbereiche über. Die Endbereiche können Fortsetzungen der Stableiterform sein. In den Endbereichen können die Litzendrähte verdrillt sein. Die Litze wird durch einen oder durch mehrere Pressvorgänge in eine Formlitze mit ihrer Formlitzenlängserstreckung gewandelt. Zu der Formlitze werden nun zwei bereitgestellte Flachdrähte hinzugenommen. Beide Flachdrähte weisen jeweils mindestens einen Endbereich auf, an dem sich kein Isolator befindet. Ein Mittenbereich des Flachdrahts ist vorzugsweise ringsum, z. B. mit einer dünnen Drahtlackschicht, isoliert. Jeder Endbereich der Formlitze wird jeweils mit einem isolatorfreien Ende eines Flachdrahts zusammengebracht. Ein Endbereich der Formlitzenlängserstreckung wird zusammen mit dem Endbereich des zugeordneten Flachdrahts überlappend verpresst. Flachdraht und Formlitze werden in einem jeweiligen ersten Endbereich in eine metallisch schlüssige Verbindung verbracht. Ein zweiter Flachdraht wird mit dessen erstem Ende in gleicher Weise mit einem zweiten Endbereich der Formlitzenlängserstreckung verbunden.

Durch die Verpressung wird sichergestellt, dass in dem Überlappbereich keine Aufspreizung der Litze aus der Stableiter-Querschnittsform heraus entstehen kann. Die Verbindung kann z. B. durch einen Energieeintrag hergestellt werden. Dabei entsteht über eine Verschmelzung der beiden Teile Formlitze und Flachdraht hinweg eine metallische Leitfähigkeit, die sich vorzugsweise über den gesamten Kontaktbereich der Endbereiche, insbesondere ohne stromleitungshinderliche Einschlüsse, ausbildet.

Ein Stator aufgebaut u. a. aus erfindungsgemäßen Leitungssegmenten sowie das erfindungsgemäße Herstellungsverfahren für ein Leitungssegment sind vorteilhaft in einem Antriebsstrang bzw. für einen Antriebsstrang eines Kraftfahrzeugs einsetzbar. Der Antriebsstrang weist eine elektrische Maschine zur Erzeugung eines Drehmoments auf. Das Drehmoment ist mit einem zumeist ortsfest im Kraftfahrzeug zu verbauenden Stator und einem darin drehbar angeordneten Rotor generierbar. Der Rotor ist vorzugsweise mit einer Magnetanordnung ausgestattet, die aus Permanentmagneten gebildet sein kann. Durch Wechselstromzufuhr können veränderliche Magnetfelder erzeugt werden, durch die eine tangential an dem Rotor ansetzende Kraft eine Drehbewegung des Rotors ermöglicht. Jene Drehbewegung bzw. das zugehörige Drehmoment wird in eine Drehmomentübertragungsvorrichtung eingeleitet. Die Drehmomentübertragungsvorrichtung kann eine oder mehrere der folgenden Komponenten umfassen: eine Eingangswelle, eine Ausgangswelle, ein Stirnradgetriebe, eine Kupplung, ein Planetengetriebe, eine Bremse und/oder ein Differential. Aus der Drehmomentübertragungsvorrichtung heraus wirkt bei einer geeigneten Stromzufuhr in den Stator ein Drehmoment auf ein Straßenrad (bei einem Einzelradantrieb), oder auf mehrere Straßenräder. Die Energie für den Antrieb wird aus einer wiederaufladbaren Energiequelle des Kraftfahrzeugs bereitgestellt. Der erforderliche elektrische Strom kann der elektrischen Maschine z. B. über eine Leistungselektronik, die einen Inverter umfasst, geregelt zugeführt werden.

Nachfolgend werden vorteilhafte Ausgestaltungen und Weiterbildungen dargelegt, die für sich gesehen, sowohl einzeln als auch in Kombination, ebenfalls erfinderische Aspekte offenbaren können.

Die Formlitze erlangt vorzugsweise zumindest bereichsweise ihre Querschnittsform durch eine Formpressung. Durch die Formpressung ist die verdrillte Litze besonders stark verdichtbar. Damit wird ein guter Füllfaktor in einer Nut ermöglicht (beispielsweise kann ein Anteil von 0,5 bis 0,95 des Nutvolumens von Leiter-Material ausgefüllt sein). Durch Formpressung können entlang einer Litzenlängserstreckung drei Litzensegmente ausgebildet sein. Die Litzensegmente sind Bereiche, in denen der Litze eine, insbesondere zu einem angrenzenden Bereich unterschiedliche, geometrische Querschnittsform zugefügt wurde. Vorzugsweise sind mindestens sieben Litzensegmente formgepresst. Es ist vorteilhaft, wenn ein Litzenquerschnitt entlang der Litzenlängserstreckung für zwei der formgepressten, vorzugsweise voneinander beabstandeten, Litzensegmente, die sich vorzugsweise jeweils linear erstrecken und als Stableiter dienen, eine unterschiedliche Querschnittsform aufweisen. Ein Litzenquerschnitt von zwei Litzensegmenten, die insbesondere an die Stableiter anschließen, kann zueinander gleich gestaltet sein. Diese Litzensegmente können paarweise eine gleiche Länge haben. Zwischen zwei Litzensegmenten mit gleichem Litzenquerschnitt befindet sich vorzugsweise ein unverpresster Litzenbereich. Ein unverpresster Litzenbereich ist im Vergleich zur formgepressten Litze leichter biegbar.

Die beiden von einer Formlitze gebildeten bzw. einer Formlitze eingeprägten Stableiter haben vorzugsweise eine gleiche Länge. Die Länge des Stableiters ist entsprechend einer Längserstreckung des Kerns bzw. des Blechpakets entlang der Rotorachse gewählt. Anders gesagt, können die Stableiter um wenige Millimeter (z. B. 5 mm) über den Kern hinausragen. Vorzugsweise ragt (nur) ein jeweiliger Kompaktierungsbereich der Formlitzen über den Kern hinaus.

Auf die Formlitze ist eine Isolatorschicht aufbringbar. Eine Ummantelung der Formlitze mit einem Isolatormaterial stellt sicher, dass keine Ströme von der Formlitze auf den Kern abfließen können. Die Isolatorschicht kann sich über den gesamten Stableiter erstrecken. Es ist auch möglich, eine Isolatorschicht vorzusehen, die die Formlitze in ihrer Gesamtlänge abdeckt.

In der Formlitze sind mehrere Einzeldrähte nebeneinander angeordnet. Die Einzeldrähte sind zueinander verdreht. Die Einzeldrähte erstrecken sich in der Formlitze von einem ersten Litzenende zu einem zweiten Litzenende. Eine Verdrillung der Litzendrähte wird vorzugsweise mit einer Schlaglänge erstellt bzw. bereitgestellt. Bei einer Verdrillung mit einer Schlaglänge kann von einer 360°-Verdrillung gesprochen werden. Zwischen den beiden Endbereichen der Formlitze und einem jeweiligen Endbereich des an die Formlitze angeschlossenen Flachdrahts ist vorzugsweise ein Überlappbereich jener beiden elektrischen Leiter vorhanden. Ein Überlappbereich kann z. B. eine vorgegebene Länge auf der Litzenlängserstreckung betragen, die in einem Bereich von 4 mm bis 20 mm liegt Der Überlappbereich liegt entlang der Litzenlängserstreckung in einem Endbereich der Litze. Durch den Überlapp wird eine bessere Kontaktbildung ermöglicht.

Ein erstes Ende der Formlitze gehört zu einem Kompaktierungssegment der Formlitze. An einem zweiten Ende der Formlitze befindet sich ein zweites Kompaktierungssegment der Formlitze. Das erste Kompaktierungssegment ist mit einem ersten Flachdraht verbunden. Das zweite Kompaktierungssegment ist mit einem Flachdraht verbunden. Die Verbindung zwischen einem Kompaktierungssegment und einem Flachdrahtendbereich erfolgt jeweils mithilfe einer Formpressung. Vorzugsweise ist zumindest der dem Kompaktierungssegment zugeordnete Endbereich des jeweiligen Flachdrahts drahtlackfrei. Eine elektrisch leitende Verbindung kann z. B. durch Löten, Schweißen in Form eines Diffusionsschweißprozesses wie Widerstandsschweißen oder Ultraschallschweißen oder Krimpen, bevorzugt Heiß-Krimpen, erstellt werden. Bei der Kompaktierung wird über jeweilige Segmentkontaktflächen ein elektrisch leitender Übergang von allen Einzeldrähten zum Flachdraht geschaffen.

Die Formlitze weist mehrere querschnittsgeformte Litzensegmente auf. An jedem querschnittsgeformten Litzensegment der Formlitze wurde die Litze einer Formpressung unterzogen. Möglich ist eine Formpressung mittels Walze. Vorzugsweise erfolgt aufgrund unterschiedlicher an einer Litze zu formender Querschnitte eine Formgebung in einer Pressform. Die Pressform gibt die Querschnittsform vor. Einzeldrähte werden kollektiv gleichzeitig umgerückt. Alle Litzensegmente können insbesondere gleichzeitig durch Formpressung in ihre jeweilige Querschnittsform verbracht werden.

In jedem Litzensegment befindet sich eine gleiche Anzahl von Einzeldrähten. Es ergibt sich eine in etwa gleiche Litzenquerschnittsflächengröße durch die Formpressung. Anders gesagt, weist jedes querschnittsgeformte Litzensegment eine gleiche Leiterquerschnittsgröße auf. Die vorgegebene Litzenquerschnittsflächengröße ist vorteilhaft für die Stromleitung.

Die in dem Stator vorhandenen Flachdrähte können einer ersten Gruppe und einer zweiten Gruppe zugeordnet sein. Flachdrähte der ersten Gruppe haben eine erste Flachdrahtbreite. Flachdrähte der zweiten Gruppe haben eine zweite Flachdrahtbreite. Die Flachdrähte der ersten Gruppe sind jeweils mit einem ersten Ende einer einzelnen, ihnen jeweils zugeordneten Formlitze verbunden. Die Flachdrähte der zweiten Gruppe sind jeweils mit einem zweiten Ende einer einzelnen, ihnen jeweils zugeordneten Formlitze verbunden. Die erste Breite der Flachdrähte in der ersten Gruppe ist kleiner als die zweite Breite der Flachdrähte in der zweiten Gruppe. Die Breite der Flachdrähte ist so gewählt, dass sie schmaler ist als eine Eintrittsöffnung einer Kernnut. Vorzugsweise in jeder Kernnut sitzen jeweils mindestens zwei Stableiterbereiche die zu mindestens zwei Flachdrähten gehören. Die Flachdrähte sind somit vorteilhaft in einer Axialrichtung in die Kernnut einbringbar. Eine Stegverschaltung, d. h. eine Ausbildung eines Verschaltungsstegs ist über zwei Flachdrähte möglich. Vorzugsweise werden abisolierte oder isolationsfreie Endbereiche der Flachdrähte miteinander zu einem Verschaltungssteg verbunden.

Das Erstellen einer elektrischen Verbindung kann durch Laserstrahlschweißen oder eine andere Form des Strahlschweißens (z. B. mit einem Ladungsträgerpartikelstrahl) erfolgen. Stegverschaltungen sind besonders widerstandsarme Verbindungen von einer ersten Formlitze zu einer zweiten Formlitze. Die Verbindung entsteht durch Materialschluss, z. B. von Kupfer zu Kupfer.

Ein besonders hoher Füllfaktor kann erzielt werden, wenn die Stableiter der Formlitze mit deren Querschnittsfläche an einen Querschnitt eines Aufnahmeraums für den Stableiter in dem Stator angepasst sind. Wenn der Aufnahmeraum eine Trapezform aufweist, insbesondere eine Trapezform den Querschnitt einer Längserstreckung des Aufnahmeraums wiedergibt, ist vorzugsweise eine Formlitze des Stators ebenfalls mit einer Trapezform ausgestattet.

Der Querschnitt des ersten Stableiters kann eine erste Trapezform ausfüllen. Der Querschnitt des zweiten Stableiters kann eine zweite Trapezform ausfüllen. Besonders vorteilhaft ist es, wenn beide Trapezformen einen gleichen Trapezwinkel aufweisen. Zwei Trapezformen passen noch besser zusammen, wenn eine kleinste Breite der ersten Trapezform und eine größte Breite der zweiten Trapezform etwa übereinstimmen. Ein günstiger Trapezwinkel ergibt sich insbesondere aus dem Radius, dem eine rotorseitige Kerninnenwand folgt und der Anzahl und Breite von Nuten des Kerns. Die erste Trapezform und die zweite Trapezform sind nahezu lückenlos zusammensetzbar. Beide Trapezformen bilden zusammengesetzt eine Trapezhöhe, vorzugsweise entsprechend einer Tiefe der Nut, von der die zweite Trapezform einen größeren Anteil einnehmen kann als die erste Trapezform.

Besonders vorteilhaft für einen Zusammenbau des Stators ist es, wenn der Flachdraht über seine Gesamtlänge, zumindest aber über ein Ende Flachdrahts eine maximale Breite aufweist die auf die Breite des Stableiters, auf den der Flachdraht übergeht, abgestimmt ist. Eine maximale Flachdrahtbreite ist vorzugsweise kleiner oder gleich einer Stableiterbreite. Außerdem sollte eine maximale Höhe des Flachdrahts kleiner oder gleich der Höhe seinen angeschlossenen Stableiters sein. Damit sind die Leitungssegmente aus Flachdraht und Formlitze besonders gut in den Kern einführbar.

Zwischen den beiden Armen einer Formlitze ist ein Mittenbereich der Formlitze vorhanden, der als ein Abstandshalter von einem Arm zum anderen Arm dient. Anders gesagt, bildet der Mittenbereich eine Brücke zwischen einem ersten Arm und einem zweiten Arm der Formlitze. Der Mittenbereich ist vorzugsweise ein segmentierter Bereich. Die Formlitze weist in dem Mittenbereich mindestens zwei Übergangssegmente auf. Mindestens ein Übergangssegment ist mit einer Querschnittspressform ausgestaltet. Die Übergangssegmente können auch als Formlitzenkopfsegmente bezeichnet werden. Ein Querschnitt des Übergangssegments ist im Wesentlichen rechteckig. Damit ist gesagt, dass von den Einzeldrähten der Formlitze in dem Übergangssegment eine rechteckige Fläche als Querschnittsfläche ausgefüllt ist. Hierbei können aufgrund einer zumeist verwendeten Rundform von Einzeldrähten kleine Zwischenräume zwischen den Einzeldrähten vorhanden sein, die z. B. durch einen Isolationslack und/oder einen Backlack ausgefüllt sein können. Wenn drei Übergangssegmente bzw. drei Formlitzenkopfsegmente an der Formlitze ausgebildet sind, weisen zwei der Segmente bzw. zwei Übergangssegmente vorzugsweise einen gleichen rechteckigen Querschnitt auf. Der rechteckige Querschnitt der Übergangssegmente ist aufgrund der Formpressung über die Länge der Übergangssegmente hinweg gleichförmig.

Zwischen den beiden Armen einer Formlitze kann ein Formlitzenkopfbereich ausgebildet sein. Der Formlitzenkopfbereich ist ein Formbereich der Litze, der in einem Wickelkopf des Stators angeordnet ist bzw. in einer Aufbauphase für eine Anordnung im Wickelkopf vorgesehen ist. Besonders vorteilhaft ist es, wenn der Formlitzenkopfbereich eine (erste) Litzenkrümmung aufweist. Die Krümmung ist mittels Schlaufenformung ausbildbar, z. B. wenn die Schlaufe durch auseinanderziehen der beiden Arme gestreckt wird. Eine derart gebildete Krümmung kann eine Vergrößerung einer Quererstreckung der Formlitze ergeben. In jenem Formlitzenkopfbereich, der sich vorzugsweise in einem Mittenbereich der Formlitze befindet, ist eine Quererstreckung der Formlitze größer als in einem Stableiterbereich. Bei der Schlaufenformung wird die Formlitze bzw. der Formlitzenkopfbereich in eine loopingartige Erstreckung gebracht. Damit entsteht vorzugsweise ein Spurversatz von einem Stableiter zu dem benachbarten Stableiter auf einer Formlitze. Im Bereich der Krümmung des Formlitzenkopfbereichs ist die Formlitze keiner querschnittsbestimmenden Pressung ausgesetzt worden. Damit wird in jenem Formlitzenkopfbereich eine Weichheit der Formlitze gemäß einer Biegbarkeit der verdrillten Litze zumindest bewahrt oder leicht verbessert. Damit kann die Formlitze für eine Positionierung der Stableiter leichter in eine gewünschte (räumliche) 3D-Form gebogen werden. Außerdem wird eine Ausbildung eines flacheren Wickelkopfs ermöglicht.

Der Stator ist mit mindestens einer Wicklung zur Stromleitung ausgestattet, wobei ein durchgeleiteter Strom um die Wicklung ein Magnetfeld generiert. Die Wicklung ist von dem Kern des Stators unterstützt. Die Wicklung, die auch als Spule bezeichnet wird, ist aus einer Abfolge von Formlitzen und Verschaltungsstegen gebildet. Eine Formlitze folgt auf einen Verschaltungssteg. Auf einen Verschaltungssteg folgt eine Formlitze. Die Formlitzen im Verbund mit jeweils zwei Flachdrähten sind vorzugsweise gleichzeitig in den Stator einsetzbar. Beide Arme einer Formlitze sind in unterschiedlichen Nuten des Kerns eingesteckt. Ein erster Stableiter einer Formlitze sitzt in einer Nut, vorzugsweise in einem inneren Radialbereich der Nut und ein zweiter Stableiter der gleichen Formlitze sitzt in einer anderen Nut, vorzugsweise in einem äußeren Radialbereich der anderen Nut. Zwischen jenen beiden Nuten können in dem Kern bzw. dem Blechpaket weitere Nuten vorhanden sein, die in einem Wickelkopf von einem oder mehreren Formlitzenkopfsegmenten überbrückt sind. In einem anderen Wickelkopf des Stators sind mehrere Nuten von einem Verschaltungssteg überbrückt.

Die zuvor dargestellten Kombinationen und Ausführungsbeispiele lassen sich auch in zahlreichen weiteren Verbindungen und Kombinationen betrachten.

Ein Stator für eine elektrische Maschine kann mit einem Blechpaket ausgestattet sein, in dem eine Mehrzahl von Nuten vorhanden ist. Die Nuten sind vorzugsweise umfänglich gleich verteilt eingearbeitet, z. B. aus den Blechen, die das Blechpaket bilden, gestanzt. Das Blechpaket weist eine hohlzylindrische Grundform auf. Jener Grundform kann ein Außenmantel und ein Innenmantel zugewiesen werden. Der Innenmantel kann auch als Blechpaketinnenwand bezeichnet werden. Die Nuten zweigen über einen Spalt in der (aus einzelnen Blechkanten gebildeten) Blechpaketinnenwand in das Blechpaket hinein ab. Die Nuten erstecken sich vorzugsweise in Längsrichtung entlang des gesamten Blechpakets und können einen rechteckigen Querschnitt oder einen trapezförmigen Querschnitt aufweisen. Die hohlzylindrische Form des Blechpakets weist zwei Stirnseiten auf. An einer ersten Stirnseite sitzt ein erster Wickelkopf. Der erste Wickelkopf ist aus bogenförmigen Mittenbereichen einer Vielzahl von Formlitzen gebildet. Die Formlitzen sind haarnadelartig geformt. Hierzu gehören insbesondere jeweils zwei lineare Erstreckungsbereiche, die über einen querverlaufenden Erstreckungsbereich der Formlitze verbunden sind. Ein zweiter Wickelkopf befindet sich an einer zweiten Stirnseite des Blechpakets. Der zweite Wickelkopf dient der Verbindung der Formlitzen insbesondere nach einem vorgegebenen Wicklungsstrukturplan bzw. Verschaltungsplan miteinander. Anders gesagt, weist der erste Wickelkopf vorzugsweise keine Kontaktstellen der Windungen auf, weil sich die Kontaktstellen alle in dem zweiten Wickelkopf befinden.

In einer vorteilhaften Ausführung befinden sich in jeweils einer Nut genau zwei Formlitzen. Beide Formlitzen reichen von dem ersten Wickelkopf bis zu dem zweiten Wickelkopf. Der zweite Wickelkopf umfasst eine Vielzahl von Verschaltungsstegbrücken. Eine Verschaltungsstegbrücke führt von einer ersten Formlitze zu einer zweiten Formlitze. Zwischen einer ersten Formlitze und einer zweiten Formlitze sind auf einer Leitungsstrecke mindestens zwei Kontaktstellen vorhanden. Eine Kontaktstelle ist eine elektrisch leitende Verbindung. Jene Verbindung ist mit mechanischer Stabilität ausgeführt, indem die Verbindung über eine Kontaktfläche vorliegt. Bei den beiden mit einer Verschaltungsstegbrücke gekoppelten Formlitzen handelt es sich um eine Formlitze, die in einer ersten Nut radial näher zur Blechpaketinnenwand hin angeordnet ist. Jene Formlitze ist in der ersten Nut innenliegend. Die andere Formlitze, die zur Verschaltungsstegbrücke gehört, erstreckt sich in einer zweiten Nut. Sie kann unmittelbar auf einer weiteren innenliegenden Formlitze ruhen oder in einer oder mehreren Formlitzenebenen liegen. In jener zweiten Nut liegt bevorzugt die Formlitze auf einer von der Blechpaketinnenwand abgewandten Seite der Nut. Es kann somit auch von einer außenliegenden Formlitze gesprochen werden. Die Blechpaketinnenwand dient dazu, einen Luftspalt zu einem Rotor nach außen hin zu begrenzen.

In einer weiteren Ausführungsform liegt die zweite Formlitze nicht unmittelbar auf der ersten Formlitze auf, sondern zwischen den beiden Formlitzen gibt es noch weiter Formlitzen. In diesem Fall gibt es Zwischenschichten (z. B. aus Formlitzen), die die äußere Formlitze bzw. die außenliegende Formlitze von der in Richtung auf das Statorzentrum hin innenliegenden Formlitze trennt. Die außenliegende Formlitze läuft durch einen Teil einer Nut, die durch einen größeren Radius vom Mittelpunkt des Stators bzw. von einer Rotorachse getrennt ist im Vergleich zu dem Radius, der zwischen einer innenliegenden Formlitze und der Rotorachse zu bilden ist. Anders ausgedrückt, es liegen die Formlitzen in unterschiedlichen Formlitzenebenen. So können zum Beispiel je Nut vier Formlitzenebenen ausgebildet sein und es liegen folglich vier Stableiter übereinander. Diese gehören typischerweise zu vier verschiedenen Formlitzen.

Segmente im Mittenbereich können auch als Formlitzenkopfsegmente bezeichnet werden.

Vorteilhaft ist es, wenn zwischen zwei Formlitzenkopfsegmenten ein drittes Formlitzenkopfsegment vorhanden ist, dessen Litzenerstreckung eine schraubengewindegangartige Krümmung, wie ein Looping, aufweist.

Demnach kann es mindestens drei Formlitzenkopfsegmente geben.

In einem hier beschriebenen Verfahren zur Herstellung eines Stators für eine elektrische Maschine wird ein Blechpaket bereitgestellt, das eine festvorgegebene Anzahl von Nuten aufweist. Es wird auch eine vorgegebene Anzahl von Formlitzen bereitgestellt. Die Formlitzen sind an ihren beiden Endbereichen jeweils mit einem Verbindungssteg, wie einem Flachdraht, ausgestattet. Ein Verbindungssteg dient der Bereitstellung eines Stromdurchgangs. In einem ersten Formgebungsschritt, der ein Biegeschritt ist, wird ein Mittenbereich der Formlitzen bzw. jeder Formlitze, die dem Statoraufbau dient, in einer Formlitzenebene gekrümmt und damit in eine U-Form verbracht. In einem sog. Fügeschritt werden alle Formlitzen des Stators in einer Blechpaketlängsrichtung mit den Verbindungsstegen voran in die Nuten eingeführt. Das Einführen erfolgt vorzugsweise für alle Formlitzen gleichzeitig. Für ein gemeinsames Einführen können die Formlitzen vorab in ein Einführwerkzeug eingesetzt werden. Alle Formlitzen werden insbesondere nebeneinander bzw. paarweise nebeneinander durch die gesamte Nutenlänge hindurch geschoben, bis deren Verbindungssteg auf einer Seite des zweiten Wickelkopfs von dem Blechpaket absteht. Jeweils zwei Verbindungsstege, die zu unterschiedlichen Formlitzen gehören, werden anschließend zusammengebogen bzw. zu einander (hin) gebogen. Die zusammengebrachten Verbindungsstege gehen einen elektrisch leitenden Zusammenschluss ein, der vorzugsweise durch eine ebenmäßige Form der Verbindungsstege, z. B. unterstützt durch eine Quetschung, ein Lot, ein Hüllband einen Kontaktschuh und/oder eine Einbringung thermischer Energie, zustande kommen kann.

Ein Zusammenbau aus einem vorteilhaften, erfindungsgemäßen Stator mit einem bereitgestellten Rotor bildet eine elektrische Maschine, mit der ein Drehmoment für ein Kraftfahrzeug erzeugt werden kann.

Es ergibt sich eine besonders kompakte elektrische Maschine.

Nachfolgend werden weitere vorteilhafte Ausgestaltungen und Weiterbildungen dargelegt, die für sich gesehen, sowohl einzeln als auch in Kombination, ebenfalls erfinderische Aspekte offenbaren können.

Eine Verschaltung von Leitungssegmenten lässt sich besonders schnell und nahezu fehlerfrei ausführen, wenn ein Windungsbereich des zweiten Wickelkopfes, vorzugsweise der gesamte Wicklungsbereich des zweiten Wickelkopfes, der an die Formlitzensegmente im Blechpaket anschließt, formlitzenfrei ausgebildet ist.

Die Verschaltungsstegbrücke ist vorzugsweise aus mindestens zwei Verschaltungsstegabschnitten gebildet. Die Verschaltungsstegabschnitte können einseitig in einer V-Konfiguration oder einer Y-Konfiguration miteinander elektrisch überleitend aneinander befestigt sein. Vorzugsweise haben die Verschaltungsstegbrücken und die Verschaltungsstegabschnitte jeweils einen rechteckigen Querschnitt. Wenn genau zwei Verschaltungsstegabschnitte zwischen zwei Formlitzen vorhanden sind, sind diese Verschaltungsstege an einer Breitseite von deren rechteckigem Querschnitt zur Verschaltungsstegbrücke verbunden.

Ein Verschaltungsstegabschnitt weist vorzugsweise über eine gesamte Abschnittlänge eine Breite auf, die kleiner oder gleich einer Breite einer an den Verschaltungsstegabschnitt elektrisch leitend angeschlossenen Formlitze ist. In entsprechender Weise ist vorzugsweise der Verschaltungsstegabschnitt in Bezug auf eine vorgegebene Höhe der angeschlossenen Formlitze ausgebildet. Damit ist sichergestellt, dass der Verschaltungsstegabschnitt durch eine Nut des Blechpakets hindurchführbar ist.

Um ein noch besseres Verständnis der Statorverschaltung zu gewinnen, kann eine Perspektive mit Blickrichtung auf einen Mantel des Stators eingenommen werden. Ein erster Verschaltungsstegabschnitt einer ersten Verschaltungsstegbrücke und ein zweiter Verschaltungsstegabschnitt einer zweiten Verschaltungsstegbrücke erscheinen in einer solchen Mantelseitenansicht des Stators als in unterschiedlichen Ebenen angeordnete Verschaltungsstegabschnitte, die in einer gegenseitig kreuzenden Weise übereinander liegen. Damit können die Verschaltungsstege eine besonders kompakte bzw. dichte Anordnung in einem zweiten Wickelkopf ausbilden.

Die Formlitze ist vorzugsweise eine in eine Querschnittsform gepresste Litze. Entlang einer Litzenlängserstreckung sind vorzugsweise mehrere Litzensegmente ausgebildet, deren Anzahl insbesondere eine ungerade Zahl wie drei Litzensegmente oder sieben Litzensegmente sein kann. Ein erster Litzenquerschnitt eines Litzensegments unterscheidet sich von einem zweiten Litzenquerschnitt eines benachbarten Litzensegments. Ein Vorteil einer ungeraden Anzahl besteht darin, dass die Litzen zwischen den zwei Formlitzensegmenten im Blechpaket sich besonders gut zusammenlegen lassen. Außerdem kann eine Orientierung jener beiden Formlitzensegmente bei der Statorherstellung besonders präzise eingestellt werden.

Der erste Wickelkopf ist von mindestens zwei Formlitzenkopfsegmenten von jeweils einer der mindestens eine Windung ausmachenden Formlitzen des Stators gebildet. Die beiden Formlitzenkopfsegmente weisen einen, vorzugsweise gleichflächigen, rechteckartigen Litzenquerschnitt auf. Eine erste Breitseite einer ersten Formlitze bzw. eines Formlitzenkopfsegmentes ist im Stator einer zweiten Breitseite einer zweiten Formlitze, zu der das andere Formlitzenkopfsegment gehört, zugewandt.

Eine gute Kompaktheit des (ersten) Wickelkopfs ist erzielbar, wenn eine Breite der Breitseite des Formlitzenkopfsegments mindestens das Zweifache einer Höhe der Hochseite des Formlitzenkopfsegments ausmacht.

Das dritte Formlitzenkopfsegment ist insbesondere ein ungepresstes Formlitzenkopfsegment, dessen Litzenerstreckung eine schraubengewindegangartige Krümmung, wie ein Looping, aufweist. Das dritte Formlitzenkopfsegment kann einen Spulenkopf ausbilden wenn es von einer Blechpaketseite aus einen weitesten Abstand von allen Formlitzenkopfsegmenten aufweist. Eine Höhe des dritten Formlitzenkopfsegments kann etwa das 0,8-Fache eines Durchmessers der Formlitze in ungepresster Rundform betragen. Insbesondere zwei rechteckige Formlitzenkopfsegmente mit einem Verhältnis von Breite zu Höhe von 2,5 oder mehr lassen sich leichter umlegen, wenn sich dazwischen ein drittes Formlitzenkopfsegment befindet.

Der Stator weist mindestens eine Wicklung zur Stromleitung auf, die als eine sich wiederholende Sequenz von einer Formlitze und einer Verschaltungsstegbrücke ausgebildet ist. Alle Wicklungen eines Stators können als eine solche Abfolge ausgebildet sein. Jede Wicklung weist vorzugsweise mindestens ein Wicklungsende auf, das als eine Kontaktierungslitze ausgebildet ist Die Kontaktierungslitze dient der Ein- bzw. Ausleitung von elektrischem Strom. Der Stator ist einfach verbaubar, wenn die Kontaktierungslitze in einem elektrischen Steckverbinder oder einen elektrischen Schraubverbinder ausmündet.

Die Formlitze kann von einer Verschaltungsstegbrücke bis zur nächsten Verschaltungsstegbrücke von einem Gewebeband oder einem Polyimidband oder einem Fluorethylenpropylenband oder einem Polyethylennaphthalatfilm umwickelt sein. Die Formlitze kann insbesondere in einem Bereich eines ersten Wickelkopfes auch zusätzlich von einem Drahtlack, wie einem Polyesterimidlack, oder einem Kunstharz oder einem Epoxy zur Isolation umgossen sein. Ein besonders gut isolierter Stator ist bereitstellbar, wenn auch der zweite Wickelkopf, insbesondere die Verschaltungsstegbrücken, zusätzlich mit einem solchen elektrischen Isolationsmaterial eingegossen sind.

Der Stator kann für eine zuverlässige Abgabe einer höheren Motorleistung mit einer Kühlung ausgestattet sein. In den ersten Wickelkopf und/oder in den zweiten Wickelkopf und/oder in das Blechpaket kann zur Kühlung von betriebsbedingter Wärme eine Kühlflüssigkeit geleitet werden. Vorzugsweise ist für eine Durchleitung von Kühlmittel durch den Stator eine Kühlmittelleitung vorgesehen, die an dem Außenmantel angebracht ist. Außerdem kann/können ein Spaltrohr oder mehrere Spaltrohre durch das Blechpaket führen.

Die Wickelköpfe weisen jeweils einen Durchmesser quer zu einer Drehachse bzw. Rotorachse des Stators auf. Ein Durchmesser des ersten Wickelkopfs kann kleiner sein als ein Durchmesser des zweiten Wickelkopfs. Vorzugsweise ist eine Höhe des ersten Wickelkopfs entlang der Drehachse kleiner als eine Höhe des zweiten Wickelkopfs entlang der Drehachse.

Ein Stator lässt sich besonders arbeitseffizient herstellen, wenn eine Anzahl der Formlitzen gleich einer Anzahl der Nuten ist. Damit ist eine Anzahl von Teilen, die für einen Stator zusammengebaut werden müssen, gut handhabbar.

Bei der Herstellung eines Stators wird vor dem Einführen der Formlitzen ins Blechpaket vorzugsweise ein zweiter Biegeschritt an den Formlitzen ausgeführt. In dem zweiten Biegeschritt wird eine Formlitze, vorzugsweise werden alle Formlitzen in einer Richtung, die aus einer Formlitzenebene herausführt, mit mindestens einer Krümmung im Formlitzenkopfbereich angestellt. Hierbei wird insbesondere ein Spurversatz, den die Formlitze bietet, vergrößert.

Besonders vorteilhaft für die Fertigung des Stators ist es, wenn die Formlitzen jeweils mit beiden Verbindungsstegabschnitten einer Formlitze voran in die Nuten des Blechpakets geschoben werden. Ein Verbindungsstegabschnitt kann auch als Verschaltungsstegabschnitt bezeichnet werden. Einer der Verbindungsstegabschnitte kann, insbesondere mittels Bestückungswerkzeug, in eine erste Nut und der andere der Verbindungsstegabschnitte in eine zweite Nut des Stators eingeführt werden. Besonders vorteilhaft für eine weitere Bearbeitung der Verbindungsstegabschnitte ist es, wenn die Verbindungsstegabschnitte so weit eingeschoben werden, bis die in einen Nuteingang eingetretenen Verbindungsstegabschnitte vollständig aus einem Nutausgang ausgetreten sind.

In einem Bearbeitungsschritt der Statorherstellung, der nach Wunsch zusätzlich ausführbar ist, kann ein Wickelkopf noch stärker verdichtet werden. Das Verdichten erfolgt vorzugsweise mit einem plattenartigen Verdichtungswerkzeug. Die Formlitzen werden in einem einen Wickelkopf bildenden Mittenbereich der Formlitzen kompaktiert. Durch Anwendung einer Andruckkraft in Richtung der Rotorachse werden die Formlitzen des Stators gemeinsam gegen das Blechpaket gedrückt und damit zum Blechpaket hin gebogen. Besonders bevorzugt erfolgt dies durch eine Andruckplatte, die Teil des Gehäuses der elektrischen Maschine ist.

Eine erste Gruppe von Verbindungsstegabschnitten kann länger sein als eine zweite Gruppe von Verbindungsstegabschnitten. Damit wird ein Verschränken der Verbindungsstegabschnitte erleichtert. Ein paarweises Verschränken von Verbindungsstegabschnitten, ein Abschnitt aus der ersten Gruppe und ein Abschnitt aus der zweiten Gruppe, erfolgt vorzugsweise gleichzeitig mit einem Verschränkungswerkzeug.

Eine elektrisch leitfähige Verbindung zwischen den zwei Verbindungsstegabschnitten kann durch eine Energiebehandlung einer Kontaktstelle der Verbindungsstegabschnitte hergestellt werden. Die Verbindung kann durch ein Strahlschweißen erfolgen.

Weitere vorteilhafte Aspekte können auch wie folgt beschrieben werden, die sowohl einzeln als auch in Kombination miteinander einen erfinderischen Beitrag liefern können.

### Formlitze:

Eine Formlitze besteht aus mehreren drahtlackisolierten Einzeldrähten. Die Drähte haben meist einen Durchmesser, der in einem Bereich von 0,3 mm bis 1,2 mm liegt. Je nach Drahtdurchmesser wird für die Formlitzen in einem Stator jeweils eine vorgegebene Anzahl von Einzeldrähten gebündelt. Beispielsweise können 15 bis 200 Einzeldrähte gebündelt und mit einer vorgegebenen Schlaglänge zu einer Litze verdrillt sein. Alternativ kann die Schlaglänge auch mit den Fertigungsverfahren Verlitzen, Verseilen oder Verwürgen hergestellt werden. Besonders vorteilhaft ist es, wenn die Schlaglänge gleich oder ein vielfacher Teiler einer aktiven Länge der E-Maschine ist, für die der Stator bestimmt ist. Bei einer aktiven Länge eines Blechpaketes von beispielsweise 120 mm (Millimeter), soll die Schlaglänge wahlweise 120 mm, 60 mm oder 40 mm betragen. Innerhalb der Schlaglänge machen die Drähte eine schraubenförmige Verdrillung von 360° (Grad) um eine Mittelachse des Bündels aus Einzeldrähten.

Eine Verdrillung mit der geeigneten Schlaglänge von Einzeldrähten reduziert frequenzabhängige Verluste (AC-Verluste), die während des Betriebs des Motors bzw. der elektrischen Maschine entstehen, erheblich. Durch eine vorteilhafte Verdrillung von Einzeldrähten in einer Formlitze werden Performance und Effizienz der E-Maschine verbessert.

Die verdrillte Litze kann durch eine zusätzliche Verdrehung verdichtet werden, wobei in einem Spulenkopfbereich der Formlitze eine wendelartige Schlaufe gebildet und zusammengezogen wird.

Die verdrillte Litze kann in einem Presswerkzeug verdichtet werden. Vorzugsweise erfolgt eine Verdichtung in einem Fertigungsprozess, der auf die Bündelung und das anschließende Verdrillen folgt. Alternativ kann die Litze auch durch Walzen verdichtet werden. In Versuchen hat sich gezeigt, dass durch Pressen eine höhere Verdichtung erzielt werden kann als durch Walzen, daher ist Pressen ein bevorzugtes Verfahren. Das Verhältnis zwischen der Summe der reinen Drahtquerschnittsflächengröße von drahtlackisolierten, gebündelten Einzeldrähten zur Gesamtquerschnittsflächengröße der Formlitze kann als Verdichtungsfaktor bezeichnet werden. Üblicherweise liegt dieser Wert in einem Wertebereich von 0,6 bis 0,96.

Im Idealfall wird eine geometrische Form für das Verdichten zur Formlitze gewählt, die sich an dem Querschnitt der Statornut orientiert. Eine elektrische Maschine kann quadratische Nut-Geometrien, d. h. parallele Begrenzungen der Nut aufweisen, die mit quadratischen Flachdrähten ausgestattet sind. Besonders vorteilhaft für eine besonders gute Dauerleistung einer elektrischen Maschine ist ein Stator mit ringförmig angeordneten, trapezförmigen Nuten, deren Begrenzungswände in Richtung auf eine Rotationsachse hin mit einem vorgegebenen Winkel aufeinander zu verlaufen.

Vorzugsweise ist ein kleiner Spielraum, wie ein Abstand mit einer Größe, die einem Wert aus dem Bereich 0,1 mm bis 2 mm entspricht, zwischen Formlitze und Nut vorgesehen, um das Einführen der Formlitzen in die Nut bzw. in die Nuten, insbesondere an der jeweiligen Position der Formlitzen entlang einer Radialrichtung der Nut, zu erleichtern.

Ein anderer Vorteil einer Verdichtung durch Pressen bzw. einer Kompaktierung in einer Pressenform besteht darin, dass entlang einer Litzenlängserstreckung unterschiedliche Querschnittsformen, insbesondere unterschiedliche geometrische Formen einer Querschnittsfläche, wie eine Rundform, z. B. Kreis oder Oval, ein Trapez, ein Rechteck oder ein Quadrat ausbildbar sind.

Entlang der Formlitze kann die Formlitze in einem ersten Bereich, der auch als Stableiterbereich bezeichnet werden kann, zu einer Höhe des Querschnitts mit einem Wert aus einem Bereich von 3 mm bis 12 mm und einer maximalen Breite mit einem Wert aus dem Wertebereich von 1,5 mm bis 10 mm verpresst sein. Daran schließt sich ein zweiter Bereich an, der insbesondere kürzer als der erste Bereich ist. In dem zweiten Bereich kann die Formlitze mit einer Querschnittshöhe, die einen Wert aus einem Bereich von 5 mm bis 20 mm hat und einer Breite, die einen Werte aus dem Bereich von 1 mm bis 7 mm hat, verpresst sein. Über einen Spulenkopfbereich hinweg beabstandet zu dem zweiten Bereich liegt vorzugsweise ein dritter verpresster Bereich vor, der mit einem gleich wie der zweite Bereich bemaßten Querschnitt ausgestattet ist. Eine Länge des dritten verpressten Bereichs ist vorzugsweise gleich der Länge des zweiten verpressten Bereichs. In dem nicht verpressten Spulenkopfbereich kann die Formlitze eine Höhe aus dem Wertebereich von 4 mm bis 16 mm und eine Breite aus dem Wertebereich von 2 mm bis 14 mm haben. An den dritten verpressten Bereich schließt sich ein vierter verpresster Bereich an. Der vierte verpresste Bereich hat vorzugsweise eine gleiche Länge wie der erste verpresste Bereich. Eine Höhe des vierten verpressten Bereichs kann einen Wert aus dem Wertebereich von 4 mm bis 14 mm und eine (maximale) Breite mit einem Wert aus dem Wertebereich von 1,5 mm bis 8 mm haben. Der vierte verpresste Bereich kann auch als zweiter Stableiterbereich der Formlitze bezeichnet werden, denn der vierte verpresste Bereich ist ebenfalls für die Einbringung in eine Nut eines Blechpakets vorgesehen.

Die Werte von Höhe und Breite der verpressten Bereiche sind auch dadurch bestimmt, dass sich daraus jeweils eine nahezu konstante Flächengröße der Querschnittsfläche ergibt. Es kann von einer Randbedingung gesprochen werden.

### Querschnittsformung der Formlitze:

Wenn die Formlitze trapezförmig, auch als keildrahtförmig bezeichnet, wie die Nut, in der die Formlitze angeordnet werden bzw. angeordnet sein soll, ausgestaltet ist, ergeben sich besonders gute elektromagnetische Eigenschaften. Durch die Verdichtung der Formlitze in die zur Nut optimal angepasste geometrische Form, vorzugsweise trapezförmig, ist es möglich, einen sogenannten Kupferfüllfaktor zu erhöhen. Ein hoher Kupferfüllfaktor reduziert den elektrischen Widerstand in den Leitern und die Gleichstrom-Verluste (DC-Verluste) sinken. Dies führt zu einer weiteren Erhöhung der Performance und Effizienz der elektrischen Maschine.

Eine Litze aus verdrillten drahtlackisolierten Einzeldrähten wird verdichtet und in mehreren verschiedenen Bereichen über eine vorgegebene Bereichslänge in unterschiedlichen Querschnittsformen geformt. Während sich die Querschnittsform in fünf aufeinanderfolgenden Bereichen der Formlitze unterscheidet, ist die Querschnittsfläche, vorgegeben durch eine Summe der Querschnitte der einzelnen Litzendrähte, in allen Bereichen konstant. In einem Spulenkopfbereich kann aber ein geringerer Grad von Verdichtung der Litzendrähte existieren als z. B. in den zum Kopfbereich benachbarten Bereichen.

Zwei zu den Enden der Formlitze hin sich erstreckende Bereiche beinhalten eine Querschnittsform, meist trapezförmig, welche die Nutform im Blechpaket optimal abbildet. Die Querschnittsformen jener beiden Bereiche unterscheiden sich in der Regel in Höhe und Breite, da diese sich nach dem Einfügen in das Blechpaket an unterschiedlichen Stellen in jeweils einer anderen Nut befinden, d. h., an unterschiedlichen Radialpositionen.

An beide Formlitzenendbereiche schließt sich zur Mitte hin jeweils ein Formlitzenübergangsbereich an, in dem die Formlitze in eine flache rechteckige Form verpresst ist. Die Idee, jene beiden Bereich in eine flachere Form zu verpressen, hat einen wesentlichen Vorteil für eine resultierende Wickelkopfhöhe. Die Wickelkopfhöhe ist abhängig von der Breite der Formlitze und ist umso kleiner, je flacher die Litze verdichtet werden kann.

Im Kopfbereich zwischen jenen zuvor genannten Übergangsbereichen kann die Litze optional durch eine zusätzliche Verdrehung verdichtet umgeformt sein. Damit wird ein Aneinanderlegen der Übergangsbereiche erleichtert.

### Flachdraht:

Der Flachdraht besteht vorzugsweise aus dem gleichen Metall bzw. der gleichen metallischen Legierung wie die Formlitze, vorzugsweise aus Kupfer. Ein Querschnitt des Flachdrahts ist typischerweise rechteckig mit maximaler Breite und Höhe des jeweiligen Querschnitts, den die Formlitze im Stableiter bzw. Nutenbereich aufweist. Der Querschnitt des Flachdrahts kann quadratisch sein. Die Ecken und Kanten des Flachdrahts sind abgerundet. Optional kann der Querschnitt des Flachdrahts auch um 0,1 mm bis 4 mm kleiner als die jeweilige (maximale) Breite und/oder Höhe des jeweiligen Querschnitts der Formlitze in deren Nutenbereich sein.

Der Flachdraht weist eine Lackdrahtisolation auf. Der Flachdraht wird, bevor er mit der Litze gefügt, insbesondere verschweißt wird, bearbeitet. Mehrere Flachdrahtstücke werden auf eine erforderliche Flachdrahtlänge abgelängt. An einem (ersten) Ende wird der Flachdraht abisoliert. Dieses Ende dient der Kontaktierung mit anderen (abisolierten) Flachdrähten bzw. Flachleitern (ein anderes Wort für Flachdraht). Am anderen (zweiten) Ende wird der Flachdraht ebenfalls abisoliert. Das zweite Ende dient der Verbindung mit der Formlitze.

An jenem für die Formlitze vorgesehenen Ende wird eine Schräge an dem Flachdraht eingearbeitet. Die Schräge wird vorzugsweise mit einem Winkel zwischen 20° und 70° erzeugt. Die Schräge ist besonders vorteilhaft für die Erzeugung einer sehr kompakten Fügeverbindung des Flachdrahts bzw. dessen isolationsfreien Endbereichs mit der Formlitze. Die Schräge dient dazu, ein mögliches Durchtrennen von Einzelleitern durch den Flachdraht beim Fügen der Litze zu unterbinden. Die Schräge kann auch mit einer Krümmung bzw. Rundung ausgeformt sein.

Bei der Erstellung der Fügeverbindung werden Flachdraht und Formlitze bevorzugt in einem Überlappbereich miteinander verpresst.

Durchtrennte Einzelleiter können keinen Strom leiten und einer Gefahr einer Verringerung einer Performance der Elektromaschine wird somit vorgebeugt.

### Fügeverbindung zwischen Formlitze und Flachdraht:

Eine Fügeverbindung zwischen Formlitze und Flachdraht kann mittels Kompaktierung der Formlitze erstellt werden. Ein Querschnitt der Fügeverbindung ist vorzugsweise kleiner oder gleich einem Querschnitt des jeweiligen verpressten Stableiterbereichs der Formlitze, insbesondere in Bezug auf dessen Höhe und dessen maximale Breite. Dies ermöglicht ein axiales Einführen des Stableiterbereichs der Formlitze ins Blechpaket.

Zwar können Stableiter auch in einer Radialrichtung in das Blechpaket eingefügt werden, doch muss dann die Nutöffnung in das Blechpaket größer gewählt werden, insbesondere so groß, dass sowohl der Stableiter als auch die Formlitze und deren Fügeverbindung durch die Nutöffnung passen. Eine größere Nutöffnung geht zumeist mit einem Performanceverlust einher. Außerdem ist eine automatisierte Bestückung eines Blechpakets mit Stableitern durch Einführung in Axialrichtung weniger aufwendig als durch radiales Einfügen in die Nuten.

Im Bereich der Fügeverbindung, d. h. in einem Bereich einer Kompaktierung, ist um den Flachdraht und die Formlitze bevorzugt eine leitfähige Kupferfolie oder ein leitfähiges Kupferband als Ummantelung angeordnet. Die Dicke der Kupferfolie bzw. des Kupferbands beträgt etwa 0,1 mm bis 0,5 mm. An einem Bereich kann diese Folie bzw. dieses Band überlappend ausgeführt sein. Diese Kupferummantelung hat zum einen eine armierende, mechanisch verstärkende Wirkung bezüglich der Kompaktierung bzw. dem Kompaktierungsbereich. Zum anderen wird durch die Leitfähigkeit der Ummantelung das Verfahren Widerstandsschweißen zur Herstellung der stoffschlüssigen Verbindung zwischen Formlitze und Flachdraht ermöglicht.

Zwischen dem Flachdraht und der verpressten Formlitze kann sich Hartlot befinden. Das Hartlot wird vorzugsweise vor der Kompaktierung zwischen die Formlitze und den Flachdraht eingelegt. Das Hartlot wird z. B. während einem Diffusionsschweißprozess der Kupferfügepartner schmelzförmig und benetzt Formlitze und Flachdraht. Damit wird eine wesentliche Verbesserung der mechanischen Festigkeit der Fügeverbindung erzeugt. Eine elektrische Leitfähigkeit des Hartlots, z. B. aufgrund von dessen Silberbestandteil, kann sich positiv auf die elektrische Leitfähigkeit der Verbindung zwischen Flachdraht und Formlitze auswirken.

Durch die Integration des Kupferbands und des Hartlots kann eine Länge der Kompaktierung unter Einhaltung der mechanischen Festigkeitsanforderungen verkleinert werden. Diese Verkleinerung ist günstig für einen niedrigen Übergangswiderstand. Mögliche elektrische Verluste fallen somit geringer aus. Außerdem ergibt sich damit eine geringere Wickelkopfhöhe auf der Seite des Blechpakets, auf der sich im Stator die Flachdrähte befinden.

Der Flachdraht kann durch einen Diffusionsschweißprozess im Vorfeld an die Formlitze serientauglich ohne Zugänglichkeitsprobleme angeschweißt werden.

### Isolation:

Ein Drahtlack, vorzugsweise aus Polyamidimid mit Isolationseigenschaften nach DIN EN 60317-26, dient zur elektrischen Isolation von Einzeldrähten gegeneinander. Die Einzeldrähte sind vorzugsweise aus Kupfer oder aus einer Kupferlegierung.

Ein vorteilhafter Einzeldraht kann bei einem Drahtdurchmesser aus blankem Kupfer von 0,71 mm eine Schichtdicke des Drahtlacks von 0,01 mm haben. Eine Drahtlackbeschichtung wird auch als Overcoat bezeichnet. Optional kann auf dem Overcoat eine zusätzliche Beschichtung aufgetragen sein, die als Bonding Coat bzw. Bond Coat bezeichnet wird. Ein zur Beschichtung vorteilhaftes, relativ hitzebeständiges Material ist Polyamid. Der Bonding Coat kann z. B. eine Schichtdicke von 0,0095 mm haben. Ein Gesamtdurchmesser des Drahtes beträgt somit 0,749 ± 0,007 mm. Der gesamte Drahtlack hat die Isolationsklasse H.

Durch ein Bonding Coat kann eine Steifigkeit der Formlitze verbessert werden. Beispielsweise durch Erhitzen der Formlitze, z. B. mittels Stromdurchleitung oder durch Konvektion oder Infrarot-Öfen, können die Einzeldrähte miteinander verbunden bzw. verklebt werden.

Optional kann ein Backlack oder Bonding Coat auf dem Drahtlack der Einzeldrähte mit aufgetragen sein. Dieser kann, nach der Formgebung zur Spule, thermisch aktiviert werden und die einzelnen Drähte zueinander binden. Eine Steifigkeit der Formlitze kann durch einen Backlack, insbesondere in einem Bereich der Stableiter, zusätzlich erhöht werden. Außerdem kann ein Backlack eine Formstabilität der Formlitze, insbesondere in einem Übergangsbereich, noch mehr verbessern.

Optional kann in den Bereichen der verdichteten Litze, insbesondere den Bereichen der Kompaktierung, und/oder des Flachdrahts eine zusätzliche elektrische Isolierung appliziert werden. Zum Beispiel durch Umwicklung mit einem selbstklebenden Isolationstape ist eine isolierende Hülle um die Formlitze bzw. den Flachdraht ausbildbar. Dadurch kann die Anforderung und Dicke des Drahtlacks im Bereich der Litze und des Flachdrahts reduziert werden. Mit reduzierter Drahtlackdicke, zum Beispiel kleiner gleich GRAD 1 (gem. Norm für Drahtlackdicken: IEC 60317-0-1:2013 + AM01:2019), können höhere Kupferfüllfaktoren erreicht werden und die Performance der Elektromaschine weiter gesteigert werden.

### Erstreckungsformung der Formlitze:

Der Verbund aus Formlitze und zwei Flachdrähten wird von einer nahezu linearen Erstreckung (abgesehen von einer möglichen Wendel im Kopfbereich) in eine U-förmige Erstreckung verbracht. Die Erstreckungsformung erfolgt durch Biegung der Formlitze. In den Bereichen, an denen ein Übergang zwischen zwei unterschiedlichen Querschnitten der Formlitze vorliegt, wird (bzw. ist) die Formlitze abgewinkelt. Die Flachdrähte und die Stableiterbereiche der Formlitze bleiben, vorzugsweise exakt linear, zueinander ausgerichtet. Die Flachdrähte sind eine geradlinige Fortsetzung der Stableiterbereiche der Formlitze. Die Stableiterbereiche im Verbund mit den Flachdrähten werden parallel zueinander ausgerichtet. Die Übergangsbereiche werden (bzw. sind) dachartig zueinander angewinkelt. Dieser erste Umformschritt kann auch als 2-D-Umformung bezeichnet werden. Die gebildeten U-förmigen Leiter- bzw. Windungssegmente liegen wie Haarnadeln (engl.: "hairpins") in einer Ebene. Zusätzlich erfolgt, insbesondere anschließend, ein zweiter Umformschritt, der auch als 3-D-Umformung bezeichnet wird. Bei der 3-D-Umformung erfahren die Übergangsbereiche der Formlitze jeweils eine Krümmung, wodurch der Wickelkopf außerhalb der Ebene liegt, die von den Stableitern aufgespannt ist. Mithilfe dieser Verdrehung ist ein sehr kompakter Spulenkopf bzw. Wickelkopf erzeugbar.

Der zwischen den Übergangsbereichen wendelartig vorgeformte Kopfbereich erleichtert die 3-D-Umformung. Die einzelnen Drähte innerhalb der Litze können sich effektiver an einen optimalen Übergangspfad zwischen den Stableitern anpassen bzw. anordnen, bevor eine Formpressung in den Übergangsbereichen und in den Stableiterbereichen deren längsseitige Anordnung zueinander fixiert. Ein weiterer Vorteil durch die effektivere Anordnung besteht in reduzierten Umformkräften, die auf die einzelnen Drähte wirken können. Dadurch vermindert sich ein Risiko von Drahtbrüchen und von Entdrillungseffekten in den querschnittsgeformten Litzenbereichen.

Ein kompakter Spulenkopf führt zu einem kleineren Wickelkopf. Ein kleiner Wickelkopf reduziert einen notwendigen Bauraum, der für eine Elektromaschine bereitgestellt werden muss.

### Formgebung des Formlitzen-Hairpin-Hybrid-Stators:

Bei einem Formlitzen-Hairpin-Hybrid-Stator ist die Spule bzw. sind die Wicklungen abschnittsweise aus einem sog. Formlitzen-Hairpin-Hybrid gebildet. Hierbei kommt eine Formlitze zum Einsatz, deren Formgebung einer Haarnadel (engl. Hairpin) ähnelt. Die Formlitze geht an ihren Enden vorzugsweise in massiv ausgebildete leitfähige Flachsegmente über.

Für eine Automatisierung eines axialen Einfügens der Spulen bzw. Leitersegmente in die Nuten eines Blechpakets ist eine ausreichende Steifigkeit von deren Formlitze von Vorteil. Die Steifigkeit der Formlitze wird durch das Verdichten bzw. das Verpressen der Litze erhöht. Eine verdichtete Formlitze kann, je nach Fügekonzept und vorgesehenen Montagetoleranzen, bereits eine ausreichende Steifigkeit aufweisen.

Wenn von einer typischen Länge eines Blechpakets mit einem Wert aus einem Bereich von 80 mm bis 200 mm ausgegangen wird, überragt ein Stableiterbereich der in das Blechpaket eingesetzten Formlitze das Blechpaket vorzugsweise um eine Länge in einem Bereich von 4 mm bis 12 mm.

Wenn das Blechpaket mit Leitersegmenten aus Formlitzen-Hairpin-Hybriden bestückt ist, werden die Flachdrähte des Leitersegments miteinander verschränkt. Das Verschränken erfolgt vorzugsweise in einem Umformprozess, der auf alle Flachleiter angewendet wird. Hierbei wird jeder erste Flachdraht eines ersten Leitersegments zu dem ihm zugeordneten zweiten Flachdraht eines zweiten Leitersegments hingebogen. Es ergibt sich eine räumliche Überkreuzung der Flachdrähte in einem isolierten Bereich der Flachdrähte. Die unisolierten bzw. abisolierten Endbereiche der beiden Flachdrähte werden vorzugsweise parallel zueinander gebogen, sodass sie mit ihren Kontaktflächen aufeinander liegen.

Die Flachdrähte, die zueinander gehören und insbesondere bereits an ihrem Ende frei von Drahtlack sind werden vorzugsweise durch (Laser-)Strahlschweißen miteinander elektrisch leitend verbunden.

Der Flachdraht ist besonders vorteilhaft für den Verschränkungsprozess, weil er sich einfacher und beständiger umformen lässt als eine Litze. Es besteht keine Gefahr für Entdrillungseffekte der Litze, wenn die Umformung und Verschränkung für den zweiten Wickelkopf an Flachdrähten ausgeführt wird.

Optional kann im Bereich des ersten Wickelkopfs, der aus verdichteten Formlitzen gebildet ist, eine zusätzliche Verdichtung, vorzugsweise im fertig montierten Zustand der Leitersegmente im Blechpaket, z. B. mithilfe einer Andruckplatte, erfolgen. Diese Verdichtung verkürzt den Stator in einer Axialrichtung. Mit einer herkömmlichen Hairpin-Wicklung, die komplett aus Flachdraht gebildet ist, kann eine solche Verdichtung u. a. zu Kontaktproblemen führen, weil erheblich größere Andruckkräfte aufgewandt werden müssen.

Die typische Höhe der Wickelköpfe ist stark abhängig vom Blechschnitt und von dem Wickelschema. Für einen Stator mit 120 mm Innendurchmesser, dessen Blechpaket 60 Nuten aufweist, kann der erste Wickelkopf für eine ASM-Maschine eine Höhe in einem Bereich von 30 mm bis 55 mm haben. Für eine PSM-Maschine kann der Wickelkopf eine Höhe in einem Bereich von 15 mm bis 45 mm haben. Für den zweiten Wickelkopf einer ASM-Maschine liegt die Höhe in einem Bereich von 35 und 70 mm und für eine PSM-Maschine in einem Bereich von 20 mm bis 60 mm.

### Verschweißen bzw. Verlöten von Hairpin-Hybrid-Leitersegmenten:

In Versuchen hat sich herausgestellt, dass eine direkte Verschweißung von Litzen ohne Zusatzmaterial sehr schwierig umzusetzen ist. Der Drahtlack auf den Einzeldrähten innerhalb der Litze behindert eine ausreichende Güte für das elektrische Kontaktieren und eine porenarme Ausbildung der Kontaktfläche. Es besteht eine große Gefahr für die Ausbildung eines Kontaktwiderstands. Es kann außerdem zu Versprödung, Rissbildung und mangelhafter mechanischer Festigkeit kommen. Insbesondere kann eine elektrische Anbindung aller Einzeldrähte oft nicht reproduzierbar sichergestellt werden. Durch Ausgasungseffekte des Drahtlacks bei der Entstehung der Schmelze können sehr große Auswürfe und Poren innerhalb der Schweißnaht entstehen und zu einer mangelhaften Anbindungsfläche führen.

Durch Verwendung von Diffusionsschweißprozessen (wie Ultraschall- oder Widerstandsschweißen) kann dies umgangen werden. Diese Verfahren eignen sicher allerdings aufgrund von der Zugänglichkeit verfahrenstechnisch nicht zur Verschaltung der Leitersegmente bzw. deren Flachleiter im verbauten Zustand. Vor allem in der Serienfertigung bei größeren Stückzahlen wird vorzugsweise das Strahlschweißen, meist Laserstahlschweißen, angewendet.

### Statordesign:

Hairpin-Maschinen werden üblicherweise mit 4 bis 10 Lagen von flachen Drähten pro Nut ausgestattet, um AC-Verluste zu reduzieren.

Weil bei den vorliegenden Formlitzen-Hairpin-Hybrid-Leitersegmenten segmentierte Einzelleiter als querschnittsgeformte Litzen innerhalb der Nuten vorhanden sind, wurde festgestellt, dass schon 2 Lagen pro Nut ausreichen, um jenen Verlusten vorzubeugen. Folglich müssen nur 50 % bis 20 % so viele Hairpin-Leitersegmente im Vergleich zu bekannten Hairpin-Drähten gefertigt werden. Auch die Anzahl der erforderlichen Schweißungen kann sich damit erheblich verringern.

Ein weiterer Vorteil ergibt sich durch den größeren Querschnitt der Formlitze im Vergleich zu einem einzelnen flachen Leiter eines gemäß Stand der Technik bekannten Hairpin-Stators bzw. einer Hairpin-Elektromaschine. Der Querschnitt einer Formlitze ist in etwa um das Zweifache bis Fünffache größer als bei bekannten Flachdraht-Haipins, woraus sich für die Formlitze eine etwas höhere Steifigkeit ergeben kann. Eine größere Steifigkeit verringert eine Gefahr von Ausfällen bei der Automatisierung von Handhabungs- und Fügeoperationen bei der Statorproduktion.

Anders gesagt sind in einer bevorzugten Ausführung der Erfindung genau zwei Formlitzen bzw. Stableiter pro Nut vorhanden. Es scheint, dass aufgrund der Ausbildung der Formlitzen aus separaten gebündelten und verdrillten Einzelleitern zusätzliche Stableiter in einer Nut - im Gegensatz zu einer bekannten Hairpin-Maschine mit mehreren Flachdrähten in einer Nut - keine oder nur eine geringfügige weitere Verbesserung der Performance ergeben. Eine Erhöhung einer Anzahl der Formlitzen bzw. Stableiter pro Nut, z. B. drei oder vier Formlitzen-Stableiter pro Nut, könnte aber in Betracht kommen, um ein bestimmtes Wickelschema zu realisieren. Eine weitere bevorzugte Ausführung der Erfindung sieht vor, dass mehr als zwei Stableiter übereinander in einer einzigen Nut liegen, insbesondere drei bis fünf Stableiter.

Ein Beispiel für eine elektrische Maschine, die vorteilhaft mit einem erfindungsgemäßen Stator ausgestattet werden kann, ist eine Asynchronmaschine (ASM-Maschine).

Ein Stator für eine ASM-Maschine kann z. B. ASM-Stator, 60 Nuten im Blechpaket und 4 Pole aufweisen. Es handelt sich um eine gesehnte Konfiguration, bei der ein Leitungssegment, das auch als eine Spule mit Formlitze bezeichnet werden kann, im ersten Wickelkopf 13 Nuten überspannt bzw. überspringt. Der Verbindungssteg, der am zweiten Wickelkopf vorhanden ist, überspringt bzw. überspannt im Mittel 15 Nuten. Einige jener Verbindungssteg-Sprünge bzw. Überspannungen umfassen eine größere Anzahl Nuten.

Ein anderes Beispiel für eine elektrische Maschine, die vorteilhaft mit einem erfindungsgemäßen Stator ausgestattet sein kann, ist eine Permanent Erregte Synchronmaschine (PSM-Maschine).

Ein Stator für eine PSM-Maschine kann z. B. 48 Nuten im Blechpaket und 8 Pole aufweisen. Es handelt sich um eine ungesehnte Konfiguration, bei der eine Spule im ersten Wickelkopf 5 Nuten überspringt bzw. überspannt. Im zweiten Wickelkopf überspringt bzw. überspannt ein Verbindungssteg im Mittel ebenfalls 5 Nuten.

Grundsätzlich können auch erfindungsgemäße Statoren mit einer anderen Polzahl und einer anderen Anzahl von Nuten im Blechpaket bereitgestellt werden. Auch kann die Nute, die von einer U-Formlitze überspannt bzw. eine Anzahl von Nuten, die von einem Verbindungssteg überspannt wird, unterschiedlich sein - unabhängig von den Dimensionen des Blechpakets.

Typische Leistungsdaten einer elektrischen Maschine bzw. eines Elektromotors, der mit einem erfindungsgemäßen Stator ausgestattet ist, sind eine Peak-Leistung in einem Bereich von 100 kW bis 450 kW (Kilowatt), ein Peak-Drehmoment in einem Bereich von 150 Nm bis 650 Nm (Newtonmeter), eine Dauerleistung in einem Bereich von 80 kW bis 300 kW, eine maximale Drehzahl in einem Bereich von 15.000 U/min bis 40.000 U/min (Umdrehungen pro Minute) und eine Betriebsspannung in einem Bereich von 300 V bis 850 V.

Mit einigen der beschriebenen Merkmale gehen u. a. auch folgende Vorteile einher:
- Herstellung einer verdichteten Litze mit unterschiedlichen Querschnittsformen. Damit wird eine Herstellung vergleichsweise kleinerer Wickelköpfe für Motoren einer vorgegebenen Leistungsklasse im Vergleich zu bekannten Motoren ermöglicht.
- Kombination von Leitersegmenten mit verdichtetem Litzenmaterial und zwei lackisolierten Flachleitern. Die Konfiguration von Leitersegmenten ist effizient zur Befüllung eines Bestückungswerkzeugs vorproduzierbar. Mit dem Bestückungswerkzeug können alle Leitersegmente bzw. alle Stableiter gleichzeitig in die Nuten des Blechpakets in axialer Richtung eingeschoben werden.
- Aufbau der Kompaktierung für die Verbindung von Formlitze und Flachdraht mit KupferBand und Hartlot zur Herstellung einer kompakten Fügeverbindung. Damit wird eine mechanisch beständige Verbindung ohne nennenswerten Kontaktwiderstand erzeugt.
- Schräge am Flachleiter für die Herstellung der Kompaktierung. Damit wird sichergestellt, dass alle Einzelleiter nach der Kompaktierung noch durchgängig für elektrischen Strom sind.
- Verwendung sehr dünner (= nicht Standard nach Norm) Drahtlackschichten auf dem Einzeldraht. Damit kann ein Kupferfüllfaktor in den Nuten erhöht werden. Falls erforderlich kann eine äußere Isolation des Leitersegments, insbesondere der Formlitze durch Isolationstape, erhöht werden.
- Im Vergleich zu bekannten Anordnungen mit mehreren, genauer bis zu zehn, in eine Nut einzubringenden, dünnen, flachen Drähten bietet die Formlitze eine erhöhte Steifigkeit. Die Anzahl der Leiter pro Nut kann dank der Verwendung von Formlitzen reduziert werden, insbesondere auf zwei bis vier Stableiter pro Nut. Damit kann der Fertigungsprozess vereinfacht werden, der damit auch weniger fehleranfällig wird.
- Konstruktiver Aufbau der Verschaltung ausgehend von axialem Einfügen der Formlitze inkl. Flachdrähte in die Nuten; Kombination aus U-förmig gebogener Formlitze im ersten Wickelkopf und verschränkten Flachleitern im zweiten Wickelkopf. Es ergeben sich weitere fertigungstechnische Vorteile durch dieses Design.

Die zuvor dargestellten Kombinationen und Ausführungsbeispiele lassen sich auch in zahlreichen weiteren Verbindungen und Kombinationen betrachten.

Beispielsweise kann ein Rotor mit einer Formlitze bzw. einem vorteilhaften hybriden Leitungssegment ausgestattet sein. Ein Stator kann zwei Blechpakete aufweisen, in denen jeweils Stableiter als Formlitzen angeordnet sind und die über Verbindungsstegbrücken bzw. Flachleiter verschaltet sind.

### Figurenkurzbeschreibung

Die vorliegende Erfindung kann noch besser verstanden werden, wenn Bezug auf die beiliegenden Figuren genommen wird, die beispielhaft besonders vorteilhafte Ausgestaltungsmöglichkeiten darlegen, ohne die vorliegende Erfindung auf diese einzuschränken, wobei
Figur 1 ein Beispiel für eine verdrillte Litze aus einem Bündel von Einzelleitern zeigt,
Figur 2 eine Verdichtung einer verdrillten Litze, ähnlich der Litze nach Figur 1, in einem Mittenbereich zeigt,
Figur 3 eine Formlitze, die entlang ihrer Längserstreckung verschiedene Querschnitte aufweist, zeigt, insbesondere eine aus einer aus Figur 2 bekannten Litze hergestellte Formlitze,
Figur 4 ein Beispiel für eine trapezförmige Einzelleiteranordnung einer formgepressten Litze, insbesondere in einer Nut eines Blechpakets angeordnet, zeigt,
Figur 5 ein Beispiel für einen Flachdraht zeigt,
Figur 6 ein Leitungssegment aus einer Formlitze und zwei Flachdrähten zeigt,
Figur 7 schematisch einen Querschnitt durch ein Kompaktierungssegment einer Formlitze in einem Überlappbereich aus Formlitze und Flachdraht zeigt,
Figur 8 schematisch eine Querschnittansicht zeigt, die als rechtwinkliger Schnitt durch das Kompaktierungssegment und den Flachdraht von Figur 7 gebildet ist,
Figur 9 eine Umwicklung eines Leitungssegments mit einem isolierenden Band zeigt,
Figur 10 ein als Hairpin geformtes Leitungssegment zeigt, das aus Flachdraht und Formlitze gebildet einen Hairpin-Hybrid darstellt,
Figur 11 eine Ansicht einer 3-D-Formgebung eines Hairpins nach Figur 10 zeigt,
Figur 12 eine Einfügung von einem Leitungssegment in einen Kern eines Stators zeigt,
Figur 13 ein Beispiel für einen Stator im Aufbau zeigt, bei dem ein erster Wickelkopf an einer Seite des Kerns ausgebildet ist,
Figur 14 einen Querschnitt durch die Statoranordnung nach Figur 13 zeigt,
Figur 15 einen Stator mit einem zweiten Wickelkopf im Aufbau zeigt, bei dem die Flachdrähte miteinander verschränkt sind und ein Laserstrahlschweißen stattfindet,
Figur 16 eine perspektivische Ansicht des aufgebauten Stators aus Figur 15 zeigt,
Figur 17 zwei Anordnungsmöglichkeiten von Antriebssträngen in einem Kraftfahrzeug zeigt,
Figur 18 eine Abfolge verschiedener Verfahrensschritte bei der Herstellung einer elektrischen Maschine,
Figuren 19a und 19b in vereinfachter schematischer Darstellung einen Zusammenbau eines Verschaltungsstegs durch eine stoffschlüssige Verbindung zeigt,
Figur 20 eine erste Formlitze als Verbindungselement von einer Nut zu einer zweiten Nut zeigt,
Figur 21 den aus Figur 20 bekannten Kern mit fünf Formlitzen als Verbindungselementen zwischen verschiedenen Nuten des Kerns zeigt,
Figur 22 eine 3-D-Ansicht des aus Figur 21 bekannten Kerns von der Verbindungsstegbrückenseite zeigt,
Figur 23 eine Alternative einer Wickelanordnung (A) mitsamt einem Schnitt (B) zeigt,
Figur 24 einen vollständig bestückten Kern zeigt,
Figur 25 einen Stator mit einem Rotor zeigt,
Figur 26a und Figur 26b einen Stator in einem Motorgehäuse mit einer Andruckplatte zeigen und
Figur 27a und Figur 27b einen Stator zusammen mit einem Rotor als innere Teile einer elektrischen Maschine zeigen.

### Figurenbeschreibung

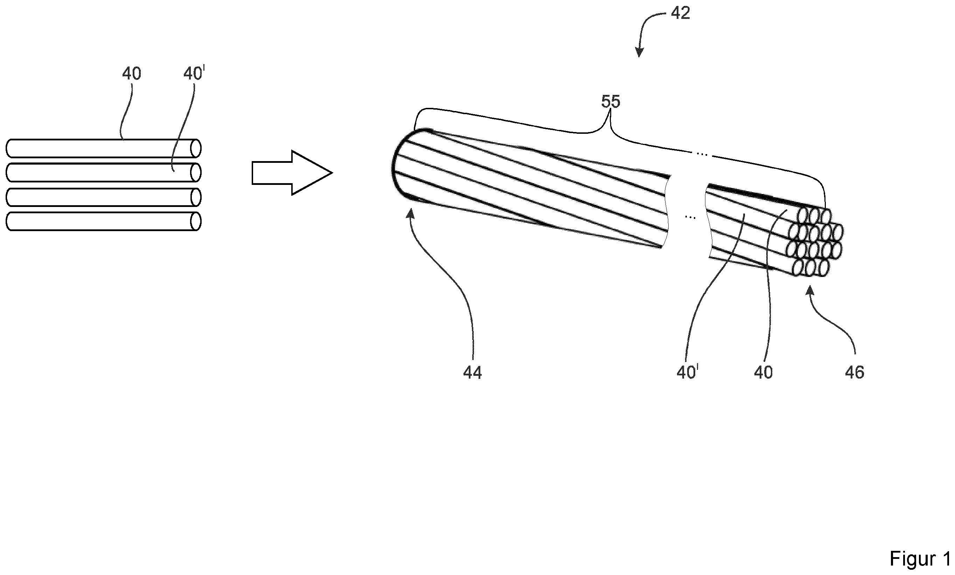

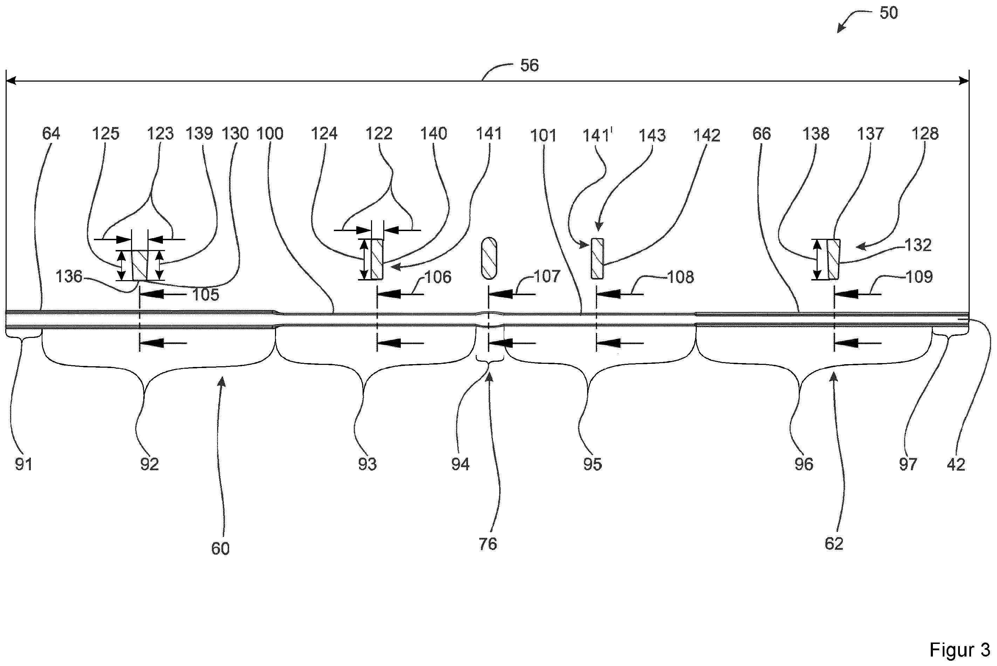

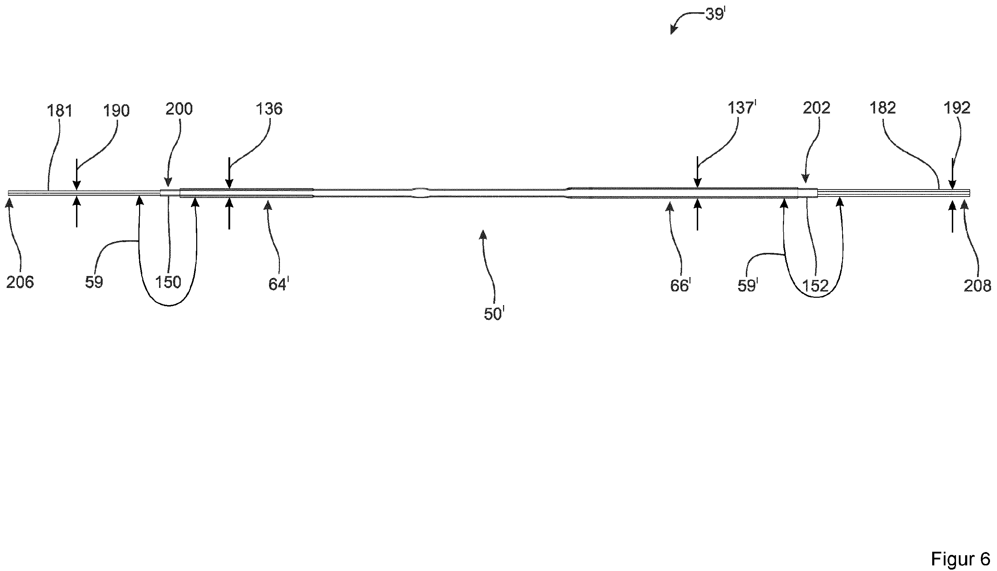

Anhand der Figuren 1 bis 17 lassen sich einzelne Herstellschritte und Produktionszwischenzustände (Halbzeuge) sowie Alternativen zu einzelnen Schritten aus den Darstellungen der Litze 42, der Formlitze 50, 50^{I}, 50^{II}, 50^{III}, des Stators 2, 2^{I}, 2^{II} sowie des Kraftfahrzeugs 500 ableiten. Figur 1 beginnt mit Einzeldrähten 40, 40^{I}, aus denen Formlitzen 50, 50^{I}, 50^{II}, 50^{III} geformt werden können (s. Figur 3; s. Figur 6), die dann in (Kern-)Nuten 8, 10 eines Stators 2, 2^{I}, 2^{II} eingelegt werden können, um durch ggf. weitere (übliche) Herstellschritte eine elektrische Maschine 530, 530', 530^{II} als Teil eines Antriebsstrangs 502 eines Kraftfahrzeugs 500 zu schaffen.

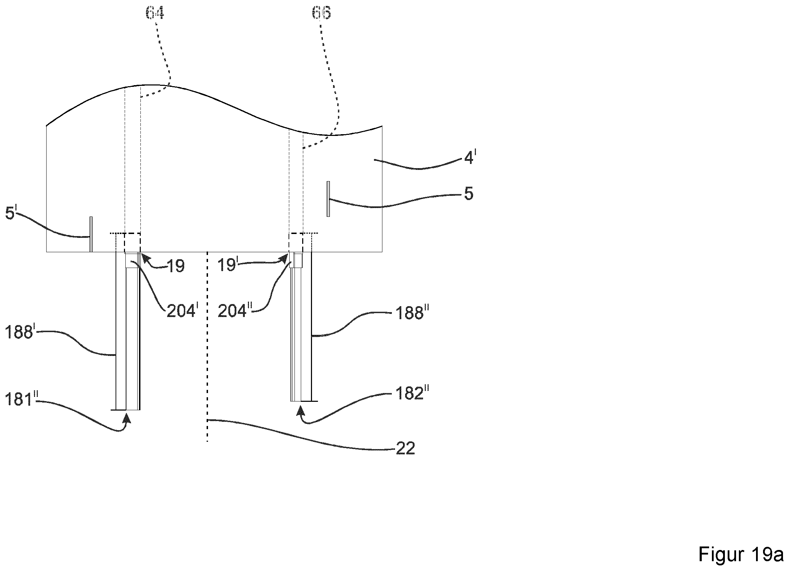

Die Figuren 19a bis 27b zeigen vorteilhafte Weiterentwicklungen, alternative Ausführungsformen und ähnliche Lösungen im Vergleich zu den Figuren 1 bis 16.

Figur 1 zeigt ein Beispiel für eine verdrillte Litze 42, die aus einem Bündel von sechzehn nebeneinander angeordneten Einzeldrähten, wie den Einzeldrähten 40, 40^{I}, gebildet ist. Die Einzeldrähte erstrecken sich von einem ersten Litzenende 44 durchgehend zu einem zweiten Litzenende 46.

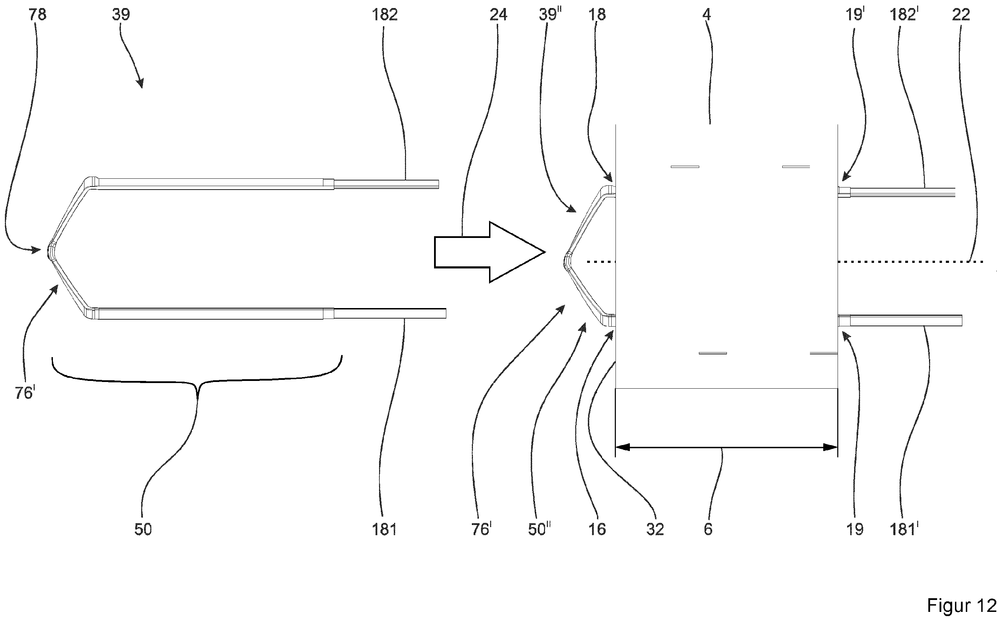

Die Verdrillung der verdrillten Litze 42 kann derart ausgeführt werden, dass die Litze 42 eine ganz bestimmte Schlaglänge 55 von dem ersten Litzenende 44 bis zu dem zweiten Litzenende 46 einhält. Jeder Einzeldraht 40, 40^{I} wird so geflochten bzw. gebogen oder verdrillt, dass die verdrillte Litze 42 an ihrem zweiten Ende 46 genau die gleiche Anordnung der Einzeldrähte 40, 40^{I} besitzt wie am ersten Ende 44 der Litze 42 (d. h. zum Beispiel, der Einzeldraht 40, der am ersten Ende 44 bei 12-Uhr liegt, liegt in der verdrillten Litze 42 am zweiten Ende 46 auf der 12-Uhr-Position - gleichartig beispielsweise der Einzeldraht auf der 3-Uhr-Position, auf der 6 Uhr-Position und auf der 9-Uhr-Position). Anders ausgedrückt, Schlaglänge ist die Länge einer kompletten Drehung oder Windung der Drähte in der Litze um ihre Achse. Idealerweise ist die Schlaglänge 55 auf die Länge 6 des Kerns 4 (vergleiche Figur 1 mit Figur 12) so abgestimmt, dass die Einhaltung der Schlaglänge 55 zu zwei Litzenenden (an den Austrittsöffnungen 19, 19^{I}) führt, die die gleiche Orientierung bzw. Anordnung der Einzeldrähte 40, 40^{I} besitzen.

Vorteilhafterweise hat die herzustellende Formlitze 50^{II} (vgl. Figur 12) eine Verdrillung der Einzeldrähte 40, 40^{I}, die ein ganzzahliges Vielfaches einer Schlaglänge 55 ausmacht, wobei die Schlaglänge 55 einer aktiven Länge 6 des Stators bzw. dessen Kern 4 entspricht (alternativ: einem Vielfachen eines (ganzzahligen) Teilers der aktiven Länge des Stators). Die verdrillte Litze 42, wenn sie als Formlitze 50^{II} ausgeformt ist, hat eine Verdrillung der Einzeldrähte 40, 40^{I}, die ein ganzzahliges Vielfaches einer Schlaglänge 55 ausmacht. Es entspricht somit die Schlaglänge der Länge des Blechpaketes einem ganzzahligen Vielfachen der Blechpaketlänge.

In Figur 2 ist die verdrillte Litze 42 schematisch mit einer geraden Litzenerstreckung 54 wiedergegeben. Im Wege einer Schlaufenformung 80 wird der Litze 42 eine Litzenkrümmung 82 zugefügt. Entlang der Litzenlängserstreckung 54 wird die Schlaufe 81 so eng geformt bzw. gezogen, dass sich ein Spurversatz 86 und eine Quererstreckung 84 herausbildet, die größer ist als ein ursprünglicher Durchmesser der linear längserstreckten Litze (ohne Bezugszeichen).

Die in Figur 3 gezeigte Formlitze 50 weist eine Gesamtlänge 56 auf. Die Formlitze 50 ist über ihre Gesamtlänge 56 mit sieben Segmenten ausgestattet, einem ersten Segment 91, einem zweiten Segment 92, einem dritten Segment 93, einem vierten Segment 94, einem fünften Segment 95, einem sechsten Segment 96 und einem siebten Segment 97. Die Litzensegmente 91, 92, 93, 95, 96, 97 haben zumeist über ihre gesamte Länge einen im Wesentlichen konstanten Querschnitt. Für das zweite Segment 92 wird ein erster Litzenquerschnitt 105 gezeigt. Das dritte Segment 93 weist einen zweiten Litzenquerschnitt 106 auf. In dem vierten Segment 94 ist ein dritter Litzenquerschnitt 107 vorhanden. Das fünfte Segment 95 hat einen vierten Litzenquerschnitt 108. Entlang dem sechsten Litzensegment 96 ist ein fünfter Litzenquerschnitt 109 ausgebildet. Das vierte Litzensegment 94 bildet den Mittenbereich 76 der Formlitze 50. In dem unverpressten Mittenbereich 76 hat die Formlitze 50 gemäß dem dritten Litzenquerschnitt 107 eine länglich, rundliche Form, die auch als eine Ovalform bezeichnet werden kann. An den Mittenbereich 76 bzw. an das vierte Litzensegment 94 grenzen auf einer Seite ein erstes Übergangssegment 100 und auf der gegenüberliegenden Seite ein zweites Übergangssegment 101. Beide Übergangssegmente 100, 101 haben jeweils einen Litzenquerschnitt 106, 108, der eine rechteckige Querschnittsform 140, 142 aufweist. Die rechteckigen Querschnittsformen 140, 142 haben eine gleiche Höhe 124 und eine gleiche Breite 122. An das erste Übergangssegment 100 grenzt ein erster Arm 60, der als erster Stableiter 64 ausgebildet ist. Der erste Stableiter 64 weist eine erste Trapezform 130 auf. Diese Querschnittsform ist an jener Stelle an dem Stableiter 64 abgenommen, die durch den ersten Litzenquerschnitt 105 in der Figur 3 eingezeichnet ist. Die erste Trapezform 130 hat eine erste Höhe 125 und eine maximale Breite 123. Die maximale Breite 123 geht über auf eine kleinste Breite 136 der Trapezform 130. Die erste Trapezform 130 hat eine Höhe 139, die kleiner ist als eine Höhe 138 der zweiten Trapezform 132. An das zweite Übergangssegment 101 grenzt als ein sechstes Litzensegment 96 ein zweiter Arm 62, an dem ein zweiter Stableiter 66 ausgebildet ist. Die Formlitze 50 hat in dem Bereich des zweiten Stableiters 66 als fünften Litzenquerschnitt 109 eine zweite Trapezform 132. Die zweite Trapezform 132 weist eine zweite Höhe 138 auf. Eine größte Breite 137 der zweiten Trapezform 132 ist kleiner als eine größte Breite 123 der ersten Trapezform 130. Die größte Breite 137 der zweiten Trapezform 132 stimmt in etwa überein mit einer kleinsten Breite 136 der ersten Trapezform 130. Die Höhe 125 der ersten Trapezform 130 ist kleiner als die Höhe 138 der zweiten Trapezform 132. Erste Trapezform 130, erste Rechteckform 140, zweite Rechteckform 142 und zweite Trapezform 132 bilden somit eine Abfolge von Querschnittsflächen 128 der Formlitze 50 entlang von deren Gesamtlänge 56. Diese Querschnittsformen 128 sind aus einer Formpressung der Formlitze 50 hervorgegangen. Beide Stableiter 64, 66 sind gleich lang. Die Rechteckformen weisen jeweils Breitseiten 141, 141^{I} auf, die zur Auflage auf andere Breitseiten bestimmt sind. Je nach Position der Formlitze 50 kann die Höhe 124 der Rechteckform 140 auch als Breite 124 der Breitseite 141 bezeichnet werden. Ganz entsprechend kann die kleinere Breite 122, die sich an einer Hochseite, wie der Hochseite 143, befindet, als eine Höhe 122 der Hochseite 143 bezeichnet werden. Die Litze 42 besitzt, nachdem sie zur Formlitze 50 formgepresst worden ist, unterschiedliche Litzenquerschnitte 105, 106, 107, 108, 109.

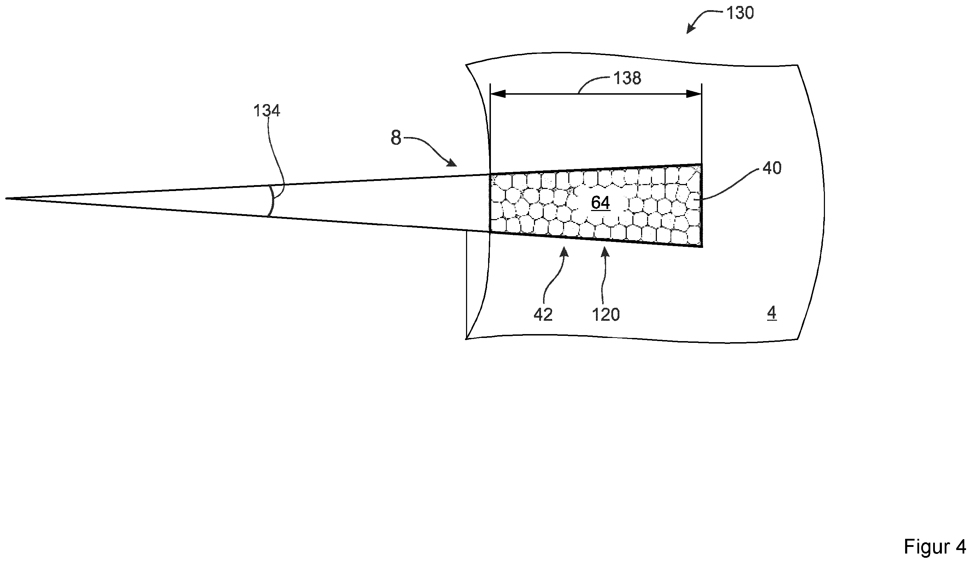

In Figur 4 ist ein Ausschnitt aus einem Kern 4 gezeigt, dessen Stableiter 64 eine Nut 8 auffüllt; außerdem ist in Figur 4 die Trapezform 130 des Stableiters 64 gezeigt, die - wie alle (in Figur 3 gezeigten) Querschnittsflächen 128 - aus der gleichen verdrillten Litze 42 gebildet ist. Somit liegt eine konstante Querschnittsflächengröße 120 vor, die durch alle Einzeldrähte, wie den Einzeldraht 40, bedingt ist. Durch den vorgegebenen Trapezwinkel 134 der ersten Trapezform 130 ist die Höhe der Trapezform 138 bei vorgegebenem Radialabstand festgelegt. In Figur 1 ist auch zu sehen, dass der Einzeldraht 40, so wie die anderen Einzeldrähte (ohne Bezugszeichen), durch das Verpressen eine geringfügige Deformation seiner ursprünglich runden Querschnittsform erlitten hat. Damit ergibt sich eine zusätzliche Verdichtung, die für dickere Einzeldrähte stärker ausfällt, als bei Ausführungsbeispielen, in denen eine entsprechend größere Anzahl dünnerer Einzeldrähte zur Bildung einer Formlitze (wie die Formlitze 50 gem. Figur 3) mit gleicher Querschnittsfläche (nicht gezeigt) verwendet ist.

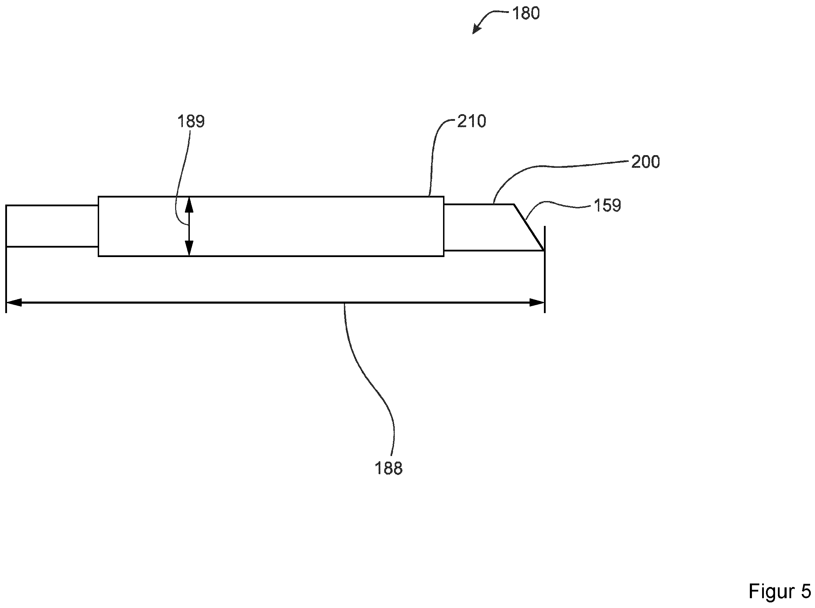

Figur 5 zeigt ein Beispiel für einen Flachdraht 180. Der Flachdraht 180 hat eine Flachdrahthöhe 189 und eine Flachdrahtlänge 188. Ein Endbereich 200 des Flachdrahts 180 ist für einen Kompaktierungsbereich einer Formlitze, wie der Formlitze 50 in Figur 3, abgeschrägt - die Kompaktierungsschräge 159. Jener Endbereich 200 ist, wie der gegenüberliegende Endbereich 206 des Flachdrahts 180, frei von Drahtlackisolation 210. Die Drahtlackisolation 210 erstreckt sich nur entlang des Flachdrahts 180 in einem Bereich, der sich zwischen den Endbereichen 200, 206 erstreckt.

Ein solcher in Figur 5 eher schematisch dargestellter Flachdraht 180 kann am Ende einer aus Figur 3 bekannten Formlitze 50 angeordnet werden.

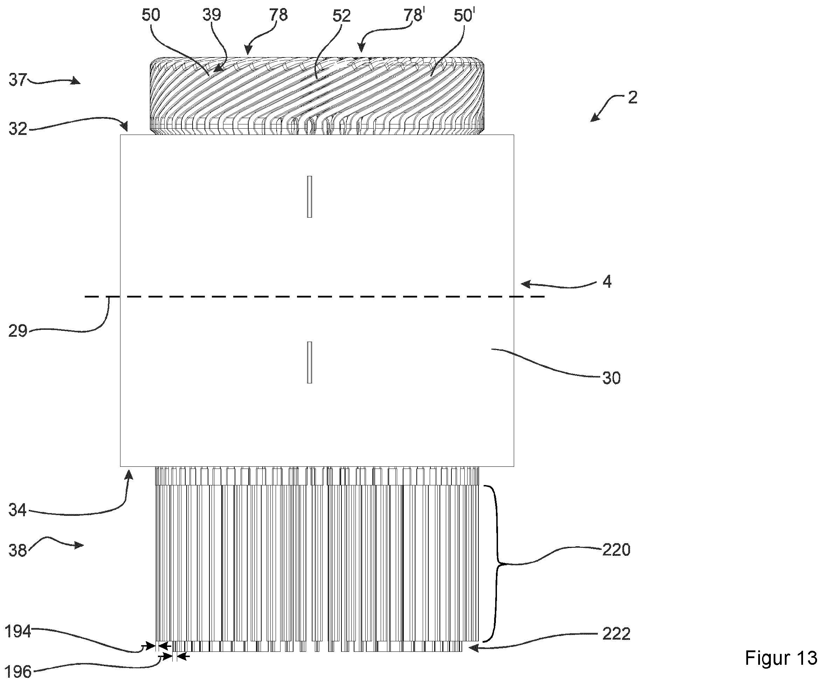

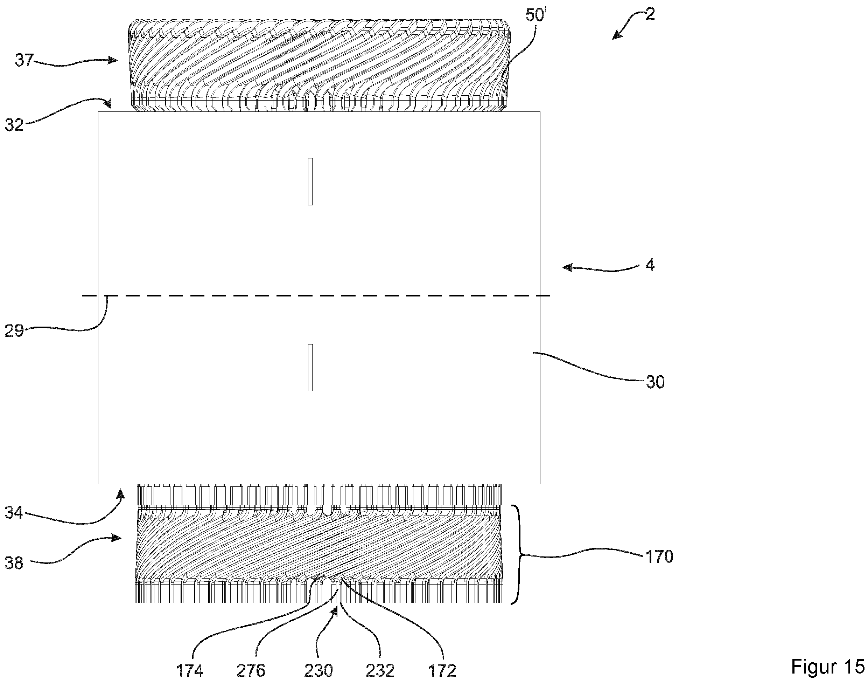

Bei dem in Figur 6 gezeigten Leitungssegment 39^{I} ist eine Formlitze 50^{I} - beidseitig fortsetzend - jedoch mit einem ersten Flachdraht 181 und einem zweiten Flachdraht 182 verbunden (vor einem Einbau der Formlitze 50^{I} in einen Stator (wie dem Stator 2 gem. den Figuren 13 und 15)). Die Flachdrähte 181, 182 schließen mit der Formlitze 50^{I} einen ersten Leitungssegmentwinkel 59 sowie einen zweiten Leitungssegmentwinkel 59^{I} ein. Dieser beträgt in dem vorliegenden Beispiel jeweils ungefähr 180°, kann jedoch auch kleiner sein - bevorzugt zwischen 150° und 180°.

Eine kleinste Breite 136^{I} der Formlitze 50^{I} geht in dem ersten Kompaktierungssegment 150, in dem ein Bereich 200 des ersten Flachdrahts 181 überlappt wird, möglichst stufenlos auf eine erste Breite 190 des ersten Flachdrahts 181 über. Der erste Flachdraht 181 weist einen Flachdrahtendbereich 206 auf, der zugleich einen Endbereich des Leitungssegments 39^{I} bildet. Ein gegenüberliegender Endbereich 208 des Leitungssegments 39^{I} ist an dem zweiten Flachdraht 182 vorhanden. In der vorliegenden Ausführung ist eine Breite 192 des zweiten Flachdrahts 182 größer als eine Breite 190 des ersten Flachdrahts 181. Typischerweise sind die Flachdrähte 181, 182 jedoch in etwa gleich stark. Die Breite 192 des zweiten Flachdrahts 182 geht über in eine kleinste Breite einer zweiten Trapezform 137^{I}, die nahezu stufenlos ausgehend von der Formlitze 50^{I} über ein zweites Kompaktierungssegment 152 an einen Endbereich 202 des zweiten Flachdrahts 182 angelötet ist. In der vorliegenden Ausführung weist ein an der Formlitze 50^{I} ausgebildeter erster Stableiter 64^{I} eine kleinere Länge auf als ein an der gleichen Formlitze 50^{I} ausgebildeter zweiter Stableiter 66^{I}. Typischerweise sind jedoch alle Stableiter 64^{I}, 66^{I} in etwa gleich lang.

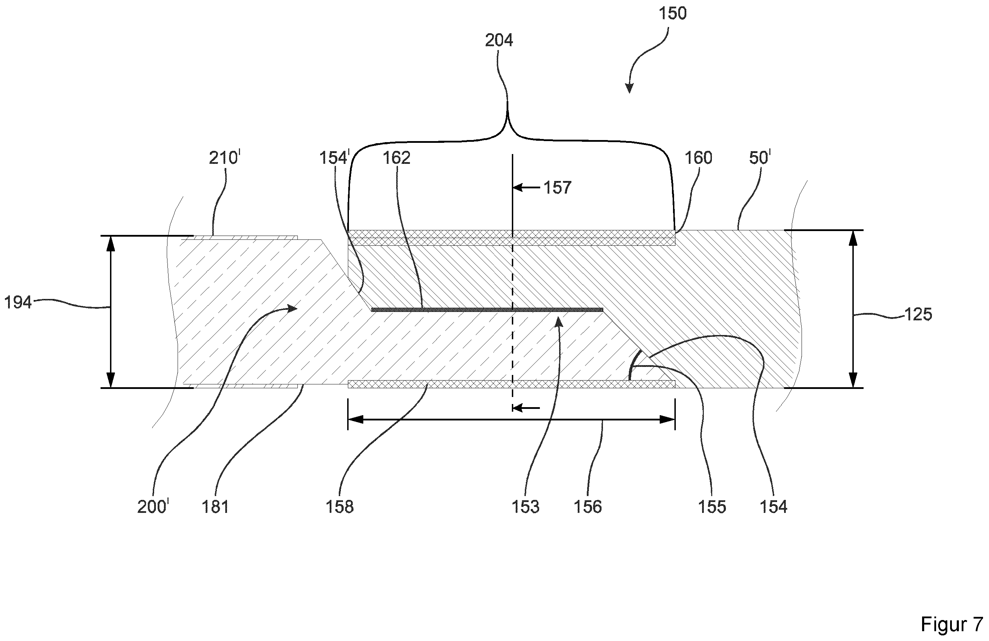

In Figur 7 ist das erste Kompaktierungssegment 150 nach Figur 6 detailreicher herausgezeichnet. Die Formlitze 50^{I} weist eine Höhe 125 auf, die nahezu gleich einer Höhe 194 des ersten Flachdrahts 181 ist. Die Höhe 194 des ersten Flachdrahts 181 schließt eine Isolatorschicht 210^{I} ein, die durch einen Drahtlack gebildet ist. In dem Flachdrahtendbereich 200^{I} sind eine erste Segmentkontaktschräge 154 und eine zweite Segmentkontaktschräge 154^{I} eingearbeitet. Die Segmentkontaktschrägen 154, 154^{I} weisen einen Schrägungswinkel auf, wie z. B. den Schrägungswinkel 155 der ersten Schräge 154. Die Schrägungswinkel der Segmentkontaktschrägen können gleich oder voneinander abweichend sein. Vorliegend ist der Schrägungswinkel 155 abweichend von dem nicht näher bezeichneten Schrägungswinkel der Segmentkontaktschräge 154^{I}. Der Schrägungswinkel 155 ist spitzer als der entsprechende Winkel der Schräge 154^{I}. Damit ist der Flachdrahtendbereich 200^{I} abgestuft. Zwischen den Segmentkontaktschrägen 154, 154^{I} erstreckt sich eine Segmentkontaktfläche 153, auf der ein Hartlot 162 zwischen der Formlitze 50^{I} und dem ersten Flachdraht 181 angeordnet ist. Die aus Figur 5 bekannte Kompaktierungsschräge 159 ist hier also abgestuft umgesetzt - mit zwei Segmentkontaktschrägen 154, 154^{I} und einer dazwischenliegenden Segmentkontaktfläche 153. In einem Überlappbereich 204 zwischen dem ersten Flachdraht 181 und der Formlitze 50^{I} sind Flachdraht 181 und Formlitze 50^{I} mit einem Kupferband 158 umwickelt. Das Kupferband 158 hat eine stabilisierende Wirkung, die dadurch noch befördert ist, dass das Kupferband 158 im Bereich der Formlitze 50^{I} als eine überlappende Doppelschicht 160, auch bezeichnet als Kupferband-Überlappung 160, gelegt ist. Das Kompaktierungssegment weist eine vorgegebene Kompaktierungslänge 156 auf, die insbesondere größer ist als die Höhe 125 der Formlitze 50^{I}.

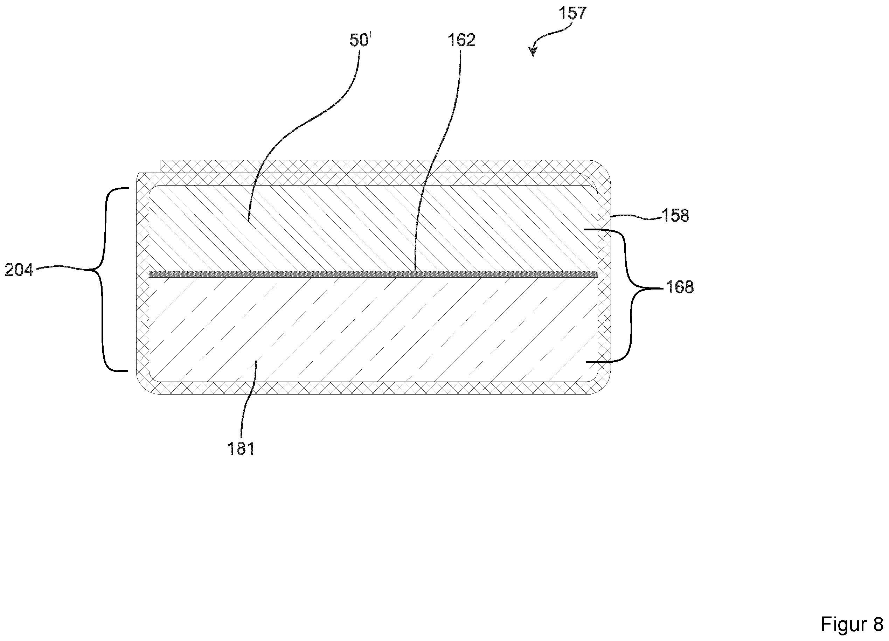

Ein Querschnitt 157 aus Figur 7 ist in Figur 8 dargestellt. Der Querschnitt 157 zeigt den Überlappbereich 204 zwischen der Formlitze 50^{I} und dem ersten Flachdraht 181, umgeben von dem Kupferband 158 und als Zwischenschicht das Hartlot 162. Die Formlitze 50^{I} und der zweite Flachdraht 182 sind in gleicher Weise, wie in Figur 7 und 8 für den ersten Flachdraht 181 gezeigt ist, miteinander verbunden. Über das Hartlot 162 wird eine elektrische Verbindung 168 von der Formlitze 50^{I} zum ersten Verschaltungsstegabschnitt 181 gebildet.

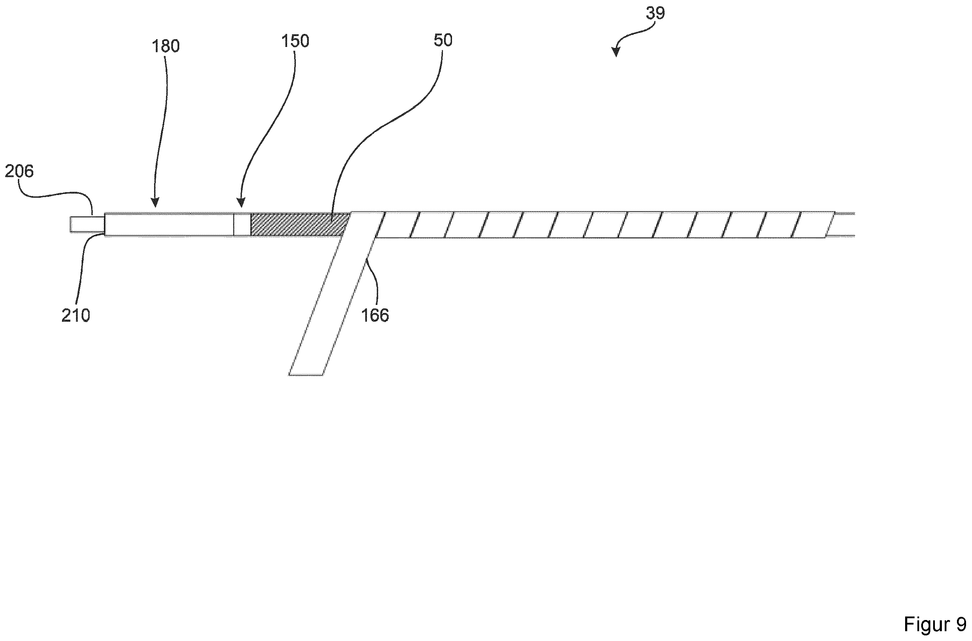

Aus Figur 9 geht hervor, dass ein Leitungssegment 39, dessen Einzeldrahtisolierung innerhalb der Formlitze 50 als nicht ausreichend erachtet wird, zusätzlich mit einem isolierenden Band 166, wie einem Gewebeband, umwickelt sein kann. Das isolierende Band 166 kann die gesamte Formlitze 50 einschließlich Kompaktierungssegmenten, wie das erste Kompaktierungssegment 150, überdecken. Der - aus Figur 5 bekannte - Flachdraht 180 ist mit einer Drahtlackisolation 210 ausgestattet, wobei nur der Flachdrahtendbereich 206 des Flachdrahts 180 frei von der Drahtlackisolation ist.

Die in Figur 9 gezeigte Umwicklung einer Formlitze, wie der Formlitze 50, kann auch auf eine Kombination aus Formlitze 50^{I} und Flachdraht 181 übertragen werden, die aus Figur 7 bekannt ist.

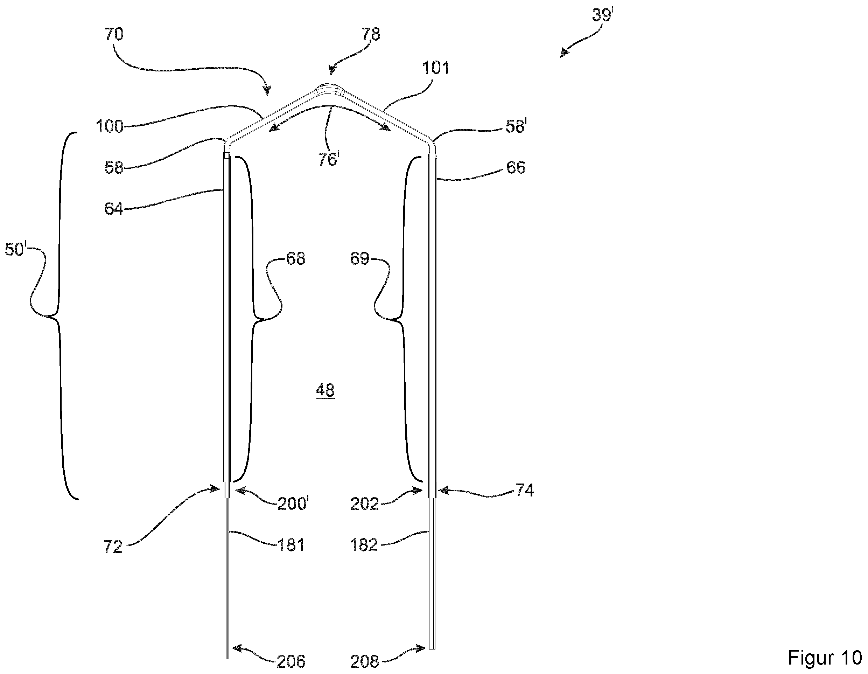

Ein Leitungssegment 39^{I} ist in Figur 10 in einer zur Haarnadel 70 gekrümmten, U-artigen Form gezeigt. In einem Formlitzenkopfbereich 78, der im Mittenbereich 76^{I} der Formlitze 50^{I} angeordnet ist, sind das erste Übergangssegment 100 und das zweite Übergangssegment 101 der Formlitze 50^{I} zueinander abgewinkelt. Eine Litzenbiegung 58 ist zwischen dem ersten Übergangssegment 100 und dem ersten Stableiter 64 vorhanden. Der erste Stableiter 64 hat eine Stableiterlänge 68. Die Stableiterlänge 68 des ersten Stableiters 64 gleicht der Stableiterlänge 69 des zweiten Stableiters 66. Der zweite Stableiter 66 setzt an einer zweiten Litzenbiegung 58^{I} das zweite Übergangssegment 101 fort. Der erste Stableiter 64 und der zweite Stableiter 66 erstrecken sich parallel zu einander. Ein erster Endbereich 72 der Formlitze 50^{I} liegt einem Endbereich 200^{I} des ersten Flachdrahts 181 lateral gegenüber und ist mit diesem metallschlüssig verbunden. Der erste Endbereich 72 der Formlitze 50^{I} ist für die (bzw. bei der) Herstellung der Verbindung mit dem ersten Flachdraht 181, kompaktiert. Entsprechend zum ersten Endbereich 72 der Formlitze 50^{I} ist ein zweiter Endbereich 74 der Formlitze 50^{I} ebenfalls kompaktiert und mit einem Endbereich 202 des zweiten Flachdrahts 182 metallschlüssig verbunden. Somit ist das Leitungssegment 39^{I} ein elektrisch durchgängiger Verbund aus einer Formlitze 50^{I} und zwei Flachdrähten 181, 182. An den Flachdrähten 181, 182 befinden sich jeweils Flachdrahtendbereiche 206, 208, die zugleich die isolatorfreien Endbereiche des Leitungssegments 39^{I} bilden. Die Übergangssegmente 100, 101 und die Stableiter 64, 66 liegen in (bzw. auf) einer Formlitzenebene 48.

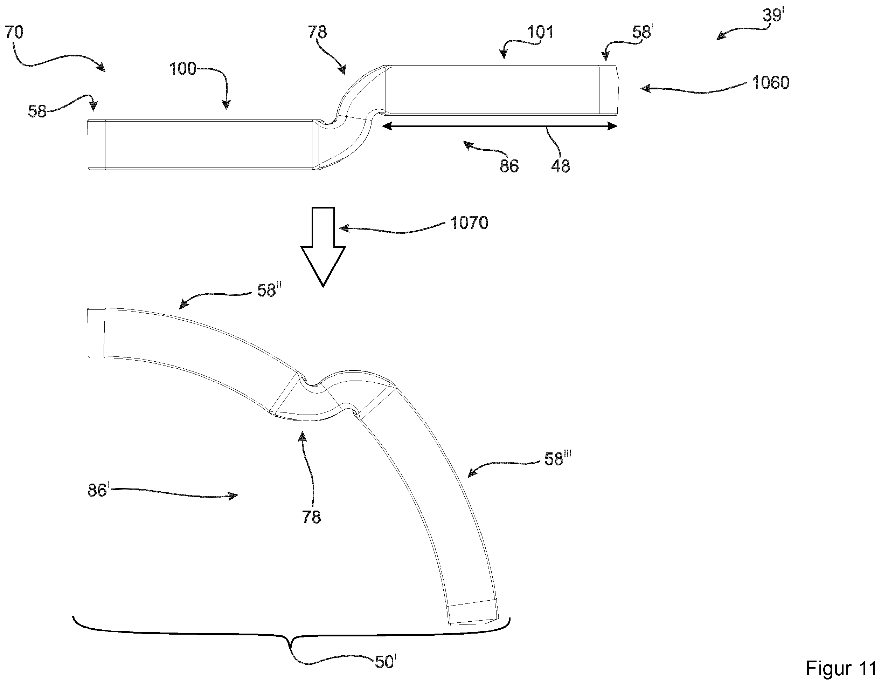

Wird ausgehend von Figur 10 eine Blickrichtung auf das Leitungssegment 39^{I} zum Formlitzenkopfbereich 78 hin, d. h. entlang der Längen 68, 69 der Stableiter 64, 66 gewählt, ergibt sich die Ansicht des Leitungssegments 39^{I} von Figur 11.

In Figur 11 ist von dem Leitungssegment 39^{I} in der gewählten Ansicht das erste Übergangssegment 100 zu sehen, von dem die Formlitze 50^{I} (siehe Fig. 10) über den Formlitzenkopfbereich 78, der als einer Art Gelenkstelle ausgebildet ist, zu dem zweiten Übergangssegment 101 führt. Die beiden Übergangssegmente 100, 101 erstrecken sich mit einem ersten Spurversatz 86. In der gewählten Darstellung der Haarnadel 70 nach Figur 11 sind wegen den Litzenbiegungen 58, 58^{I} die Stableiter und Flachdrähte der Haarnadel 70 aus Figur 10 nicht zu sehen. Die in Figur 10 bzw. Figur 11 gezeigte Haarnadel 70 ist das Ergebnis einer 2-D-Umformung 1060 (in einer Ebene ausgeführte "Linear-Umformung"). In einer 3-D-Umformung 1070 (in allen drei Raumrichtungen ausgeführte "Linear-Umformung") wird das Leitungssegment 39^{I} bzw. dessen Formlitze 50^{I} zu einem vergrößerten Spurversatz 86^{I} umgeformt. Bei der Umformung wird neben dem Mittenbereich 78 dem ersten Übergangssegment 100 eine dritte Krümmung 58" und dem zweiten Übergangssegment 101 eine vierte Krümmung 58^{III} beigebracht. Hierbei werden insbesondere die Stableiter (siehe Stableiter 64, 66 in Figur 10) in eine für eine Einfügung in den Kern geeignete Position verdreht. Wird Bezug auf die Formlitzenebene 48 von Figur 10 genommen, befinden sich die Stableiter 64, 66 zwar nach der 3-D-Umformung 1070 gemäß Figur 11 noch in jener Ebene 48, doch führen die Übergangssegmente 100, 102 aus der Formlitzen- bzw. Stableiterebene 48 heraus.

Wenden wir uns einer aus Figur 3 bekannten Formlitze 50 wieder zu, so kann gemäß Figur 12 eine Einführung des Leitungssegments 39 in einer Längs- bzw. in einer Axialrichtung 24 entlang einer Rotorachse 22 vonstattengehen. Die Rotorachse 22 erstreckt sich mittig durch den Kern 4. Der Kern 4 bzw. das Blechpaket 4 hat eine festgelegte Länge 6. Das Leitungssegment 39 wird entlang der Rotorachse 22 gleichzeitig in eine erste Eintrittsöffnung 16 und in eine zweite Eintrittsöffnung 18 eingesteckt. Auf diese Weise gelangt der Mittenbereich 76^{I} der Formlitze 50^{II} (und auch der Formlitze 50) an die eine Stirnseite 32 des Kerns 4. Das Einführen des Leitungssegments erfolgt mit dessen Flachdrähten 181, 182 voran, bis sich von dem Leitungssegment 39 oberhalb des Blechpakets 4, wie an einem zweiten Leitungssegment 39^{II} ersichtlich ist, nur noch der Formlitzenkopfbereich 78 abhebt. Die Formlitze 50^{II} überragt die Länge des Kerns 6. Das zweite Leitungssegment 39^{II} ist bereits in den Kern 4 eingesteckt, sodass dessen Formlitze 50^{II} sich bereits in dem Kern 4 befindet und dessen Flachdrähte 181^{I}, 182^{I} aus dem Kern 4 bzw. den zu den Eintrittsöffnungen 16, 18 gehörenden Austrittsöffnungen 19, 19^{I} herausragen.

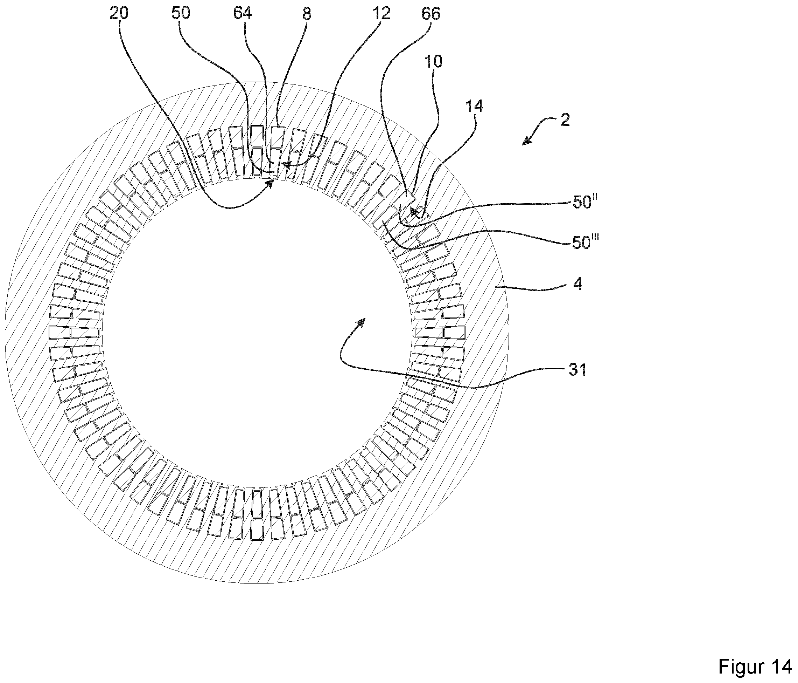

Wenn der Kern 4 komplett mit Leitersegmenten, wie dem Leitersegment 39 (bzw. der Formlitze 50^{I}), bestückt ist, ergibt sich die Ansicht eines Stators 2 gemäß Figur 13. Auf einer ersten Seite 32 des Kerns 4 ist ein erster Wickelkopf 37 ausgebildet, an dem Formlitzenkopfbereiche, wie ein erster Formlitzenkopfbereich 78 und ein zweiter Formlitzenkopfbereich 78^{I}, einen räumlichen Abschluss bilden. Von einer zweiten Seite 34 des Kerns 4 erstrecken sich eine erste Gruppe von Flachdrähten 220 und eine zweite Gruppe von Flachdrähten 222 weg, die der Ausbildung eines zweiten Wickelkopfs 38 dienen. Der Mantel 30 des Kerns 4 befindet sich demnach zwischen dem ersten Wickelkopf 37 und dem zweiten Wickelkopf 38. Die Flachdrähte der ersten Gruppe 220 haben jeweils eine erste Höhe 194 und die Flachdrähte der zweiten Gruppe 222 haben jeweils eine zweite Höhe 196. Die zweite Höhe 196 ist größer als die erste Höhe 194. Ein Querschnitt 29 durch den mit Leitungssegmenten, wie das Leitungssegment 39, bestückten Kern 4 von Figur 13 ist in Figur 14 gezeigt.

Gemäß Figur 14 führen Spalte, wie der Spalt 20, die in einer rotorseitigen Kerninnenwand 31 des Stators 2 eingelassen sind, in Kernnuten, wie die erste Kernnut 8 und die zweite Kernnut 10. Figur 14 zeigt einen Schnitt durch alle in den Kern 4 eingesteckten, trapezförmigen Stableiter, wie die Stableiter 64, 66, hindurch. Eine einzelne Formlitze erstreckt sich beispielsweise, laut Figur 13 in dem ersten Wickelkopf 37 verbunden, von einem ersten Radialbereich 12, einem inneren Radialbereich 12 der ersten Kernnut 8, zu einem zweiten Radialbereich 14, einem äußeren Radialbereich 14 der zweiten Kernnut 10. In einer einzelnen Nut, wie der Nut 8 und der Nut 10, sind innere Stableiter, wie der Stableiter 64, dicht zusammengepackt mit äußeren Stableitern, wie dem Stableiter 66. In einer Kernnut, wie der Kernnut 10 sind jeweils zwei unterschiedliche Formlitzen, wie die Formlitzen 50, 50^{II}, angeordnet. Eine erste Formlitze 50 steckt mit ihrem Stableiter 64 in der ersten Nut 8 radial nahe der Innenwand 31. Eine zweite Formlitze 50^{II} steckt in der zweiten Nut 10 radial fern der Innenwand 31. Außerdem steckt eine weitere Formlitze 50^{III} in der zweiten Nut 10 radial nahe der Innenwand. Damit ist die zweite Nut 10 gut gefüllt.

Bei dem in Figur 15 in einem fortgeschrittenen Fertigungsstadium gezeigten Stator 2 sind ausgehend von der Anordnung des Stators 2 in Figur 13 im zweiten Wickelkopf 38 die Stegverschaltungen 170 ausgebildet. Zuvor waren die Formlitzen (wie die Formlitze 50, die Formlitze 50^{I} und die Formlitze 52) eingelegt worden. Nebeneinander angeordnet sind mehrere Verschaltungsstege, wie die Verschaltungsstege 172, 174, die jeweils eine durch Laserstrahlschweißen 230 hergestellte metallschlüssige Verbindung 232 an einer Kontaktfläche 276 aufweisen (vgl. Figur 15).

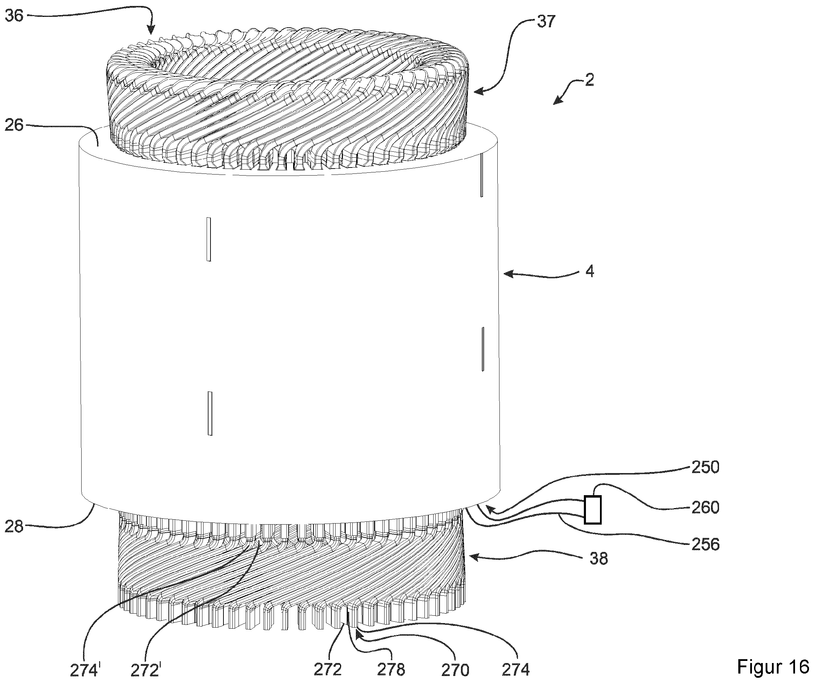

Figur 16 zeigt eine perspektivische Ansicht des fertiggestellten Stators 2, bei dem eine Wicklung durch den Kern 4 hindurch von dem ersten Wickelkopf 37, der auf der ersten Stirnfläche 26 sitzt, zu dem zweiten Wickelkopf 38, der auf der zweiten Stirnfläche 28 angeordnet ist, durch den Kern 4 hindurch verläuft. Die Wicklungen 36 erstrecken sich, mit anderen Worten, von dem ersten Wickelkopf 37 zum zweiten Wickelkopf 38 und von dem zweiten Wickelkopf 38 zum ersten Wickelkopf 37. Der zweite Wickelkopf weist mehrere Verschaltungsstegabschnitte 272, 272^{I}, 274, 274^{I} auf. An allen Y-Konfigurationen wie der Y-Konfiguration 270 sind ein erster Verschaltungsstegabschnitt 272 und ein zweiter Verschaltungsstegabschnitt 274 im Bereich von deren Kontaktstellen, wie der Kontaktstelle 278, miteinander verschweißt. Aufgrund von der durchgeführten Verschränkung von allen Verschaltungsstegabschnitten, wie den Verschaltungsstegabschnitten 272, 272^{I}, 274, 274^{I} des zweiten Wickelkopfs 38, überkreuzen sich Verschaltungsstegabschnitte, wie ein hinterer Verschaltungsstegabschnitt 272^{I} und ein vorderer Verschaltungsstegabschnitt 274. Eine Überkreuzung entsteht dadurch, dass beide aus einer gemeinsamen Nut (nicht einsehbar) heraus weiterführenden Verschaltungsstegabschnitte 272^{I}, 274^{I} für alle Nute in gegenläufige Richtungen abgebogen sind. Das Abbiegen erfolgte im Wege des Verschränkungsprozesses für die Ausbildung der Wicklung(en). Von einem Wicklungsende 250 führt eine Kontaktierungslitze 256 zu einem Steckverbinder 260, der eine elektrische Verbindung mit einem Inverter (nicht dargestellt) ermöglicht.

Die anhand der Formlitzen 50, 50^{I} erläuterten Ausgestaltungsmöglichkeiten, einen einfachen Flachdraht 180 oder als Alternative einen komplexer gestalteten Flachdraht 181, 182 an die Formlitze 50, 50^{I} anzuschließen (mit oder ohne isolierendes Gewebeband 166 (siehe Figur 9)), wobei die Formlitze 50, 50^{I} wenigstens drei verschiedene Formlitzensegmente besitzt (ebenso kann sie aber auch mehr als drei verschiedene Formlitzensegmente besitzen, z. B. fünf Formlitzensegmente oder z. B. sogar neun verschiedene Formlitzensegmente), kann auch beliebig kombiniert werden. Es ist sogar möglich, wie in Figur 13 gezeigt, verschiedenartige Formlitzen 50, 50^{I}, 52 in einem Stator 2 zu verbauen.

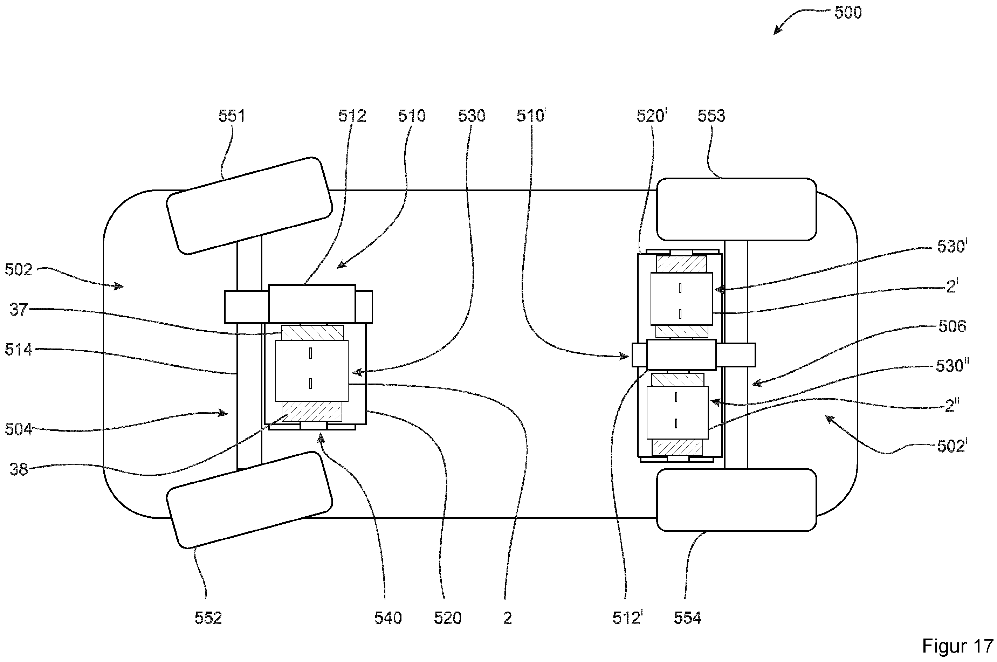

In Figur 17 ist schematisch ein Kraftfahrzeug 500 dargestellt, das mit vier Rädern 551, 552, 553, 554 ausgestattet ist. Zwei Räder 551, 552 sind lenkbar. Die Räder 551, 552 sind mit einem ersten Antriebsstrang 502 verbunden. Zu dem Antriebsstrang 502 an der Vorderachse 504 gehört eine Drehmomentübertragungsvorrichtung 510. Die Drehmomentübertragungsvorrichtung umfasst ein Getriebe 512. Antriebswellen, wie die Antriebswelle 514 leiten Drehmoment zu den Straßenrädern 551, 552. In einem Gesamtgehäuse 520 sind das Getriebe 512 und eine elektrische Maschine 530 angeordnet. Die elektrische Maschine 530 umfasst einen Stator 2. Der Stator 2 ist an dem Gesamtgehäuse 520 befestigt. In dem Stator 2 steckt ein Rotor 540, von dem das Getriebe 512 antreibbar ist. Der erste Wickelkopf 37 des Stators 2 ist in Nachbarschaft zu dem Getriebe 512 positioniert. Aufgrund von einer geringeren Höhe des ersten Wickelkopfs 37 im Vergleich zum zweiten Wickelkopf 38 sitzt das Blechpaket des Stators 2, in dem der Rotor 540 sitzt, besonders nahe bei dem Getriebe. Damit ist eine besonders querkraftarme Ankopplung der elektrischen Maschine 530 an das Getriebe 512 ermöglicht.

Ein zweites Beispiel für einen Antriebsstrang 502^{I\} ist bei dem Kraftfahrzeug 500 an der Hinterachse 506 angeordnet und dient dem Antrieb von zwei hinteren Straßenrädern 553, 554. In einem Gesamtgehäuse 520^{I} sitzen eine erste Elektromaschine 530^{I}, die einen ersten Stator 2^{I} aufweist, und eine zweite Elektromaschine 53^{II}, die einen zweiten Stator 2^{II} aufweist. Beide Elektromaschinen 530^{I}, 530^{II} können einem Getriebe 512^{I} jeweils ein Drehmoment zuführen, um über eine Drehmomentübertragungsvorrichtung 510^{I} zwei Straßenräder 553, 554 anzutreiben. Alle Elektromaschinen 530, 530', 530^{II} sind mit einer geeigneten Stromversorgung, z. B. über je einen Inverter (nicht dargestellt), für eine Elektromaschine verbunden.

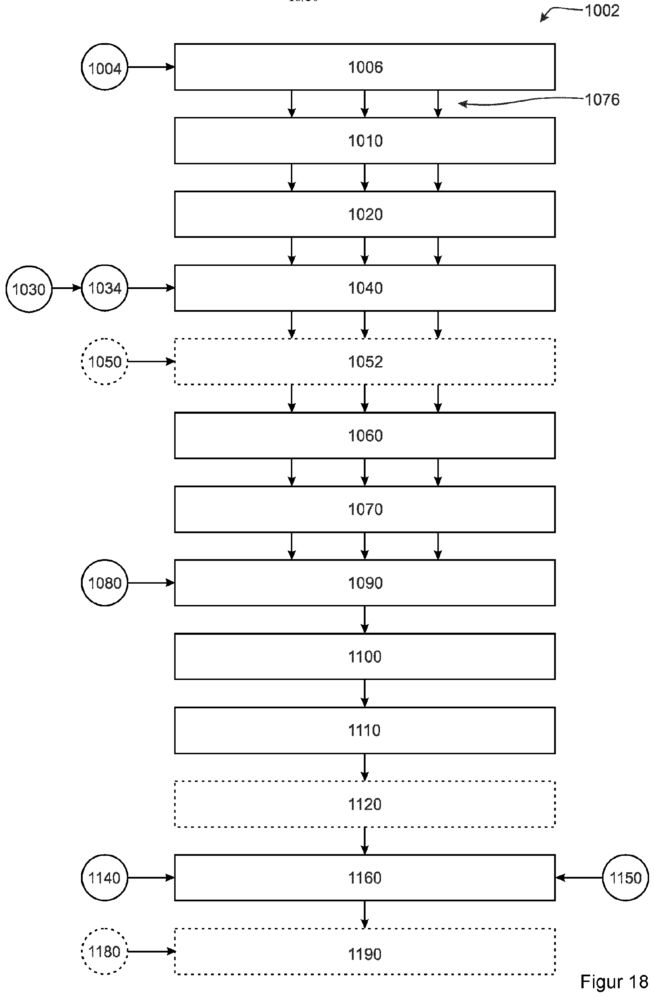

In einem vorteilhaften Verfahren 1002 kann, je nachdem bis zu welchem Schritt das Verfahren abgearbeitet wird, die Herstellung eines Leitungssegments 39, 39^{I}, 39^{II}, eines Stators 2, 2', 2^{II}, 2^{III} bzw. einer Elektromaschine 530, 530', 530^{II} erfolgen (vgl. Figuren 10, 12, 13, 15, 17). Als Ausgangspunkt erfolgt eine Bereitstellung von isoliertem Kupferdraht (Verfahrensschritt 1004). Eine vorgegebene Anzahl von Einzeldrähten wird abgelängt und zu einer Litze verdrillt (Verfahrensschritt 1006). Statt von Verdrillen kann, je nach bevorzugter Ausführungsweise, auch von Verwürgen oder Verseilen gesprochen werden. Durch paralleles Ausführen in dem Verfahrensschritt 1076 kann eine Vielzahl von Litzendrähten (vgl. Litzendraht gem. Figur 1) hergestellt und weiterverarbeitet werden. Die Litzendrähte werden zur Bildung eines Spulenkopfes umgeformt (Verfahrensschritt 1010). Die Umformung 1010 erfolgt mittels einer Verdrehung der Litze 42 in einer loopingartigen Schlaufe 81 (vgl. Figur 2). Es folgt - was Figur 4 auch zu entnehmen ist - eine Verdichtung der jeweiligen Litze 42 in unterschiedliche Querschnittssegmente (Verfahrensschritt 1020). Bei der Verdichtung kann auch eine Umformung, z. B. durch ein Verpressen sowie ein Kompaktieren erfolgen. Daneben wird eine zur Litzenanzahl doppelte Anzahl von Flachdrahtstücken (siehe z. B. Flachdrahtstücke 180, 181, 182 gem. den Figuren 5, 6, 7 und 8) bereitgestellt (Verfahrensschritt 1030) und jedes Flachdrahtstück, wie die Flachdrahtstücke 180, 181, 182, erfährt eine Überarbeitung eines Endbereichs, um das Flachdrahtstück mit einer Schräge am Ende auszustatten (Verfahrensschritt 1034) und ggf. am Endbereich vorhandenen Drahtlack zu entfernen (vgl. Figur 7). In einem Folgeschritt 1040 wird jede Formlitze mit jeweils zwei Flachdrahtstücken, ein Flachdraht an jedem Ende der Formlitze, verschweißt bzw. verlötet - je nach bevorzugter Ausführungsweise (vgl. Figur 6). Aufgrund des parallelen Ausführens 1076 liegt damit eine vorgegebene Anzahl von Leitungssegmenten vor. Optional kann, wie aus Figur 9 zu entnehmen ist, ein Isolationstape bereitgestellt werden (Verfahrensschritt 1050) und das Leitungssegment kann mit dem Isolationstape umwickelt werden (Verfahrensschritt 1052). Anschließend erfolgt, wie anhand der Figur 10 zu sehen ist, eine Umformung des Leitungssegments in eine U-Form (Verfahrensschritt 1060, bei der es sich um eine 2-D-Form handelt. In einem Folgeschritt 1070 wird das Leitungssegment zur Ausbildung einer 3-D-Form abgewinkelt bzw. abgerundet, wodurch das Leitungssegment zu einem Spulensegment wird (vgl. Figur 11). Diese Umformschritte sind z. B durch Biegen, Freiformen bzw. Gesenkformen - je nach bevorzugter Vorgehensweise - ausführbar. Aufgrund der parallelen Ausführung gem. dem Verfahrensschritt 1076 liegt damit eine vorgegebene Anzahl von Spulensegmenten vor. In einem Folgeschritt 1080 erfolgt die Bereitstellung eines Blechpakets, in das die Spulensegmente in einer Axialrichtung in die Nute des Blechpakets für die Ausbildung der Spulenwicklung eingefügt werden 1090 (vgl. Figur 12 sowie Figur 14). Es folgt - das ist der Verfahrensschritt 1100 - ein Verschränken der von dem Blechpaket abstehenden Flachdrähte (vgl. Figur 13 sowie Figur 15). Das Verschränken erfolgt durch eine Umformung, wie durch ein Biegen. Anschließend werden, so wie in Figur 15 gezeigt, die verschränkten Flachdrähte in deren freien Endbereichen miteinander verschweißt (Verfahrensschritt 1110). Das Verschweißen kann z. B. mittels Strahlschweißen, Laserstrahlschweißen, Elektronenstrahlschweißen oder WIG-Schweißen durchgeführt werden. An dem Blechpaket sind nunmehr ein erster Wickelkopf und ein zweiter Wickelkopf vorhanden, die optional durch Anwendung einer Axialkraft stärker kompaktiert werden können (Verfahrensschritt 1120). Nacheinander werden, wie im Verfahrensschritt 1140 gezeigt, zu dem erstellten Stator Anschlussleitungen bereitgestellt (vgl. Figur 16) und Isolationsmittel bereitgestellt (Verfahrensschritt 1150). In einem Weiterverarbeitungsschritt 1160 werden zunächst die Anschlussleitungen an die Wicklungen des Stators angeschweißt (bzw. angelötet, vorzugsweise in gleicher Weise wie die zuvor beschriebene Verbindung zwischen einem Flachdraht und einer Formlitze). Ein anschließendes Vergießen der Wicklungen mit einem Isolationsmittel kann optional durchgeführt bzw. ausgelassen werden. Außerdem kann der Stator durch Imprägnieren oder Wirbelsintern behandelt werden, um den Stator für anspruchsvolle Umgebungsbedingungen vorzubereiten. Danach erfolgt in der Regel eine EOL(End-Of-Line)-Funktions- und Qualitätskontrolle der Fertigung des Stators. In einem weiterführenden Schritt 1190 wird für die Herstellung einer Elektromaschine (vgl. Figur 18) der produzierte Stator mit einem bereitgestellten Rotor zu einer Endmontage kombiniert (Verfahrensschritt 1180).

Werden die Figur 13 und die Figur 15 nebeneinander gelegt, so ist zu sehen, dass der erste Wickelkopf 37, der sich an der ersten Seite 32 des Kerns 4 befindet, schon seine endgültige Form als Verbindung bzw. Verbindungsmittel zwischen einzelnen Stableitern von sich aus eingenommen hat, jedoch der zweite Wickelkopf 38 an der zweiten Seite 34 des Kerns 4 erst noch zu verschränken ist, um den "halbfertigen" Stator 2 mit seinen Gruppen 220, 222 von Flachdrähten zu einem Stegverschaltungen 170 aufweisenden Wickelkopf 38 dadurch zu formen, dass die verschränkten Verschaltungsstegbrücken 172, 174 durch ein Strahlschweißen 230 mit elektrischen Durchkontaktierungen ausgebildet wird. Die beiden Seiten 32, 34 des Kerns 4 sind Spiegelflächen an dem mittig angeordneten Statorquerschnitt 29 des Kerns 4. Weil die Mantelfläche 30 des Kerns 4 die Stableiter in seinem Inneren verdeckt, sind letztlich nur noch die Wickelköpfe 37, 38, so wie in Figur 15 dargestellt, zu sehen.

Figur 19a zeigt ein Blechpaket 4^{I}. Das Blechpaket 4^{I} zeigt anhand seiner Markierungen 5, 5^{I} (Markierungen 5, 5^{I}, wie Einkerbungen, Sicken, Nasen oder Schlagstellen, zur Bekanntgabe der Walzrichtung der Bleche des Blechpakets 4^{I}), wie das Blechpaket 4^{I} aus Einzelblechen zusammengesetzt ist; woraus sich Hinweise auf den magnetischen Fluss in dem Kern bzw. in dem Blechpaket 4^{I} und den zu erwartenden Wirbelstromverlusten ergeben. Der Kern 4^{I} hat eine ganze Reihe an Austrittsöffnungen 19, 19', in deren Bereich jeweils der Überlappbereich 204^{I}, 204^{II} zwischen einem im Inneren des Kerns 4^{I} liegenden Stableiter (Stableiter 64, 66 nicht in der Ansicht der Figur 19a zu sehen; vgl. Figur 3; vgl. Figur 6) und dem Verschaltungsstegabschnitt 181^{II}, 182^{II} ausgebildet ist. Der Verschaltungsstegabschnitt 181^{II} hat eine Flachdrahtlänge 188', die größer ist als die Flachdrahtlänge 188^{II} des zweiten Flachdrahts 182".

Die Verschaltungsstegabschnitte 181", 182" sind regelmäßig verteilt um die Rotorachse 22 angeordnet. Das Blechpaket 4^{I} ist ein Hohlzylinder, der in der in Figur 19a dargestellten Ansicht von oben nur (die ersten beiden, d. h.) zwei Verschaltungsstegabschnitt 181", 182" (von einer ganzen Reihe während des Zusammenbaus eines Stators 2 (vgl. Figur 13) anzubringender Verschaltungsstegabschnitte) darstellt.

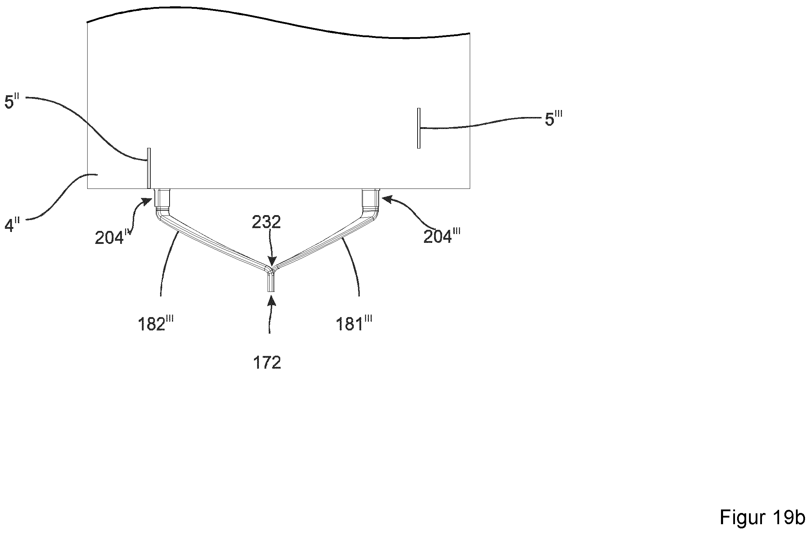

Figur 19b zeigt Verschaltungsstegabschnitte 181^{III}, 182^{III} in einer zusammengefügten, elektrisch leitenden Verbindung der ersten Verschaltungsstegbrücke 172. Anhand der Figur 19b lässt sich auch gut das Zusammenfügen der Verschaltungsstegabschnitte 181^{III}, 182^{III} dank der metallisch (stoff-)schlüssigen Verbindung 232 erkennen. Aus dem Blechpaket 4^{II} mit seinen äußeren Nasen als Markierungen 5^{II}, 5^{III} reichen die im Inneren liegenden Stableiter im Umfang bzw. in der Länge der Überlappbereiche 204^{III}, 204^{IV} hinaus, um in die Verschaltungsstegabschnitte 181^{III}, 182^{IV} überzugehen. Die Stableiter in den Überlappbereichen 204^{III}, 204^{IV} sind vor der Fügung mit den Verschaltungsstegabschnitten 181^{III}, 182^{IV} kompaktierte Formlitzenabschnitte.

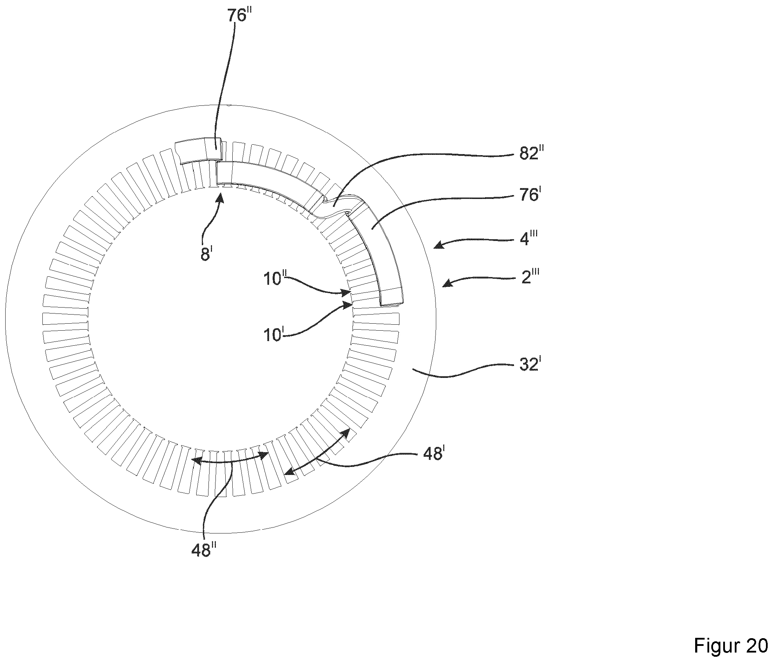

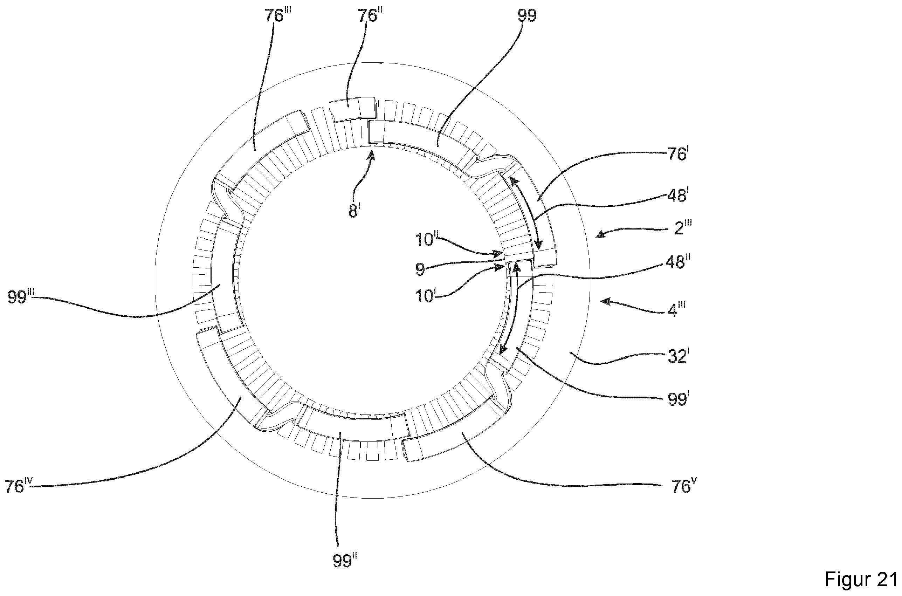

Die Figuren Figur 20, Figur 21, Figur 22 zeigen eine zweilagige Anordnung eines Formlitzen-Hairpin-Hybrids (in vereinfachter Darstellung mit zunächst nur zwei Mittenbereichen 76', 76" im Kern 4^{III} des Stators 2^{III} (Figur 20) und im weiteren Ausbau bzw. Aufbau des Stators 2^{III} dann mit nur vier Formlitzenschenkel 99, 99^{I}, 99^{II}, 99^{III}, die die Mittenbereiche 76^{I}, 76^{III}, 76^{IV}, 76^{V} bilden (Figur 21), also mit zwei Formlitzenebenen 48', 48". Somit gibt es eine innere Formlitzenebene 48^{II} und eine äußere Formlitzenebene 48^{I}.

Auf einer ersten Seite 32^{I} des Blechpakets 4^{III} wird, wie sich durch eine Zusammenschau der Figur 20 mit der Figur 21 ergibt, - nach und nach - ein Formlitzen-Hairpin-Hybrid in die Nuten 8^{I}, 10^{I}, 10^{II} eingelegt, sodass der Mittenbereich 76^{I}, 76^{II}, 76^{III}, 76^{IV} auf der ersten Seite 32^{I} aufliegt. Die Formlitzenschenkel 99, 99^{I}, 99^{II}, 99^{III} stehen über dem Kern 4^{III} an der ersten Seite 32^{I} hinaus. Der Kern 4^{III} wird durch die Formlitzen-Hairpin-Hybride axial verlängert.

In Figur 20 ist anhand der beiden Mittenbereiche 76^{I}, 76^{II} die zweilagige Anordnung der Formlitzen in den Kernnuten 8^{I}, 10^{I} angedeutet (auf den beiden Formlitzenebenen 48^{I}, 48^{II}). Wenn die Formlitzen reihum alle Nuten 8^{I}, 10^{I}, 10^{II} (siehe auch Figur 21) belegen, wenn also alle Formlitzen eingebracht sind, ist eine erste Formlitzenebene 48^{I} und eine zweite Formlitzenebene 48^{II} ausgebildet. Jede Nut ist von einer nächsten Nut durch eine Nutwand 9 getrennt. Die in Figur 20 an dem Mittenbereich 76^{I} markierte Krümmung 82^{II} schafft Ausgleichsmöglichkeiten für Kernnuten 8^{I}, 10^{I}, 10^{II}, deren exakte Lage toleranzbehaftet ist.

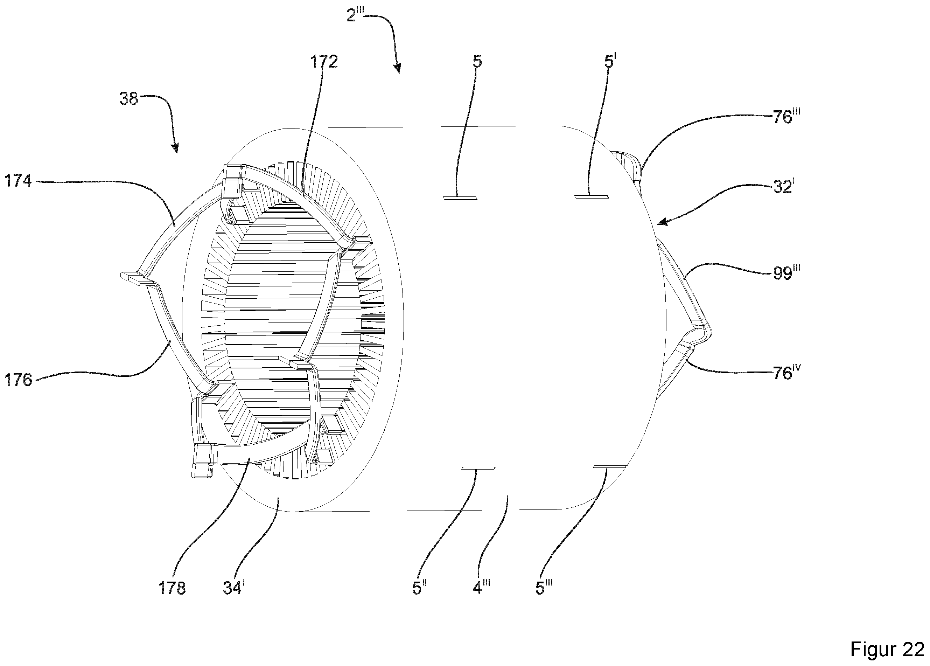

In der 3-D-Ansicht, die in Figur 22 gezeigt ist, ist die Anordnung der Mittenbereiche 76^{III}, 76^{IV} auf der einen Seite 32^{I} des Kerns 4^{III} zu sehen, während auf der anderen Seite 34^{I} des Kerns 4^{III} die Verschaltungsstegbrücken 172, 174, 176, 178 über das Blechpaket 4^{III} hinausragen. Der eine Wickelkopf 37 wird durch Mittenbereiche 76', 76^{II}, 76^{III}, 76^{IV}, 76^{V} der Formlitzen (siehe z. B. Formlitze 50^{I}, dargestellt in Figur 10) gebildet. Der andere Wickelkopf 38 wird durch die Verschaltungsstegbrücken 172, 174, 176, 178 gebildet, sofern die Verschaltungsstegbrücken 172, 174, 176, 178 ordnungsgemäß formschlüssig gefügt sind.

Beim Zusammenbauen eines Stators 2^{III} helfen die Markierungen 5, 5^{I}, 5", 5^{III} bei der Erkennung, welche Seite die erste Seite 32^{I} des Kerns 4^{III} ist und welche Seite die zweite Seite 34^{I} des Kerns 4^{III} ist. Die erste Seite 32^{I} ist die Aufnahmeseite für die Mittenbereiche 76^{I}, 76^{II}, 76^{III}, 76^{IV}, 76^{V} der Formlitzen (siehe Formlitze 50 gem. Figur 12).

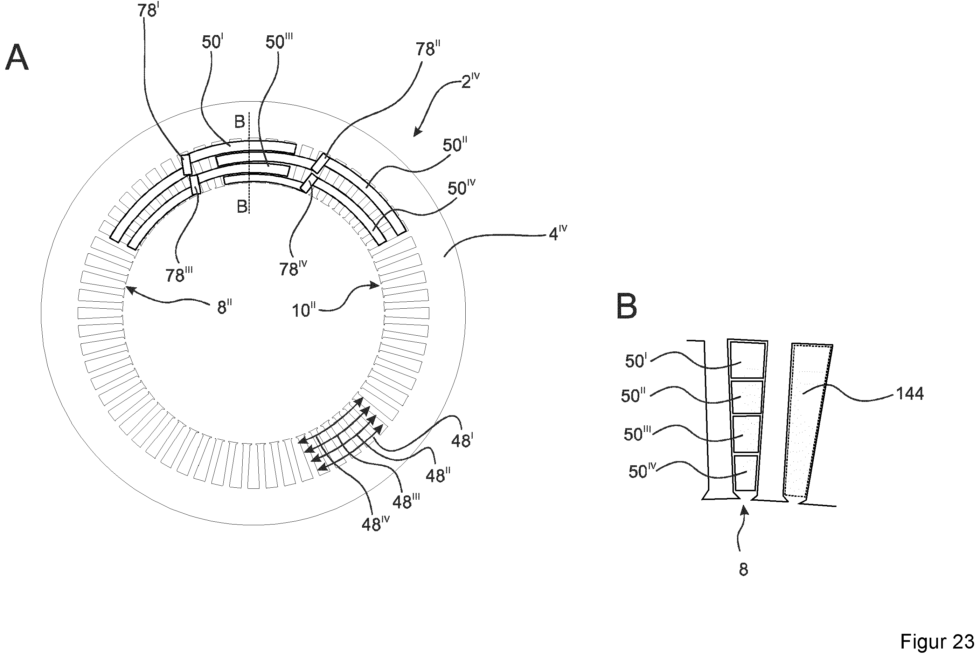

Figur 23 zeigt einen Kern 4^{IV} eines Stators 2^{IV} mit einer vierschichtigen Formlitzenanordnung. In jeder Kernnut 8^{II}, 10^{II} sind vier Formlitzen 50^{I}, 50^{II}, 50^{III}, 50^{IV} mit ihren Formlitzenkopfbereichen 78^{I}, 78^{II}, 78^{III}, 78^{IV} vorhanden. Jede Formlitze erstreckt sich hierbei über zwei Formlitzenebenen 48^{I}, 48^{II}, 48^{III}, 48^{IV}; über den jeweiligen Formlitzenkopfbereich erfolgt der Wechsel der Ebene. Wie in Figur 23B zu sehen ist, füllen die Stableiter der Formlitzen 50^{I}, 50^{II}, 50^{III}, 50^{IV} durch ihre (vier) Lagen die Nuten 8^{II}, 10^{II} aus. Es wurde beispielhaft ein Schnitt herausgenommen, wobei die Nut mit dem Bezugszeichen 8 bezeichnet worden ist. Dem Schnitt in Figur 23B lässt sich ebenfalls die Trapezform der Stableiter entnehmen - die Stableiter werden in eine Form gebracht, die optimal die Nuten 8, 10 ausfüllt. Anstelle von Trapezform kann man auch von einer Keildrahtform sprechen. Der Querschnitt einer Statornut 144 ist in Figur 23B mit gestrichelter Linie zur Hervorhebung desselben eingetragen. Es ist zu sehen, dass die Statornut im Querschnitt ebenfalls - grob gesprochen - die Form eines Trapezes hat; exakter bezeichnet könnte man von einem Trapezoid bzw. unregelmäßigen Viereck sprechen.

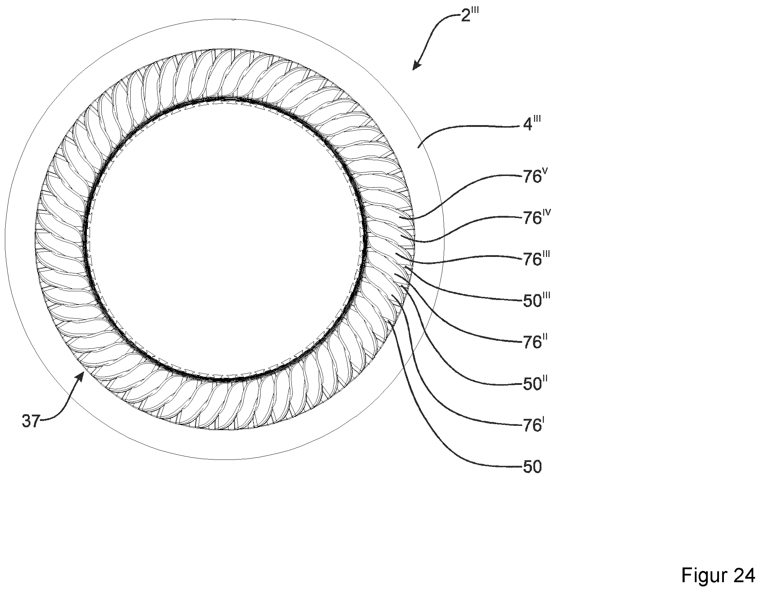

Wird der Stator 2^{IV} weiter mit Formlitzen und Verschaltungsstegbrücken ausgestattet (vgl. Figuren 20, 21 und 22), sieht bei einer Vollbestückung des Stators 2^{IV} der Kern 4^{IV} so oder ähnlich wie der Stator 2^{III} in Figur 24 aus, wenn der Stator in einer Draufsicht betrachtet wird.

Wie aus Figur 24 zu sehen ist, liegen die Mittenbereiche 76^{I}, 76^{II}, 76^{III}, 76^{IV}, 76^{V} der Formlitzen 50, 50^{II}, 50^{III} (s. auch Figur 14) übereinander. Die Formlitzen 50, 50^{II}, 50^{III} überdecken sich und verdecken sich auf diese Weise gegenseitig. Es entsteht ein kompakter Wickelkopf 37.

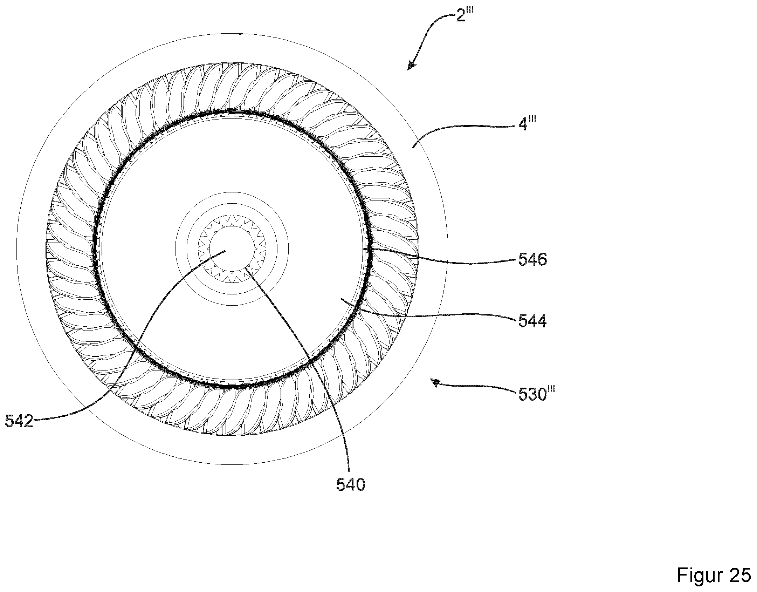

Soll aus dem Stator 2^{III} mit seinem Blechpaket 4^{III}, bekannt aus Figur 24, eine Elektromaschine 530^{III} werden, so fehlt unter anderem noch die Ausstattung mit einem Rotor 540. In Figur 25 ist von einer Stirnseite aus betrachtet der Stator 2^{III} mit dem Rotor 540 dargestellt. Zu dem Rotor 540 gehört eine Rotorwelle 542, die eine gestufte Welle ist, und ein Rotorblechpaket 544. Das Rotorblechpaket 544 ist mit einem Luftspalt 546 im Zentrum des Stators 2^{III} angeordnet. Wird der Stator 2^{III}, der sich um seinen Kern 4^{III} herum aufbaut, mit einem Rotor 540 ausgestattet, so ergibt sich eine Elektromaschine 530^{III}, ähnlich zu der in Figur 25 gezeigten. Die Steckverzahnung des Rotors 540, die in Figur 25 zu sehen ist, ist eine mögliche Realisierung des Rotors 540 im Inneren bzw. durch die Zentralachse des Kerns 4^{III} verlaufend.

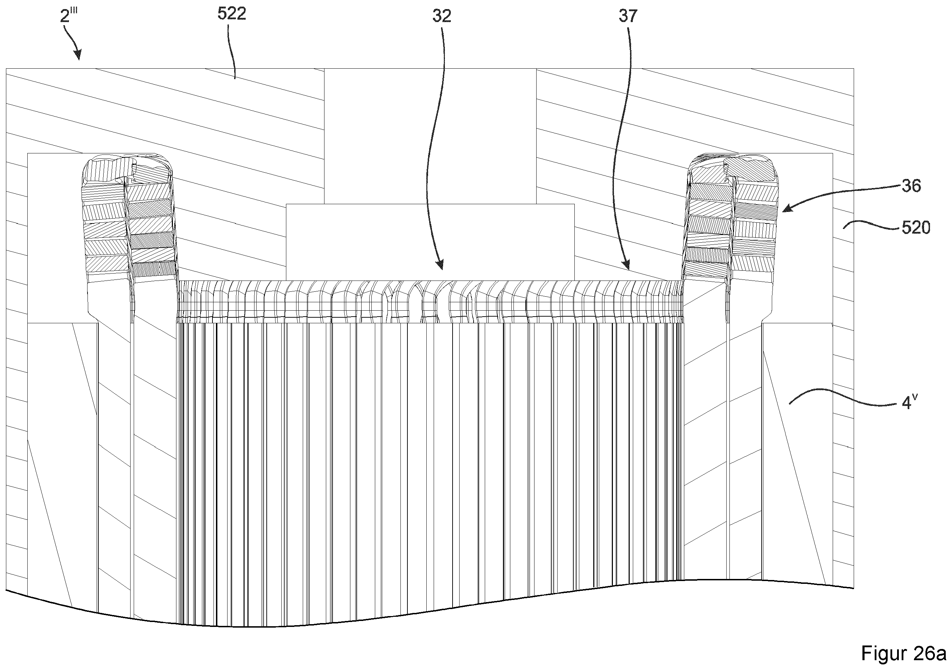

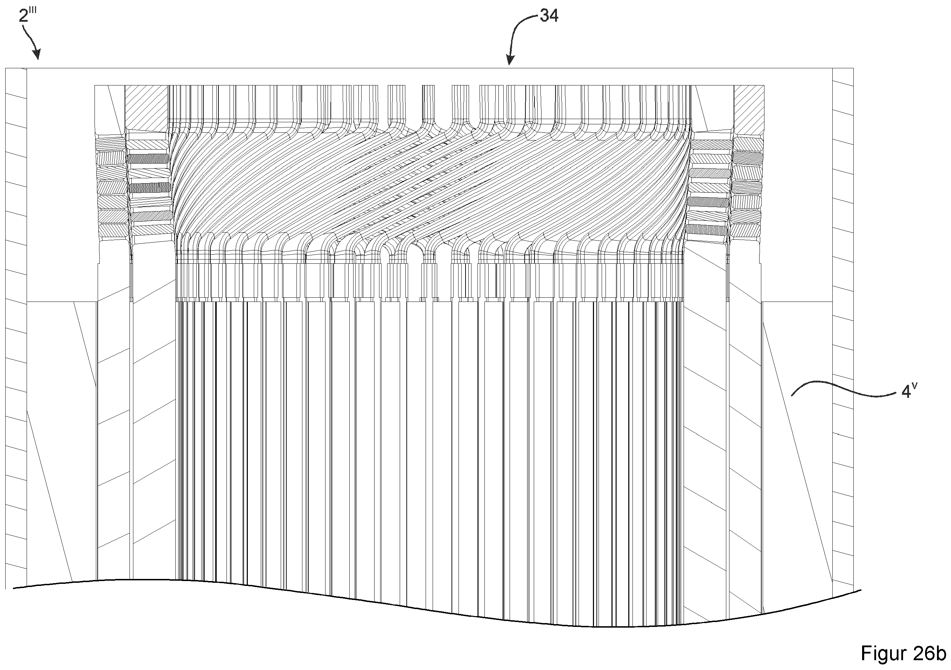

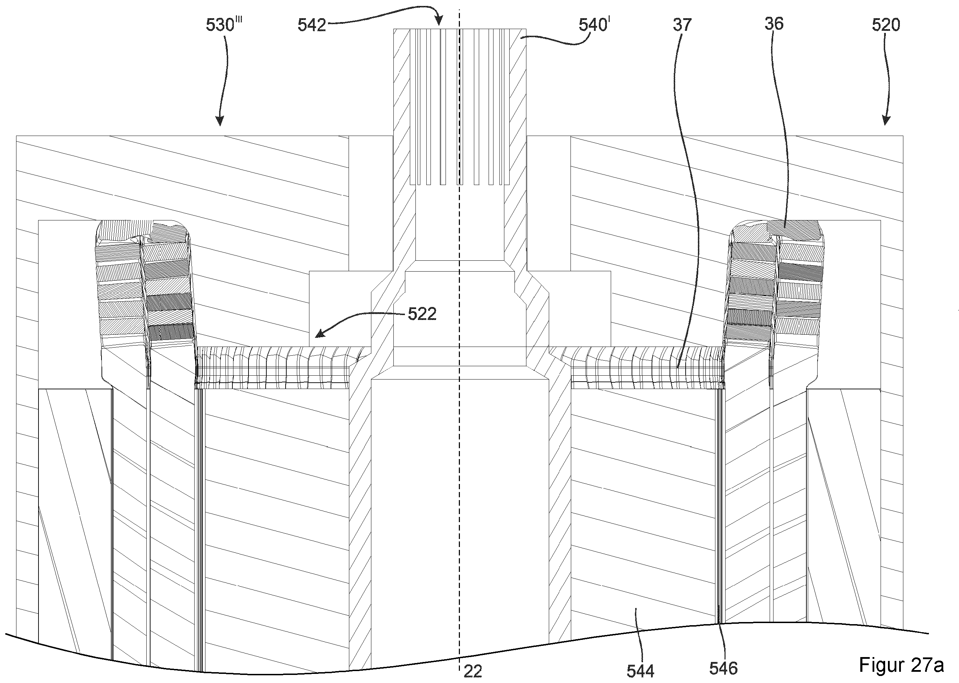

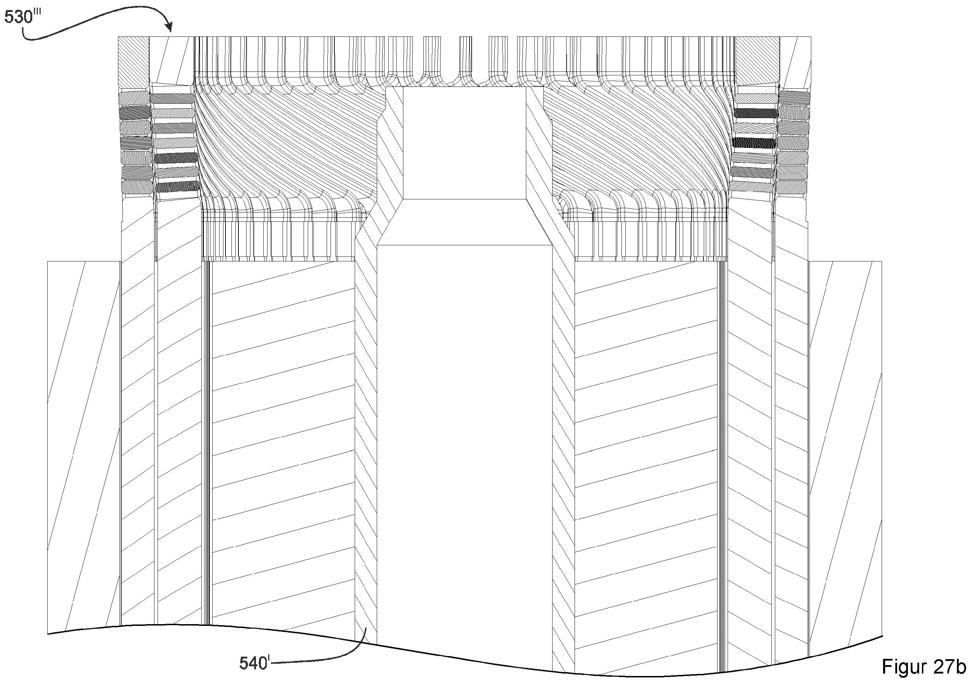

Entsprechende Schnittansichten, einmal ausschließlich ein Stator 2^{III} und einmal ein mit einem Rotor 540^{I} ausgestatteter Stator 2^{III}, sind entlang der Rotorachse 22 geschnitten in den Figuren 26a, 26b, 27a, 27b dargestellt.

Die Figuren 26a und 26b zeigen einen Stator 2^{III}, einmal von der "Verschaltungsstegbrückenseite" (siehe Figur 26b) und einmal von der "Formlitzenkopfbereichsseite" (siehe Figur 26a) aus. Die Figuren 27a und 27b zeigen den aus den Figuren 26a und 26b bekannten Stator 2^{III} mit einem integrierten Rotor 540'. Der Rotor 540^{I} ist durch den Luftspalt 546 von der Wicklung 36 des Stators 2^{III} beabstandet.

In den Figuren 26a und 27a ist die Statorwicklung 36 auf der ersten Seite 32 mit einem kompaktierten Wickelkopf 37 dargestellt. Die Kompaktierung erfolgt durch eine in das Gesamtgehäuse 520 bzw. in den Kern 4^{V} integrierte Andruckplatte 522. In einem Mittenbereich der Formlitzen werden dieselben durch die Andruckplatte 522 gegen das Blechpaket gedrückt und dadurch verdichtet.

In der besonders bevorzugten Ausführung ist die Andruckplatte 522 ein Teil des Gehäuses 520 und somit in die elektrische Maschine integriert. Bei der und durch die Montage der elektrischen Maschine erfolgt somit eine Verdichtung des Wickelkopfes 37. Bei der fertig montierten Maschine sind die Formlitzen somit noch weiter verdichtet.

Die in den einzelnen Figuren gezeigten Ausgestaltungsmöglichkeiten lassen sich auch untereinander in beliebiger Form verbinden. Wenn beispielsweise von einem ersten Segment 91, einem zweiten Segment 92 einem dritten Segment 93 etc. gesprochen wird, so ist eine derartige, insbesondere durchzählende, Nummerierung vertauschbar, ohne dass damit von dem beschriebenen Gegenstand abgewichen ist.

### Bezugszeichenliste

- 2, 2^{I}, 2^{II}, 2^{III}, 2^{IV}: Stator
- 4, 4^{I}, 4^{II}, 4^{III}, 4^{IV}, 4^{V}: Kern, insbesondere Blechpaket
- 5, 5^{I}, 5^{II}, 5^{III}: Blechpaketmarkierung
- 6: Länge des Kerns, insbesondere Länge des Blechpakets
- 8, 8^{I}, 8^{II}: Nut, insbesondere erste Kernnut
- 9: Nutwand
- 10, 10^{I}, 10^{II}: zweite Kernnut
- 12: erster Radialbereich
- 14: zweiter Radialbereich
- 16: erste Eintrittsöffnung, insbesondere erster Nuteingang
- 18: zweite Eintrittsöffnung, insbesondere zweiter Nuteingang
- 19, 19^{I}: Austrittsöffnung, insbesondere Nutausgang
- 20: Spalt
- 22: Rotorachse, wie eine Drehachse durch den Stator
- 24: Längsrichtung
- 26: erste Stirnfläche bzw. erste Stirnseite
- 28: zweite Stirnfläche bzw. zweite Stirnseite
- 29: Statorquerschnitt
- 30: Mantelfläche, wie ein Außenmantel
- 31: Kerninnenwand, insbesondere rotorseitige Innenwand eines Blechpakets,
- 32, 32^{I}: erste Seite des Kerns
- 34, 34^{I}: zweite Seite des Kerns
- 36: Wicklung, insbesondere Windungsbereich
- 37: erster Wickelkopf
- 38: zweiter Wickelkopf
- 39, 39', 39": Leitungssegment
- 40, 40^{I}: Einzeldraht, insbesondere lackisolierter Litzendraht
- 42: verdrillte Litze
- 44: erstes Litzenende
- 46: zweites Litzenende
- 48, 48^{I}, 48^{II}, 48^{III}, 48^{IV}: Formlitzenebene, insbesondere Stableiterebene
- 50, 50^{I}, 50^{II}, 50^{III}, 50^{IV}: Formlitze, insbesondere erste Formlitze
- 52: Formlitze, insbesondere zweite Formlitze
- 54: Litzenlängserstreckung
- 55: Schlaglänge
- 56: Gesamtlänge der Formlitze
- 58, 58^{I},58^{II}, 58^{III}: Litzenbiegung
- 59: erster Leitungssegmentwinkel
- 59^{I}: zweiter Leitungssegmentwinkel
- 60: erster Arm
- 62: zweiter Arm
- 64, 64^{I}: erster Stableiter
- 66, 66^{I}: zweiter Stableiter
- 68: Länge des ersten Stableiters
- 69: Länge des zweiten Stableiters
- 70: Haarnadel
- 72: erster Endbereich einer Formlitze
- 74: zweiter Endbereich einer Formlitze
- 76, 76^{I}, 76^{II}, 76^{III}, 76^{IV}, 76^{V}, 76^{VI}, 76^{VII}, 76^{VIII}: Mittenbereich einer Formlitze
- 78, 78^{I}: Formlitzenkopfbereich, insbesondere Bereich mitten zwischen den Armen einer Formlitze, in dem sich Formlitzenkopfsegmente befinden
- 80: Schlaufenformung
- 81: Schlaufe
- 82, 82^{I}, 82^{II}: Krümmung, insbesondere Litzenkrümmung
- 84: Quererstreckung
- 86, 86^{I}: Spurversatz
- 91: erstes Litzensegment, wie ein erster Bereich einer Formlitze
- 92: zweites Litzensegment, wie ein zweiter Bereich einer Formlitze
- 93: drittes Litzensegment, wie ein dritter Bereich einer Formlitze, insbesondere Formlitzenkopfsegment
- 94: viertes Litzensegment, wie ein vierter Bereich einer Formlitze, insbesondere Formlitzenkopfsegment, wie ein drittes Formlitzenkopfsegment
- 95: fünftes Litzensegment, wie ein fünfter Bereich einer Formlitze, insbesondere Formlitzenkopfsegment
- 96: sechstes Litzensegment, wie ein sechster Bereich einer Formlitze
- 97: siebtes Litzensegment, wie ein siebter Bereich einer Formlitze
- 99, 99^{I}, 99^{II}, 99^{III}: Formlitzenschenkel
- 100: erstes Übergangssegment, insbesondere erstes Formlitzenkopfsegment
- 101: zweites Übergangssegment, insbesondere zweites Formlitzenkopfsegment
- 105: erster Litzenquerschnitt
- 106: zweiter Litzenquerschnitt
- 107: dritter Litzenquerschnitt
- 108: vierter Litzenquerschnitt
- 109: fünfter Litzenquerschnitt
- 120: Litzenquerschnittsflächengröße
- 122: erste Breite der Formlitze, insbesondere Höhe der Hochseite
- 123: zweite Breite der Formlitze, insbesondere maximale Breite einer ersten Trapezform
- 124: Höhe der Formlitze, insbesondere Breite einer Breitseite
- 125: Höhe der Formlitze, insbesondere Höhe der ersten Trapezform
- 128: Abfolge von unterschiedlichen Querschnittsflächen
- 130: erste Stableiterform, insbesondere erste Trapezform
- 132: zweite Stableiterform, insbesondere zweite Trapezform
- 134: Trapezwinkel
- 136, 136^{I}: kleinste Breite einer ersten Trapezform
- 137: größte Breite einer zweiten Trapezform
- 137^{I}: kleinste Breite einer zweiten Trapezform
- 138: Höhe einer zweiten Trapezform
- 139: Höhe der ersten Trapezform
- 140: rechteckartiger Litzenquerschnitt, insbesondere erste rechteckige Querschnittsform
- 141, 141^{I}: erste Breitseite
- 142: rechteckartiger Litzenquerschnitt, insbesondere zweite rechteckige Querschnittsform
- 143: Hochseite
- 144: Querschnitt einer Statornut
- 150: erstes Kompaktierungssegment
- 152: zweites Kompaktierungssegment
- 153: Kontaktstelle, insbesondere Segmentkontaktfläche
- 154, 154^{I}: Segmentkontaktschräge
- 155: Schrägenwinkel
- 156: Kompaktierungslänge
- 157: Querschnitt des Kompaktierungssegments
- 158: Kupferfolie, insbesondere Kupferband
- 159: Kompaktierungsschräge
- 160: Kupferband-Überlappung, insbesondere Kupferband-Doppelschicht
- 162: Hartlot
- 166: Isolatorschicht, insbesondere isolierendes Band
- 168: elektrische Verbindung
- 170: Stegverschaltung
- 172: erste Verschaltungsstegbrücke, insbesondere erster Verschaltungssteg
- 174: zweite Verschaltungsstegbrücke, insbesondere zweiter Verschaltungssteg
- 176: dritte Verschaltungsstegbrücke, insbesondere dritter Verschaltungssteg
- 178: vierte Verschaltungsstegbrücke, insbesondere vierter Verschaltungssteg
- 180: Flachdraht
- 181, 181^{I}, 181^{II}, 181^{III}: erster Verschaltungsstegabschnitt, insbesondere erster Flachdraht
- 182, 182^{I}, 182^{II}, 182^{III}: zweiter Verschaltungsstegabschnitt, insbesondere zweiter Flachdraht
- 188, 188', 188": Flachdrahtlänge
- 189: Flachdrahthöhe
- 190: erste Breite, insbesondere Breite eines ersten Flachdrahts
- 192: zweite Breite, insbesondere Breite eines zweiten Flachdrahts
- 194: erste Höhe, insbesondere Höhe eines ersten Flachdrahts
- 196: zweite Höhe, insbesondere Höhe eines zweiten Flachdrahts
- 200, 200^{I}: Endbereich des ersten Flachdrahts, insbesondere für die Kompaktierung abgeschrägtes Flachdrahtende
- 202: Endbereich des zweiten Flachdrahts, insbesondere für die Kompaktierung abgeschrägtes Flachdrahtende
- 204, 204^{I}, 204^{II}, 204^{III}, 204^{IV}: Überlappbereich
- 206: Flachdrahtendbereich eines ersten Flachdrahts, insbesondere isolatorfreier Bereich
- 208: Flachdrahtendbereich eines zweiten Flachdrahts, insbesondere isolatorfreier Bereich
- 210, 210^{I}: Drahtlackisolation, insbesondere Drahtlackschicht
- 220: erste Gruppe von Flachdrähten
- 222: zweite Gruppe von Flachdrähten
- 230: Strahlschweißen, insbesondere Laserstrahlschweißen
- 232: metallisch schlüssige Verbindung
- 250: Wicklungsende
- 256: Steckverbinder
- 260: Kontaktierungslitze
- 270: Y-Konfiguration
- 272, 272^{I}: erster Verschaltungsstegabschnitt eines ersten Leitungssegments
- 274, 274^{I}: zweiter Verschaltungsstegabschnitt eines zweiten Leitungssegments
- 276: Kontaktfläche, insbesondere Breitseiten-Auflagefläche
- 278: Kontaktstelle, insbesondere stoffschlüssige Verbindung
- 500: Kraftfahrzeug
- 502, 502^{I}: Antriebsstrang
- 504: Vorderachse
- 506: Hinterachse
- 510, 510^{I}: Drehmomentübertragungsvorrichtung
- 512, 512^{I}: Getriebe
- 514: Antriebswelle
- 520, 520^{I}: Gesamtgehäuse
- 522: Andruckplatte, insbesondere als integrierter Teil des Gesamtgehäuses
- 530, 530^{I}, 530^{II}, 530^{III}: elektrische Maschine
- 540, 540^{I}: Rotor
- 542: Rotorwelle
- 544: Rotorblechpaket
- 546: Luftspalt
- 551: erstes Straßenrad
- 552: zweites Straßenrad
- 553: drittes Straßenrad
- 554: viertes Straßenrad
- 1002: Verfahren zur Herstellung eines Stators sowie einer Elektromaschine
- 1004: Bereitstellung von isoliertem Kupferdraht
- 1006: Ablängen und Verdrillen von Einzeldrähten zu einer Litze
- 1010: Umformung der Litze zur Bildung eines Kopfbereichs einer Formlitze
- 1020: Verdichtung der Formlitze in Bereichen mit unterschiedlichen Querschnitten
- 1030: Bereitstellen von zwei Flachdrahtstücken, die an ihren Enden abisoliert sind
- 1034: Formung eines Endbereichs an jedem Flachdrahtstück mit einer Schräge
- 1040: Verschweißen oder Verlöten eines geformten Flachdrahtendbereichs mit einem Formlitzenendbereich in einem komprimierten Überlappbereich
- 1050: optionale Bereitstellung eines Isolationstapes
- 1052: optionales Umwickeln der Formlitze mit einem Isolationstape
- 1060: Biegen der Formlitze in eine U-Form (2-D-Umformung)
- 1070: Biegen der Formlitze in eine Leitungssegmentform bzw. Spulensegmentform (3-D-Umformung)
- 1076: paralleles Ausführen der Herstellung der Leitungssegmente für einen Stator
- 1080: Bereitstellung eines mit Nuten ausgestatteten Blechpakets für die Montage eines Stators
- 1090: Einfügen von allen Leitungssegmenten in die Nuten des Blechpakets in axialer Richtung
- 1100: Verschränken der Flachdrähte durch ein Zusammenbringen von Verschaltungsstegabschnitten
- 1110: paarweises Verschweißen der Flachdrähte an deren freien Enden bzw. Endbereichen
- 1120: optionale Kompaktierung eines Wickelkopfes
- 1140: Bereitstellung von Wicklungsanschlussleitungen
- 1150: Bereitstellung von Isolations- und/oder Vergussmitteln
- 1160: Kontaktierung und Einschließen der Wickelköpfe
- 1180: optionale Bereitstellung eines Rotors
- 1190: optionaler Zusammenbau von Stator und Rotor zu einer Elektromaschine

## Patentansprüche

1. Leitungssegment (39, 39^{I}, 39^{II}) für eine Wicklung (36) einer elektrischen Maschine (530, 530^{I}, 530^{II}, 530^{III}),
wobei das Leitungssegment aus drei metallisch leitenden Abschnitten aufgebaut ist, von denen ein erster Abschnitt eine Formlitze (50, 50^{I}, 50^{II}, 50^{III}, 50^{IV}) ist,
**dadurch gekennzeichnet, dass**
ein erster Flachdraht (180, 181, 181', 181", 181^{III}) und ein zweiter Flachdraht (182, 182^{I}, 182^{II}, 182^{III}) weitere Abschnitte sind, die mit der Formlitze elektrisch leitend verbunden sind,
wobei eine Fügeverbindung zwischen einem ersten Endbereich (72) der Formlitze (50, 50^{I}, 50^{II}, 50^{III}, 50^{IV}) und einem ersten Flachdrahtendbereich (200, 200^{I}) des ersten Flachdrahts und eine weitere Fügeverbindung zwischen einem zweiten Endbereich (74) der Formlitze und einem ersten Flachdrahtendbereich (202) des zweiten Flachdrahts ausgebildet ist.

2. Leitungssegment nach Anspruch 1,
**dadurch gekennzeichnet, dass**
das Leitungssegment je einen verpressten Überlappbereich (204, 204^{I}, 204^{II}, 204^{III}, 204^{IV}) aus den gefügten ersten Flachdrahtendbereichen (200, 200^{I}, 202) und den jeweiligen Endbereichen (72, 74) der Formlitze (50, 50^{I}, 50^{II}, 50^{III}, 50^{IV}) aufweist.

3. Leitungssegment nach Anspruch 2,
**dadurch gekennzeichnet, dass**
eine leitfähige Kupferfolie (158) oder ein leitfähiges Kupferband als eine Ummantelung des Überlappbereichs (204, 204^{I}, 204^{II}, 204^{III}, 204^{IV}) vorgesehen ist.

4. Leitungssegment nach einem der vorstehenden Ansprüche,
**dadurch gekennzeichnet, dass**
eine Zwischenschicht aus Hartlot (162) zwischen den Endbereichen (72, 74) der Formlitze (50, 50^{I}, 50^{II}, 50^{III}, 50^{IV}) und den ersten Flachdrahtendbereichen (200, 200^{I}, 202) vorhanden ist.

5. Leitungssegment nach einem der vorstehenden Ansprüche,
**dadurch gekennzeichnet, dass**
die Formlitze (50, 50^{I}, 50^{II}, 50^{III}, 50^{IV}) mit dem ersten Flachdrahtendbereich (200, 200^{I}) des ersten Flachdrahtes (180, 181, 181^{I}, 181^{II}, 181^{III}) unter Ausbildung eines ersten Leitungssegmentwinkels (59), der ein Winkel aus einem Winkelbereich von 180° bis 150° ist, und mit dem ersten Flachdrahtendbereich (202) des zweiten Flachdrahtes (182, 182^{I}, 182^{II}, 182^{III}) unter Ausbildung eines zweiten Leitungssegmentwinkels (59^{I}), der ein Winkel aus einem Winkelbereich von 180° bis 150° ist, verbunden ist.

6. Leitungssegment (39, 39^{I}, 39^{II}) nach einem der vorhergehenden Ansprüche,
**dadurch gekennzeichnet, dass**
die Formlitze (50, 50^{I}, 50^{II}, 50^{III}, 50^{IV}) aus mehreren Litzendrähten (40, 40^{I}) besteht **und dass** alle Litzendrähte der Formlitze sich durchgängig von dem ersten Endbereich (72) der Formlitze zu dem zweiten Endbereich (74) der Formlitze bis in den jeweiligen ersten Flachdrahtendbereich (200, 200^{I}, 202) erstrecken.

7. Leitungssegment (39, 39^{I}, 39^{II}) nach Anspruch 6,
**dadurch gekennzeichnet, dass**
die Litzendrähte (40, 40^{I}) mit einer Schlaglänge (55) verdrillt sind, die gleich oder ein vielfacher Teiler einer aktiven Länge der elektrischen Maschine ist.

8. Leitungssegment (39, 39^{I}, 39^{II}) nach einem der vorhergehenden Ansprüche,
**dadurch gekennzeichnet, dass**
die Flachdrähte (180, 181, 181^{I}, 181^{II}, 181^{III}, 182, 182^{I}, 182^{II}, 182^{III}) drahtlackisolierte Flachdrähte (180) sind, die jeweils zwei zumindest auf einer Segmentkontaktfläche (153) drahtlackfreie Flachdrahtendbereiche (200, 200^{I}, 202, 206, 208) aufweisen.

9. Leitungssegment (39, 39^{I}, 39^{II}) nach einem der vorgehenden Ansprüche,
**dadurch gekennzeichnet, dass**
der erste Flachdrahtendbereich (200, 200^{I}, 202) mit mindestens einer Kompaktierungsschräge (159) ausgebildet ist.

10. Leitungssegment (39, 39^{I}, 39^{II}) nach einem der vorhergehenden Ansprüche,
**dadurch gekennzeichnet, dass**
ein Formlitzensegment (92) der Formlitze (50, 50^{I}, 50^{II}, 50^{III}, 50^{IV}) zur Ausbildung eines ersten Stableiters (64, 64^{I}) in eine erste Trapezform (130) als Querschnittsfläche (128) gepresst ist und ein weiteres Formlitzensegment (96) derselben Formlitze zur Ausbildung eines zweiten Stableiters (66, 66^{I}) in eine zweite Trapezform (132) als Querschnittsfläche (128) gepresst ist.

11. Leitungssegment (39, 39', 39") nach Anspruch 10,
**dadurch gekennzeichnet, dass**
eine kleinste Breite (136, 136^{I}) der ersten Trapezform (130) und eine größte Breite (137) der zweiten Trapezform (132) in etwa übereinstimmen,
wobei die zweite Trapezform (132) eine größere Höhe (138) aufweist als die erste Trapezform (139)
und wobei die Formlitze (50, 50^{I}, 50^{II}, 50^{III}, 50^{IV}) in zumindest einer der Trapezformen (130, 132) mit einem Verdichtungsfaktor von einem Wert zwischen 0,6 und 0,96 bezogen auf einen Litzenquerschnitt der verdrillten Litze (42) verbracht ist.

12. Leitungssegment (39, 39', 39") nach einem der vorhergehenden Ansprüche 3 bis 11,
**dadurch gekennzeichnet, dass**
die Kupferfolie (158) eine Folienstärke hat, die in einem Bereich von 0,1 mm bis 0,5 mm liegt.

13. Leitungssegment (39, 39', 39") nach Anspruch 4, ggf. in Kombination mit einem der Ansprüche 5 bis 12,
**dadurch gekennzeichnet, dass**
das Hartlot (162) zumindest auf einer Segmentkontaktfläche (153) vorhanden ist, wobei die Segmentkontaktfläche (153) von zwei Segmentkontaktschrägen (154, 154^{I}), die in den Flachdrahtendbereich (200, 200^{I}, 202) eingearbeitet sind, begrenzt ist.

14. Leitungssegment (39, 39^{I}, 39^{II}) nach einem der vorhergehenden Ansprüche,
**dadurch gekennzeichnet, dass**
die Flachdrähte (180, 181, 181^{I}, 181^{II}, 181^{III}, 182, 182^{I}, 182^{II}, 182^{III}) mit einer gleichen oder einer kleineren Breite (190, 192) als die Formlitze (50, 50^{I}, 50^{II}, 50^{III}, 50^{IV}) ausgebildet sind.

15. Leitungssegment (39, 39', 39") nach Anspruch 13 oder 14,
**dadurch gekennzeichnet, dass**
sich der erste Flachdrahtendbereich (200, 200^{I}, 202) im Bereich der Segmentkontaktfläche (153) zu seinem Ende hin verjüngt.

16. Leitungssegment (39, 39^{I}, 39^{II}) nach einem der Ansprüche 13 bis 15,
**dadurch gekennzeichnet, dass**
die Segmentkontaktschrägen (154, 154^{I}) mit einem Schrägungswinkel (155) in einem Winkelbereich von 10° bis 70° ausgebildet sind.

17. Verfahren zur Herstellung eines Leitungssegments (39, 39', 39") für eine Wicklung (36) einer elektrischen Maschine (530, 530^{I}, 530^{II}, 530^{III}),
wobei das Leitungssegment eine Formlitze (50, 50^{I}, 50^{II}, 50^{III}, 50^{IV}) umfasst,
**dadurch gekennzeichnet, dass**
ein erster und ein zweiter Flachdraht (180, 181, 181^{I}, 181^{II}, 181^{III}, 182, 182^{I}, 182^{II}, 182^{III}) bereitgestellt werden,
und dass die Formlitze mit den Flachdrähten zu dem Leitungssegment aufgebaut werden,
indem ein erster Endbereich (72) der Formlitze mit einem ersten Flachdrahtendbereich (200, 200^{I}) des ersten Flachdrahtes (180, 181, 181^{I}, 181^{II}, 181^{III}) und ein zweiter Endbereich (74) der Formlitze mit einem ersten Flachdrahtendbereich (202) des zweiten Flachdrahts (182, 182^{I}, 182^{II}, 182^{III}) durch Fügen, insbesondere Strahlschweißen, bevorzugt Laserstrahlschweißen, elektrisch leitend verbunden werden.

18. Verfahren nach Anspruch 17,
**dadurch gekennzeichnet, dass**
in einem Mittenbereich (76) der Formlitze (50, 50^{I}, 50^{II}, 50^{III}, 50^{IV}) eine Litzenkrümmung (82) erzeugt wird und die Litze (42) in Erstreckungsbereichen, die von der Litzenkrümmung (82) beabstandet sind, in eine Stableiterform (130, 132) gepresst wird.

19. Verfahren nach Anspruch 17 oder 18,
**dadurch gekennzeichnet, dass**
eine Zwischenschicht aus Hartlot (162) zwischen den Endbereichen (72, 74) der Formlitze (50, 50^{I}, 50^{II}, 50^{III}, 50^{IV}) und den ersten Flachdrahtendbereichen (200, 200^{I}, 202) eingebracht wird, welches während des Fügevorgangs geschmolzen wird und Formlitze und Flachdrahtendbereiche benetzt.

20. Verfahren nach einem der Ansprüche 17 bis 19,
**dadurch gekennzeichnet, dass**
ein Überlappbereich (204, 204^{I}, 204^{II}, 204^{III}, 204^{IV}) aus den gefügten ersten Flachdrahtendbereichen (200, 200^{I}, 202) und den jeweiligen Endbereichen (72, 74) der Formlitze (50, 50^{I}, 50^{II}, 50^{III}, 50^{IV}) kompaktiert wird.

21. Verfahren nach Anspruch 20,
**dadurch gekennzeichnet, dass**
eine leitfähige Kupferfolie (158) oder ein leitfähiges Kupferband als eine Ummantelung um den Überlappbereich (204, 204^{I}, 204^{II}, 204^{III}, 204^{IV}) herum angeordnet werden.

22. Verfahren nach einem der Ansprüche 17 bis 21,
**dadurch gekennzeichnet, dass**
die Formlitze (50, 50^{I}, 50^{II}, 50^{III}, 50^{IV}) und die Flachdrähte (180, 181, 181^{I}, 181^{II}, 181^{III}, 182, 182^{I}, 182^{II}, 182^{III}) jeweils mit einem Leitungssegmentwinkel (59, 59^{I}), der ein Winkel von ungefähr 180° bis 150° ist, ausgerichtet werden, so dass sich das Leitungssegment (39, 39', 39"), abgesehen von einer möglichen Litzenkrümmung (82), im Wesentlichen linear erstreckt, bevor es in die Wicklung verbaut wird.

23. Verfahren nach einem der Ansprüche 17 bis 22,
**dadurch gekennzeichnet, dass**
das Leitungssegment (39, 39', 39") mit einer Isolierung überzogen oder umwickelt wird, insbesondere mit einem isolierenden Band (166) umwickelt wird, wobei sich die Isolierung nur bis zu einem zweiten Flachdrahtendbereich (206, 208) des ersten und/oder zweiten Flachdrahts (180, 181, 181^{I}, 181^{II}, 181^{III}, 182, 182^{I}, 182^{II}, 182^{III}) erstreckt.

24. Kraftfahrzeug (500) mit einem Antriebsstrang (502, 502^{I}),
**dadurch gekennzeichnet, dass**
der Antriebsstrang (502, 502^{I}) eine elektrische Maschine (530, 530^{I}, 530^{II}, 530^{III}) mit mindestens einer Wicklung (36) aufweist, in der wenigstens ein Leitungssegment (39, 39^{I}, 39^{II}) nach einem der Ansprüche 1 bis 16 verbaut ist.

## Claims

1. Conductor segment (39, 39^{I}, 39^{II}) for a winding (36) of an electric machine (530, 530^{I}, 530^{II}, 530^{III}),
the conductor segment being constructed from three metallically conductive portions, of which a first portion is a shaped stranded wire (50, 50^{I}, 50^{II}, 50^{III}, 50^{IV}),
**characterized in that**
a first flat wire (180, 181, 181^{I}, 181^{II}, 181^{III}) and a second flat wire (182, 182^{I}, 182^{II}, 182^{III} are further portions, which are electrically conductively connected to the shaped stranded wire,
wherein a joined connection is formed between a first end region (72) of the shaped stranded wire (50, 50^{I}, 50^{II}, 50^{III}, 50^{IV}) and a first flat wire end region (200, 200^{I}) of the first flat wire, and a further joined connection is formed between a second end region (74) of the shaped stranded wire and a first flat wire end region (202) of the second flat wire.

2. Conductor segment according to claim 1,
**characterized in that**
the conductor segment has in each case a compressed overlap region (204, 204^{I}, 204^{II}, 204^{III}, 204^{IV}) formed of the joined first flat wire end regions (200, 200^{I}, 202) and the respective end regions (72, 74) of the shaped stranded wire (50, 50^{I}, 50^{II}, 50^{III}, 50^{IV}).

3. Conductor segment according to claim 2,
**characterized in that**
a conductive copper foil (158) or a conductive copper tape is provided as a sheath around the overlap region (204, 204^{I}, 204^{II}, 204^{III}, 204^{IV}).

4. Conductor segment according to any one of the preceding claims,
**characterized in that**
an intermediate layer of hard solder (162) is present between the end regions (72, 74) of the shaped stranded wire (50, 50^{I}, 50^{II}, 50^{III}, 50^{IV}) and the first flat wire end regions (200, 200^{I}, 202).

5. Conductor segment according to any one of the preceding claims,
**characterized in that**
the shaped stranded wire (50, 50^{I}, 50^{II}, 50^{III}, 50^{IV}) is connected to the first flat wire end region (200, 200^{I}) of the first flat wire (180, 181, 181^{I}, 181^{II}, 181^{III}) so as to form a first conductor segment angle (59), which is an angle in an angle range of 180° to 150°, and is connected to the first flat wire end region (202) of the second flat wire (182, 182^{I}, 182^{II}, 182^{III}) so as to form a second conductor segment angle (59^{I}), which is an angle in an angle range of 180° to 150°.

6. Conductor segment (39, 39^{I}, 39^{II}) according to any one of the preceding claims,
**characterized in that**
the shaped stranded wire (50, 50^{I}, 50^{II}, 50^{III}, 50^{IV}) consists of a plurality of wires (40, 40^{I}), **and in that** all the wires of the shaped stranded wire extend continuously from the first end region (72) of the shaped stranded wire to the second end region (74) of the shaped stranded wire and into the respective first flat wire end region (200, 200^{I}, 202).

7. Conductor segment (39, 39^{I}, 39^{II}) according to claim 6,
**characterized in that**
the wires (40, 40^{I}) are twisted with a lay length (55) which is equal to or a submultiple of an active length of the electric machine.

8. Conductor segment (39, 39^{I}, 39^{II}) according to any one of the preceding claims,
**characterized in that**
the flat wires (180, 181, 181^{I}, 181^{II}, 181^{III}, 182, 182^{I}, 182^{II}, 182^{III}) are wire-enamel-insulated flat wires (180) which each have two flat wire end regions (200, 200^{I}, 202, 206, 208) that are free of wire enamel at least on a segment contact surface (153).

9. Conductor segment (39, 39^{I}, 39^{II}) according to any one of the preceding claims,
**characterized in that**
the first flat wire end region (200, 200^{I}, 202) is formed with at least one compaction slope (159).

10. Conductor segment (39, 39^{I}, 39^{II}) according to any one of the preceding claims,
**characterized in that**
one compressed strand segment (92) of the shaped stranded wire (50, 50^{I}, 50^{II}, 50^{III}, 50^{IV}) is pressed into a first trapezoidal shape (130) as a cross-sectional area (128) thus formed as a first bar conductor (64, 64^{I}), and a further compressed strand segment (96) of the same shaped stranded wire is pressed into a second trapezoidal shape (132) as a cross-sectional area (128) thus formed as a second bar conductor (66, 66^{I}).

11. Conductor segment (39, 39^{I}, 39^{II}) according to claim 10,
**characterized in that**
a smallest width (136, 136^{I}) of the first trapezoidal shape (130) and a largest width (137) of the second trapezoidal shape (132) approximately match,
wherein the second trapezoidal shape (132) has a larger height (138) than the first trapezoidal shape (139),
and wherein the shaped stranded wire (50, 50^{I}, 50^{II}, 50^{III}, 50^{IV}) is brought into at least one of the trapezoidal shapes (130, 132) with a compression factor of a value between 0.6 and 0.96 relative to a strand cross-section of the twisted strand (42).

12. Conductor segment (39, 39^{I}, 39^{II}) according to any one of the preceding claims 3 to 11,
**characterized in that**
the copper foil (158) has a foil thickness in a range of 0.1 mm to 0.5 mm.

13. Conductor segment (39, 39^{I}, 39^{II}) according to claim 4, optionally in combination with any one of claims 5 to 12,
**characterized in that**
the hard solder (162) is present at least on a segment contact surface (153), the segment contact surface (153) being delimited by two segment contact slopes (154, 154^{I}) which are incorporated in the flat wire end region (200, 200^{I}, 202).

14. Conductor segment (39, 39^{I}, 39^{II}) according to any one of the preceding claims,
**characterized in that**
the flat wires (180, 181, 181^{I}, 181^{II}, 181^{III}, 182, 182^{I}, 182^{II}, 182^{III}) are formed with a width (190, 192) equal to or smaller than that of the shaped stranded wire (50, 50^{I}, 50^{II}, 50^{III}, 50^{IV}).

15. Conductor segment (39, 39^{I}, 39^{II}) according to claim 13 or 14,
**characterized in that**
the first flat wire end region (200, 200^{I}, 202) tapers toward its end in the region of the segment contact surface (153).

16. Conductor segment (39, 39^{I}, 39^{II}) according to any one of claims 13 to 15,
**characterized in that**
the segment contact slopes (154, 154^{I}) are formed with a slope angle (155) in an angle range of 10° to 70°.

17. Method for producing a conductor segment (39, 39^{I}, 39^{II}) for a winding (36) of an electric machine (530, 530^{I}, 530^{II}, 530^{III}),
the conductor segment comprising a shaped stranded wire (50, 50^{I}, 50^{II}, 50^{III}, 50^{IV}),
**characterized in that**
a first and a second flat wire (180, 181, 181^{I}, 181^{II}, 181^{III}, 182, 182^{I}, 182^{II}, 182^{III}) are made available,
and **in that** the shaped stranded wire is assembled with the flat wires to form the conductor segment,
by electrically conductively connecting a first end region (72) of the shaped stranded wire to a first flat wire end region (200, 200^{I}) of the first flat wire (180, 181, 181^{I}, 181^{II}, 181^{III}) and a second end region (74) of the shaped stranded wire to a first flat wire end region (202) of the second flat wire (182, 182^{I}, 182^{II}, 182^{III}) by means of a joining process, in particular beam welding, preferably laser beam welding.

18. Method according to claim 17,
**characterized in that**
a strand curvature (82) is created in a middle region (76) of the shaped stranded wire (50, 50^{I}, 50^{II}, 50^{III}, 50^{IV}), and the strand (42) is pressed into a bar conductor shape (130, 132) in extension regions located at a distance from the strand curvature (82).

19. Method according to claim 17 or 18,
**characterized in that**
an intermediate layer of hard solder (162) is introduced between the end regions (72, 74) of the shaped stranded wire (50, 50^{I}, 50^{II}, 50^{III}, 50^{IV}) and the first flat wire end regions (200, 200^{I}, 202), which intermediate layer is melted during the joining process and wets the shaped stranded wire and the flat wire end regions.

20. Method according to any one of claims 17 to 19,
**characterized in that**
an overlap region (204, 204^{I}, 204^{II}, 204^{III}, 204^{IV}) consisting of the joined first flat wire end regions (200, 200^{I}, 202) and the respective end regions (72, 74) of the shaped stranded wire (50, 50^{I}, 50^{II}, 50^{III}, 50^{IV}) is compacted.

21. Method according to claim 20,
**characterized in that**
a conductive copper foil (158) or a conductive copper tape is arranged as a sheath around the overlap region (204, 204^{I}, 204^{II}, 204^{III}, 204^{IV}).

22. Method according to any one of claims 17 to 21,
**characterized in that**
the shaped stranded wire (50, 50^{I}, 50^{II}, 50^{III}, 50^{IV}) and the flat wires (180, 181, 181^{I}, 181^{II}, 181^{III}, 182, 182^{I}, 182", 182^{III}) are each oriented with a conductor segment angle (59, 59^{I}), which is an angle of approximately 180° to 150°, so that, apart from a possible strand curvature (82), the conductor segment (39, 39^{I}, 39^{II}) extends substantially linearly before it is installed in the winding.

23. Method according to any one of claims 17 to 22,
**characterized in that**
the conductor segment (39, 39^{I}, 39^{II}) is covered or wrapped with insulation, in particular wrapped with an insulating tape (166), with the insulation extending only up to a second flat wire end region (206, 208) of the first and/or second flat wire (180, 181, 181^{I}, 181^{II}, 181^{III}, 182, 182^{I}, 182^{II}, 182^{III}).

24. Motor vehicle (500) comprising a drivetrain (502, 502^{I}),
**characterized in that**
the drivetrain (502, 502^{I}) comprises an electric machine (530, 530^{I}, 530^{II}, 530^{III}) having at least one winding (36), in which at least one conductor segment (39, 39^{I}, 39^{II}) according to any one of claims 1 to 16 is installed.

## Revendications

1. Segment conducteur (39, 39^{I}, 39^{II}) pour un enroulement (36) d'une machine électrique (530, 530^{I}, 530^{II}, 530^{III}),
dans lequel le segment conducteur est assemblé à partir de trois sections conductrices métalliques, dont une première section est un toron moulé (50, 50^{I}, 50^{II}, 50^{III}, 50^{IV}),
**caractérisé en ce que**
un premier fil plat (180, 181, 181^{I}, 181^{II}, 181^{III}) et un second fil plat (182, 182^{I}, 182^{II}, 182^{III}) constituent d'autres sections qui sont reliées de façon électriquement conductrice avec le toron moulé,
dans lequel une liaison d'assemblage est conçue entre une première zone d'extrémité (72) du toron moulé (50, 50^{I}, 50^{II}, 50^{III}, 50^{IV}) et une première zone d'extrémité de fil plat (200, 200^{I}) du premier fil plat et une autre liaison d'assemblage est conçue entre une seconde zone d'extrémité (74) du toron moulé et une première zone d'extrémité de fil plat (202) du second fil plat.

2. Segment conducteur selon la revendication 1,
**caractérisé en ce que**
le segment conducteur présente respectivement une zone de chevauchement (204, 204^{I}, 204^{II}, 204^{III}, 204^{IV}) comprimée à partir des premières zones d'extrémité de fil plat (200, 200^{I}, 202) assemblées et des premières zones d'extrémité (72, 74) respectives du toron moulé (50, 50^{I}, 50^{II}, 50^{III}, 50^{IV}).

3. Segment conducteur selon la revendication 2,
**caractérisé en ce que**
une feuille de cuivre (158) conductible ou un ruban de cuivre conductible est prévu(e) en tant que gaine de la zone de chevauchement (204, 204^{I}, 204^{II}, 204^{III}, 204^{IV}).

4. Segment conducteur selon l'une des revendications précédentes,
**caractérisé en ce que**
une couche intermédiaire de brasure (162) est présente entre les zones d'extrémité (72, 74) du toron moulé (50, 50^{I}, 50^{II}, 50^{III}, 50^{IV}) et les premières zones d'extrémité de fil plat (200, 200^{I}, 202).

5. Segment conducteur selon l'une des revendications précédentes,
**caractérisé en ce que**
le toron moulé (50, 50^{I}, 50^{II}, 50^{III}, 50^{IV}) est relié avec la première zone d'extrémité de fil plat (200, 200^{I}) du premier fil plat (180, 181, 181^{I}, 181^{II}, 181^{III}) en formant un premier angle de segment conducteur (59), qui est un angle avec une plage angulaire de 180° à 150°, et avec la première zone d'extrémité de fil plat (202) du second fil plat (182, 182^{I}, 182", 182^{III}) en formant un second angle de segment conducteur (59^{I}), qui est un angle avec une plage angulaire de 180° à 150°.

6. Segment conducteur (39, 39^{I}, 39^{II}) selon l'une des revendications précédentes,
**caractérisé en ce que**
le toron moulé (50, 50^{I}, 50", 50^{III}, 50^{IV}) est composé de plusieurs fils toronnés (40, 40^{I}) **et en ce que** tous les fils toronnés du toron moulé s'étendent en continu depuis la première zone d'extrémité (72) du toron moulé vers la seconde zone d'extrémité (74) du toron moulé et jusque dans la première zone d'extrémité de fil plat (200, 200^{I}, 202) respective.

7. Segment conducteur (39, 39^{I}, 39^{II}) selon la revendication 6,
**caractérisé en ce que**
les fils toronnés (40, 40^{I}) sont torsadés avec une longueur de pas (55) qui est égale à ou un diviseur multiple d'une longueur active de la machine électrique.

8. Segment conducteur (39, 39^{I}, 39^{II}) selon l'une des revendications précédentes,
**caractérisé en ce que**
les fils plats (180, 181, 181^{I}, 181^{II}, 181^{III}, 182, 182^{I}, 182^{II}, 182^{III}) sont des fils plats (180) isolés par un émail de fil qui présentent respectivement deux zones d'extrémité de fil plat (200, 200^{I}, 202, 206, 208) exemptes d'émail de fil au moins sur une surface de contact de segment (153).

9. Segment conducteur (39, 39^{I}, 39^{II}) selon l'une des revendications précédentes,
**caractérisé en ce que**
la première zone d'extrémité de fil plat (200, 200^{I}, 202) est conçue avec au moins une inclinaison de compactage (159).

10. Segment conducteur (39, 39^{I}, 39^{II}) selon l'une des revendications précédentes,
**caractérisé en ce que**
un segment de toron moulé (92) du toron moulé (50, 50^{I}, 50^{II}, 50^{III}, 50^{IV}) est comprimé, pour la formation d'un premier conducteur de tige (64, 64^{I}), en une première forme trapézoïdale (130) en tant que surface transversale (128) et un autre segment de toron moulé (96) du même toron moulé est comprimé, pour la formation d'un second conducteur de tige (66, 66^{I}), en une seconde forme trapézoïdale (132) en tant que surface transversale (128).

11. Segment conducteur (39, 39', 39") selon la revendication 10,
**caractérisé en ce que**
une largeur (136, 136^{I}) la plus petite de la première forme trapézoïdale (130) et une largeur (137) la plus grande de la seconde forme trapézoïdale (132) coïncident approximativement,
dans lequel la seconde forme trapézoïdale (132) présente une hauteur (138) plus grande que la première forme trapézoïdale (139)
et dans lequel le toron moulé (50, 50^{I}, 50^{II}, 50^{III}, 50^{IV}) est passé dans au moins une des formes trapézoïdales (130, 132) avec un facteur de compaction d'une valeur entre 0,6 et 0,96 par rapport à une section transversale de toron du toron (42) torsadé.

12. Segment conducteur (39, 39^{I}, 39") selon l'une des revendications précédentes 3 à 11,
**caractérisé en ce que**
la feuille de cuivre (158) présente une épaisseur de feuille qui se situe dans une plage de 0,1 mm à 0,5 mm.

13. Segment conducteur (39, 39^{I}, 39^{II}) selon la revendication 4, le cas échéant en combinaison avec l'une des revendications 5 à 12,
**caractérisé en ce que**
la brasure (162) est présente au moins sur une surface de contact de segment (153), dans lequel la surface de contact de segment (153) est délimitée par deux inclinaisons de contact de segment (154, 154^{I}) qui sont incorporées dans la zone d'extrémité de fil plat (200, 200^{I}, 202).

14. Segment conducteur (39, 39^{I}, 39^{II}) selon l'une des revendications précédentes,
**caractérisé en ce que**
les fils plats (180, 181, 181^{I}, 181^{II}, 181^{III}, 182, 182^{I}, 182^{II}, 182^{III}) sont conçus avec une largeur (190, 192) identique au ou plus petite que le toron moulé (50, 50^{I}, 50^{II}, 50^{III}, 50^{IV}).

15. Segment conducteur (39, 39^{I}, 39^{II}) selon la revendication 13 ou 14,
**caractérisé en ce que**
la première zone d'extrémité de fil plat (200, 200^{I}, 202) se rétrécit en allant vers son extrémité dans la zone de la surface de contact de segment (153).

16. Segment conducteur (39, 39^{I}, 39^{II}) selon l'une des revendications 13 à 15,
**caractérisé en ce que**
les inclinaisons de contact de segment (154, 154^{I}) sont conçues avec un angle d'inclinaison (155) dans une plage angulaire de 10° à 70°.

17. Procédé de fabrication d'un segment conducteur (39, 39^{I}, 39^{II}) pour un enroulement (36) d'une machine électrique (530, 530^{I}, 530^{II}, 530^{III}),
dans lequel le segment conducteur comprend un toron moulé (50, 50^{I}, 50^{II}, 50^{III}, 50^{IV}),
**caractérisé en ce que**
un premier et un second fil plat (180, 181, 181^{I}, 181^{II}, 181^{III}, 182, 182^{I}, 182^{II}, 182^{III}) sont mis à disposition,
et **en ce que** le toron moulé avec les fils plats sont assemblés pour former le segment conducteur,
où une première zone d'extrémité (72) du toron moulé est reliée de façon électriquement conductrice avec une première zone d'extrémité de fil plat (200, 200^{I}) du premier fil plat (180, 181, 181^{I}, 181^{II}, 181^{III}) et une seconde zone d'extrémité (74) du toron moulé est reliée de façon électriquement conductrice avec une première zone d'extrémité de fil plat (202) du second fil plat (182, 182^{I}, 182^{II}, 182^{III}), par assemblage, en particulier par soudage par faisceau, de préférence par soudage par faisceau laser.

18. Procédé selon la revendication 17,
**caractérisé en ce que**
une courbure de toron (82) est produite dans une zone centrale (76) du toron moulé (50, 50^{I}, 50^{II}, 50^{III}, 50^{IV}) et le toron (42) est comprimé en une forme de conducteur de tige (130, 132), dans des zones d'extension qui sont espacées de la courbure de toron (82).

19. Procédé selon la revendication 17 ou 18,
**caractérisé en ce que**
une couche intermédiaire de brasure (162) est introduite entre les zones d'extrémité (72, 74) du toron moulé (50, 50^{I}, 50^{II}, 50^{III}, 50^{IV}) et les premières zones d'extrémité de fil plat (200, 200^{I}, 202), laquelle brasure est fondue pendant le processus d'assemblage et humidifie le toron moulé et les zones d'extrémité de fil plat.

20. Procédé selon l'une des revendications 17 à 19,
**caractérisé en ce que**
une zone de chevauchement (204, 204^{I}, 204^{II}, 204^{III}, 204^{IV}) est comprimée à partir des premières zones d'extrémité de fil plat (200, 200^{I}, 202) assemblées et des premières zones d'extrémité (72, 74) respectives du toron moulé (50, 50^{I}, 50^{II}, 50^{III}, 50^{IV}).

21. Procédé selon la revendication 20,
**caractérisé en ce que**
une feuille de cuivre (158) conductible ou un ruban de cuivre conductible sont agencés en tant que gaine autour de la zone de chevauchement (204, 204^{I}, 204^{II}, 204^{III}, 204^{IV}).

22. Procédé selon l'une des revendications 17 à 21,
**caractérisé en ce que**
le toron moulé (50, 50', 50", 50^{III}, 50^{IV}) et les fils plats (180, 181, 181^{I}, 181^{II}, 181^{III}, 182, 182^{I}, 182^{II}, 182^{III}) sont respectivement alignés avec un angle de segment conducteur (59, , 59^{I}) qui est un angle d'environ 180° à 150°, de sorte que le segment conducteur (39, 39^{I}, 39^{II}) s'étende essentiellement de façon linéaire, à l'exception d'une éventuelle courbure de toron (82), avant d'être monté dans l'enroulement.

23. Procédé selon l'une des revendications 17 à 22,
**caractérisé en ce que**
le segment conducteur (39, 39^{I}, 39^{II}) est revêtu ou enveloppé avec une isolation, en particulier enveloppé avec un ruban isolant (166), dans lequel l'isolation s'étend uniquement jusqu'à une seconde zone d'extrémité de fil plat (206, 208) du premier et/ou du second fil plat (180, 181, 181^{I}, 181^{II}, 181^{III}, 182, 182^{I}, 182^{II}, 182^{III}).

24. Véhicule automobile (500) avec une chaîne cinématique (502, 502^{I}),
**caractérisé en ce que**
la chaîne cinématique (502, 502^{I}) présente une machine électrique (530, 530^{I}, 530^{II}, 530^{III}) avec au moins un enroulement (36) dans lequel est monté au moins un segment conducteur (39, 39^{I}, 39^{II}) selon l'une des revendications 1 à 16.
